# EUROPEAN PATENT APPLICATION

(11) **EP 4 725 662 A1**
(43) Date of publication of application: **15.04.2026**
(21) Application number: 24819702.2
(22) Date of filing: 07.06.2024

(54) **WHEELED MOVING DEVICE AND CARRIER**

(30) Priority: 09.06.2023 CN 202310687065; 04.07.2023 CN 202310818408; 28.08.2023 CN 202311097107; 05.09.2023 CN 202311142214; 01.11.2023 CN 202311438311; 29.05.2024 CN 202410683417
(71) Applicant: Jani International Pte. Ltd., Singapore 569874 (SG)
(72) Inventor: ZHU, Wanquan, Singapore 569874 (SG); CHENG, Manqun, Singapore 569874 (SG); CHEN, Yingzhong, Singapore 569874 (SG); ZHONG, Zhiren, Singapore 569874 (SG); GUO, Zhengwen, Singapore 569874 (SG)
(74) Representative: Pfenning, Meinig & Partner mbB
(86) International application number: PCT/SG2024/050387
(87) International publication number: WO 2024/253599

(57) **Abstract**

Disclosed in the present invention are a wheeled moving device and a carrier. The wheeled moving device comprises: a bearing frame; a carrier; and a snap-fit mechanism, which is configured to removably snap-fit the carrier onto the bearing frame, wherein the snap-fit mechanism comprises a snap-fit member and a clamping groove; the carrier comprises a snap-fit rod, which is received in the clamping groove; and the snap-fit member can move between a first position in which the snap-fit member extends into the clamping groove to fix the snap-fit rod into the clamping groove, and a second position in which the snap-fit member is withdrawn from the clamping groove to separate the snap-fit rod from the clamping groove. The carrier comprises: a support device, which comprises a first support and a second support, the first support comprising two short rods, two long rods and a supporting rod connected between the two long rods, and the second support comprising a first connecting rod arranged on the supporting rod; and a belt guiding mechanism, which is connected between the long rods and the first connecting rod, and configured to cooperate with a fixing belt assembly to fix the support device to a seat.

## Description

### TECHNICAL FIELD

The present disclosure relates to a wheeled movable device and a carrier.

### BACKGROUND

As people's living standards improve, more and more people begin to keep pets, such as pet dogs, pet cats, etc. During the process of keeping pets, pets may need to go to the hospital for regular examinations and treatment, or travel with their owners. In some cases, sick pets need to be transported to a pet hospital for treatment by medical staff or owners.

At present, pet owners or veterinary staff are often scratched or bitten by pets during the clinical examination or treatment of the pets. Therefore, proper transportation of pets is an issue that should be paid attention to. A stretcher is a commonly used rescue tool in medical rescue. In the emerging pet industry, a stretcher specifically for pets has also emerged, but the existing pet stretcher is generally transported manually. However, in the case of large pets or animals, manual transportation is too laborious and delays rescue time. Therefore, a mechanism for quickly transferring pets is urgently needed.

In addition, in order to better protect the pet, the existing pet transport carrier usually has a protective cover on the carrier. The protective cover is generally removably connected to the carrier through a connecting buckle, but the existing connecting buckle has a configuration that requires the user to perform threading/unthreading operations multiple times to achieve connection or removal, which is inconvenient to operate and has a poor user experience.

Existing carriers such as trolleys, safety seats, and the like are generally equipped with a seat belt assembly to keep an occupant of the carrier in a seated position and reduce the vibration amplitude of the occupants when subjected to an external force impact. The seat belt assembly usually includes a buckle and two seat belts fixed to a seat of the carrier, one of the seat belts is connected to a male buckle of the buckle, and the other of the seat belts is connected to the female buckle of the buckle. After the occupant rides in the carrier, a tongue of the male buckle is inserted into the female buckle, and the tongue is locked in the female buckle until the tongue is manually released by operating a locking mechanism of the buckle. Through this arrangement, the seat belt assembly can keep the occupant in the carrier during the occupant's ride, prevent the occupant from being separated from the carrier, and thus ensure the safety of the occupant. However, the existing buckle has a relatively complex configuration and a relatively heavy weight. Therefore, there is an urgent need for a buckle with a simple configuration and light weight.

### SUMMARY

The present disclosure provides a wheeled movable device, including: a wheel assembly including a front wheel assembly and a rear wheel assembly; a carrying frame; a frame including a front rod connected to the front wheel assembly and a rear rod connected to the rear wheel assembly, one of the front rod and the rear rod being pivotally connected to the carrying frame to form a first pivot point, the front rod and the rear rod being pivotally connected to each other to form a second pivot point, and the frame having an unfolded state and a folded state; and optionally, a first locking mechanism arranged between the frame and the carrying frame. The first locking mechanism includes a first fixing base and a second fixing base pivotally connected to each other to form a third pivot point. The first fixing base is fixed to the other of the front rod and the rear rod. The second fixing base is pivotally connected to the supporting frame to form a fourth pivot point. The first locking mechanism has a locked state and an unlocked state. When the first locking mechanism is in the locked state, the first fixing base and the second fixing base are fixed relative to each other, and the frame is capable of being locked in the unfolded state. When the first locking mechanism is in the unlocked state, the first fixing base and the second fixing base are rotatable relative to each other to allow the frame to switch between the unfolded state and the folded state.

Furthermore, the first locking mechanism further includes a first locking member, a first locking groove, a second locking groove and an unlocking member. The first locking groove is arranged on the first fixing base, and the second locking groove is arranged on the second fixing base. When the first locking mechanism is in the locked state, the first locking member is locked and cooperated with both the first locking groove and the second locking groove. The unlocking member is movably mounted on the first fixing base, and the unlocking member is capable of driving the first locking member to be disengaged from one of the first locking groove and the second locking groove, to enable the first locking mechanism to switch from the locked state to the unlocked state.

Furthermore, the first locking mechanism further includes a first elastic member. Two ends of the first elastic member respectively abut against the first locking member and the second fixing base. The first elastic member causes the first locking member to have a tendency to move toward the first locking groove. he unlocking member includes a pressing part and a pushing part connected to each other. The first fixing base is provided with a sliding groove for slidably receiving the pressing part, and provided with a limiting hole corresponding to the pushing part. The pushing part extends through the limiting hole and is in contact with the first locking member.

Furthermore, an end of the pushing part is provided with a hook configured to prevent the pressing part from being disengaged from the sliding groove.

Furthermore, the frame further includes a first transition member and a second transition member both fixed on the carrying frame. One of the front rod and the rear rod is pivotally connected to the first transition member, the other of the front rod and the rear rod is fixed to the first fixing base, and the second fixing base is pivotally connected to the second transition member.

Furthermore, the carrying frame includes two short rods and two long rods sequentially connected, and a cross support located between the two long rods. The first transition member is fixed on the long rod, and the second transition member is fixed on the cross support. Alternatively, the second transition member is fixed on the long rod, and the first transition member is fixed on the cross support.

Furthermore, the wheeled movable device further includes an engaging mechanism arranged on the carrying frame. The engaging mechanism is configured to removably engage the carrier on the carrying frame. The engaging mechanism has an engagement state and a release state. When the engaging mechanism is in the engagement state, the carrier is locked with the engaging mechanism, and when the engaging mechanism is in the release state, the carrier is capable of being separated from the engaging mechanism.

Furthermore, the carrying frame includes two short rods and two long rods sequentially connected. Two engaging mechanisms are respectively arranged on the two opposite short rods.

Furthermore, the engaging mechanism includes a housing and an engaging member movably arranged on the housing. The housing is provided with an engaging groove. The carrier includes an engaging rod received in the engaging groove, and the engaging member is moveable between a first position where the engaging member extends into the engaging groove to secure the engaging rod in the engaging groove, and a second position where the engaging member retracts from the engaging groove to allow the engaging rod to be separated from the engaging groove.

Furthermore, the housing includes an upper housing and a lower housing. The upper housing and the lower housing jointly define an accommodating space in which the engaging member is slidable. The engaging groove is arranged on the lower housing. A through hole in communication with the accommodating space and the engaging groove is formed between the upper housing and the lower housing. The lower housing is further provided with an operating groove in communication with the accommodating space. The engaging member includes an engaging tongue and an operating part connected to each other. The engaging tongue can extend through the through hole. The operating part is movable in the operating groove, thereby driving the engaging tongue to move between the first position where the engaging tongue extends into the engaging groove, and the second position where the engaging tongue retracts from the engaging groove.

Furthermore, the engaging mechanism further includes a second elastic member. Two ends of the second elastic member respectively abut against the lower housing and the operating part. The second elastic member causes the engaging tongue to have a tendency to move toward the engaging groove.

Furthermore, the frame further includes a pivot base, and the front rod and the rear rod are pivotally connected to each other via the pivot base. And/or, the frame includes two front rods and two rear rods, the two front rods are arranged on the outer side of the two rear rods, and the first locking mechanism is arranged on the front rod.

Furthermore, the pivot base includes a first base body and a second base body that are rotatable relative to each other. Each of the first base body and the second base body is provided with an engaging groove. The front rod and the rear rod are engaged and fixed in respective engaging grooves of the first base body and the second base body.

Furthermore, the wheel assembly includes: an adapting base connected to the front rod or the rear rod; a universal shaft fixed to the adapting base, the universal shaft being provided with a toothed plate; a wheel seat pivotally connected to the universal shaft; a caster pivotally connected to the wheel seat; and a brake assembly configured to restrict a rotation of the wheel seat relative to the adapting base and to restrict a rotation of the caster relative to the wheel seat. The brake assembly includes a pedal and a brake elastic piece pivotally connected to the wheel seat. The brake elastic piece includes an engaging tooth and a brake portion. The pedal is configured to drive the engaging tooth to be engaged with the toothed plate to restrict the rotation of the wheel seat relative to the adapting base, and /or the pedal is configured to drive the brake portion to abut against the caster to restrict the rotation of the caster relative to the wheel seat.

Furthermore, the brake elastic piece further includes a reset elastic piece. The reset elastic piece is configured to drive the engaging tooth to be disengaged from the toothed plate, and/or the reset elastic piece is configured to drive the brake portion to be separated from the caster.

Furthermore, the brake portion is provided with a protrusion that is engaged with a texture of the caster.

Furthermore, the wheeled movable device further includes a carrier. The carrier includes: a support frame arrangement; and at least one strap guiding mechanism arranged on the support frame arrangement and configured to cooperate with a fixing strap assembly to secure the support frame arrangement on a vehicle seat.

Furthermore, the support frame arrangement includes a first support frame, a second support frame, and a support plate located between the first support frame and the second support frame. The strap guiding mechanism is arranged on the second support frame and/or the support plate.

Furthermore, the strap guiding mechanism includes a base housing and a cover housing connected to the base housing. The base housing and the cover housing jointly define a passage. The passage has a first port and a second port, and the fixing strap assembly extends through the first port and the second port.

Furthermore, the passage also has a lateral introduction port in communication with the first port and the second port. The lateral introduction port has a guide slope.

Furthermore, a first convex rib and a second convex rib are arranged on side walls of the passage opposite to each other. The first convex rib and the second convex rib are alternately arranged in an extending direction of the fixing strap assembly.

Furthermore, the base housing is fixed on the support plate, and the cover housing is fixed to the second support frame.

Furthermore, two opposite fixing pieces are arranged on the second support frame, the carrier includes two strap guiding mechanisms, and the cover housing of each strap guiding mechanism is fixed to one of the fixing pieces.

Furthermore, the strap guiding mechanism further includes a positioning base extending through the support plate, and the base housing is fixed to the positioning base.

The present disclosure further provides a wheeled movable device, including: a carrying frame; a carrier removably mounted on the carrying frame; and an engaging mechanism configured to removably engage the carrier on the carrying frame. The engaging mechanism has an engagement state and a release state. When the engaging mechanism is in the engagement state, the carrier is locked with the engaging mechanism, and when the engaging mechanism is in the release state, the carrier is capable of being separated from the engaging mechanism. The engaging mechanism includes an engaging member and an engaging groove. The carrier includes an engaging rod received in the engaging groove. The engaging member is movable between a first position where the engaging member extends into the engaging groove to secure the engaging rod in the engaging groove, and a second position where the engaging member retracts from the engaging groove to allow the engaging rod to be separated from the engaging groove.

Furthermore, the engaging member includes an engaging tongue and an operating part connected to each other. The operating part is operable to drive the engaging tongue to move between the first position where the engaging tongue extends into the engaging groove, and the second position where the engaging tongue retracts from the engaging groove. An end of the engaging tongue has a guide slope in contact with the engagement rod.

Furthermore, the carrier includes a strap guiding mechanism arranged on the engaging rod. The engaging mechanism is further provided with a limiting notch in communication with the engaging groove. The strap guiding mechanism is positioned within the limiting notch.

Furthermore, the engaging rod is movable between a third position close to the engaging tongue and a fourth position away from the engaging tongue, in the engaging groove. When the engaging rod is at the third position, the engaging member fixes the engaging rod in the engaging groove. When the engaging rod is at the fourth position, the engaging rod is separated from the engaging member. When the engaging member is at the first position, a distance between the engaging tongue and a side wall of the engaging groove is greater than a width of the engaging rod.

The present disclosure further provides a carrier, including: a support frame arrangement including a first support frame, a second support frame, and a support plate located between the first support frame and the second support frame; and a carrying fabric covering the support plate.

Furthermore, the carrying fabric includes a main body and at least one handle arranged at an edge of the main body.

Furthermore, each of two opposite long sides of the main body is provided with two handles.

Furthermore, the carrying fabric further includes two fixing portions respectively located at two ends of the main body. Each fixing portion is sleeved on an end of the support plate.

Furthermore, the carrier includes a restraining device. The restraining device includes a plurality of restraint straps spaced apart. Two ends of each restraint strap respectively extend through buckles arranged on the support plate or the carrying fabric to adjust the length of the restraint strap.

Furthermore, the carrier further includes a base fabric covering the support plate, and the buckle is arranged on the base fabric.

Furthermore, the buckle includes a locking ring. The locking ring includes a double ring.

The present disclosure further provides a carrier, including: a support frame arrangement; a base fabric arranged on the support frame arrangement; a mesh fabric arranged on the base fabric, a receiving space being formed between the base fabric and the mesh fabric; and a buckle assembly including a buckle body and a locking member. The buckle body has a passage. The locking member is switchable between a first position where the locking member closes the passage and a second position where the locking member open the passage, such that any two of the base fabric, the mesh fabric and the support frame arrangement can be removably connected to each other by the buckle assembly.

Furthermore, the base fabric includes a first connecting strap, the mesh fabric includes a second connecting strap, and the buckle assembly includes a first buckle assembly arranged between the first connecting strap and the second connecting strap.

Furthermore, the buckle body of the first buckle assembly is provided with a first connecting hole and a second connecting hole. An end of the first connecting strap is provided with a first loop. An end of the second connecting strap is provided with a second loop. One of the first loop and the second loop extends through the first connecting hole and is fixedly connected to the buckle body, and the other of the first loop and the second loop can extend through the passage to enter the second connecting hole.

Furthermore, the buckle body is provided with a first connecting hole and a second connecting hole. The buckle body further includes a support rod located between the first connecting hole and the second connecting hole. The locking member is slidably arranged on the support rod to move between the first position and the second position.

Furthermore, an accommodating groove through which the support rod extends is provided in the locking member, and the buckle assembly further includes an elastic member located in the accommodating groove. The elastic member is configured to drive the locking member to move toward the first position.

Furthermore, the support rod is provided with a stopper. An end of the elastic member abuts against the stopper, and another end of the elastic member abuts against an inner wall of the accommodating groove.

Furthermore, an operating part protruding outwardly is arranged at an end of the locking member away from the passage.

Furthermore, the locking member includes a first pivot portion, a second pivot portion, a first force-applying portion, a second force-applying portion and a blocking portion. The first pivot portion and the second pivot portion are respectively pivotally connected to the buckle body. The first force-applying portion and the second force-applying portion are respectively connected to the first pivot portion and the second pivot portion. The blocking portion is located between the first force-applying portion and the second force-applying portion, and movable between the first position and the second position.

Furthermore, an axis of the first pivot portion and an axis of the second pivot portion are staggered from each other, and the locking member is made of an elastically deformable material. And/or, an edge of the buckle body close to the passage is provided with a limiting protrusion protruding toward the second connecting hole, and the blocking portion is engaged with the limiting protrusion when at the first position.

Furthermore, the base fabric includes a fixing strap, the support frame arrangement is provided with a positioning piece, and the buckle assembly includes a second buckle assembly arranged between the positioning piece and the fixing strap. And/or, the mesh fabric includes a second connecting strap, the support frame arrangement is provided with a third connecting strap, and the buckle assembly includes a third buckle assembly arranged between the second connecting strap and the third connecting strap.

Furthermore, the support frame arrangement includes a first support frame, a second support frame, and a support plate located between the first support frame and the second support frame. The positioning piece is arranged on the support plate. A buckle body of the second buckle assembly is provided with a first connecting hole and a second connecting hole. An end of the fixing strap is provided with a third loop, and an end of the positioning piece is provided with a fourth loop. One of the third loop and the fourth loop extends through the first connecting hole and is fixedly connected to the buckle body, and the other of the third loop and the fourth loop can extend through the passage to enter the second connecting hole.

Furthermore, the base fabric further includes a first connecting strap, the mesh fabric includes a second connecting strap, and the buckle assembly further includes a first buckle assembly arranged between the first connecting strap and the second connecting strap.

Furthermore, the base fabric includes a main body. The fixing strap is located at an edge of the main body. An end of the fixing strap is connected to the second buckle assembly, and the first connecting strap is arranged at another end of the fixing strap.

Furthermore, the first connecting strap is integrally formed with the fixing strap, or the first connecting strap is fixed to a position of the main body corresponding to the fixing strap, and extends in a direction opposite to an extending direction of the fixing strap.

Furthermore, an end of the second connecting strap is provided with a second loop that extends through the first connecting hole and is fixedly connected to the buckle body. An end of the first connecting strap is provided with a first loop that extends through the passage to enter the second connecting hole. The first loop is removably connected to the base fabric by Velcro.

Furthermore, the mesh fabric includes a second connecting strap, the support frame arrangement is provided with a third connecting strap, and the buckle assembly includes a third buckle assembly arranged between the second connecting strap and the third connecting strap.

Furthermore, the support frame arrangement includes a first support frame, a second support frame, and a support plate located between the first support frame and the second support frame. The third connecting strap is arranged on the support plate. The third connecting strap is removably connected to the base fabric by Velcro.

The present disclosure further provides a carrier, including: a support frame arrangement; a base fabric arranged on the support frame arrangement; a mesh fabric arranged on the base fabric, a receiving space being formed between the base fabric and the mesh fabric; and a first buckle assembly including a male buckle and a female buckle. One of the male buckle and the female buckle is connected to the base fabric via a first connecting strap, and the other of the male buckle and the female buckle is connected to the mesh fabric via a second connecting strap. The male buckle is removably inserted into the female buckle.

The present disclosure further provides a wheeled movable device, including: a wheel assembly including a front wheel assembly and a rear wheel assembly; a frame including a front support frame connected to the front wheel assembly and a rear support frame connected to the rear wheel assembly, the front support frame and the rear support frame being pivotally connected to each other such that the frame is switchable between an unfolded state and a folded state, and the frame being provided with an engaging groove; and a carrier provided with a second locking mechanism. The second locking mechanism includes a second locking member. The second locking member is movable on the carrier and has a locked position and an unlocked position. When the carrier is mounted on the frame and the second locking member is at the locked position, the second locking member extends into the engaging groove to lock the carrier with the frame. When the second locking member is at the unlocked position, the second locking member retracts from the engaging groove to release locking between the carrier and the frame.

Furthermore, the carrier includes a support frame arrangement. The support frame arrangement includes a first support frame. The first support frame includes two short rods and two long rods sequentially connected, and a support rod connected between the two long rods. The second locking mechanism is arranged on the support rod. And/or, when the frame is in the unfolded state, the carrier is removably connected to the frame to limit the frame from switching toward the folded state, an upper end of the front support frame and an upper end of the rear support frame are away from each other, and a lower end of the front support frame and a lower end of the rear support frame are away from each other. When the frame is in the folded state, the carrier is separated from the frame, the upper end of the front support frame and the upper end of the rear support frame approach each other, and the lower end of the front support frame and the lower end of the rear support frame approach each other.

Furthermore, the second locking mechanism further includes a driving member operably connected to the second locking member. The driving member is movable on the carrier and has a first position and a second position. When the driving member is at the first position, the second locking member is at the locked position, and when the driving member is at the second position, the second locking member is at the unlocked position.

Furthermore, the second locking mechanism further includes a first guide post fixed to the second locking member, and the driving member is provided with a first guide groove. The first guide groove extends obliquely relative to a moving direction of the driving member, and the first guide post is slidable in the first guide groove. When the driving member is switched between the first position and the second position, the second locking member is switchable between the locked position and the unlocked position through a cooperation between the first guide post and the first guide groove.

Furthermore, the second locking mechanism further includes an elastic reset member. The elastic reset member abuts against the driving member and is configured to keep the driving member in the first position.

Furthermore, the support rod has an accommodating space in which the driving member moves. The support rod is further provided with a telescopic hole group through which the second locking member extends through. The telescopic hole group is in communication with the accommodating space.

Furthermore, the support rod includes a rod body and a mounting cover, a cavity is formed in the rod body, and a placement opening in communication with the cavity is arranged on a rod wall of the rod body. The mounting cover includes a top cover and a limiting member connected to a side of the top cover. The receiving space is arranged inside the limiting member. The top cover is arranged at the placement opening, and the limiting member is accommodated in the cavity. The telescopic hole group includes a first telescopic hole and a second telescopic hole that are correspondingly arranged. The first telescopic hole is arranged on the rod body and in communication with the cavity, and the second telescopic hole is arranged on the limiting member and in communication with the accommodating space.

Furthermore, the frame includes at least one support base, each support base is provided with a support groove, and the engaging groove is arranged on the support base and is in communication with the support groove. When the carrier is mounted on the frame, the support rod is engaged in the support groove. When the second locking member is at the locked position, the second locking member extends into the engaging groove, and when the second locking member is at the unlocked position, the second locking member retracts from the engaging groove.

Furthermore, two support rod are provided. The two support rods are spaced apart in a length direction of the long rod. Each of the support rods is provided with at least one second locking mechanism. At least two support bases are respectively arranged on the front support frame and the rear support frame. One of the support rods can be locked to the support base on the front support frame by the at least one second locking mechanism, and the other of the support rods can be locked to the support base on the rear support frame by the at least one second locking mechanism.

Furthermore, the support base includes a connecting section, a supporting section and a limiting section sequentially connected and arranged at an included angle. The connecting section, the supporting section and the limiting section form a supporting groove. The connecting section is fixed on the frame, and the engaging groove is arranged on a side of the limiting section facing the supporting groove.

Furthermore, the wheeled movable device further includes an unlocking assembly arranged on the carrier. The unlocking assembly is configured to drive the second locking member to move from the locked position toward the unlocked position.

Furthermore, the unlocking assembly includes an unlocking member slidably mounted to the carrier. The unlocking member is connected to the driving member via a traction member.

Furthermore, the unlocking member has a second guide groove. The second guide groove extends obliquely relative to a sliding direction of the unlocking member. The unlocking assembly further includes a second guide post. The second guide post is arranged in the second guide groove and slidable along the second guide groove. The second guide post is connected to the driving member by the traction member.

Furthermore, an inner cavity is formed in the carrier, and an operation hole in communication with the inner cavity is arranged on a side wall of the carrier. The unlocking member extends through the operation hole and extends into the inner cavity and is slidable relative to the operation hole. The unlocking assembly further includes a first fixing cover and a second fixed cover. The first fixing cover and the second fixing cover cooperate with each other and are fixed to the carrier, and the first fixing cover and the second fixing cover are provided with a limiting portion extending into the inner cavity on each of opposite sides thereof. A limiting slide groove is arranged on the limiting portion. Two ends of the second guide post are slidably limited in the respective limiting slide grooves. The extending direction of the limiting slide groove is perpendicular to a sliding direction of the unlocking member.

Furthermore, the carrier includes: a support frame arrangement, and at least one strap guiding mechanism. The strap guiding mechanism is arranged on the support frame arrangement and has a through-passage through which the fixing strap assembly extends.

Furthermore, the support frame arrangement includes a first support frame and a second support frame. The first support frame includes two short rods and two long rods sequentially connected, and a support rod connected between the two long rods. The second support frame includes two first connecting rods and a second connecting rod connected between the two first connecting rods. The two first connecting rods are arranged on the support rod and space apart in a length direction of the support rod. Two strap guiding mechanisms are respectively arranged at two ends of the support rod. Each of the two strap guiding mechanisms is connected between the corresponding first connecting rod and the corresponding long rod.

Furthermore, the strap guiding mechanism includes a clamp body and a cover plate. The clamp body includes an upper housing and a lower housing connected to the upper housing. The upper housing and the lower housing jointly define the through-passage. The upper housing cooperates with the cover plate and is fixed to the first connecting rod, and the lower housing is fixed to the long rod.

Furthermore, the through-passage has a first port, a second port and a lateral introduction port in communication with the first port and the second port. The fixing strap assembly extends through the first port and the second port. A first convex rib and a second convex rib are respectively arranged on side walls of the through-passage opposite to each other. The first convex rib and the second convex rib are alternately arranged in an extending direction of the through-passage.

Furthermore, the wheeled movable device further includes a linkage mechanism. The linkage mechanism is pivotally connected between the front support frame and the rear support frame. The linkage mechanism has an extended state and a retracted state. When the linkage mechanism is switched between the extended state and the retraced state, the frame moves with movement of the linkage mechanism to switch between the unfolded state and the folded state. The linkage mechanism includes a rotating member and a linkage member pivotally connected to each other; one of a first end of the rotating member and a first end of the linkage member is pivotally connected to the front support frame, and the other of the first end of the rotating member and the first end of the linkage member is pivotally connected to the rear support frame.

Furthermore, the linkage mechanism includes two rotating members, two linkage members and an operating handle respectively connected to second ends of the two rotating members. Each linkage member is pivotally connected between a first end and a second end of one of the rotating members, and the operating handle is configured to drive the two rotating members to rotate synchronously.

Furthermore, the wheeled movable device further includes a covering. The covering is covered on the carrier.

The present disclosure further provides a carrier, including: a support frame arrangement including a first support frame and a second support frame connected to each other, the first support frame including two short rods and two long rods sequentially connected and a support rod connected between the two long rods, the second support frame including a first connecting rod arranged on the support rod; and at least one strap guiding mechanism connected between the long rods and the first connecting rod. The strap guiding mechanism is configured to cooperate with a fixing strap assembly to secure the support frame arrangement to a seat.

Furthermore, two first connecting rods are provided. The two first connecting rods are arranged on the support rod and spaced apart in a length direction of the support rod. The second support frame further includes a second connecting rod. The second connecting rod is connected between the two first connecting rods. And/or, the two strap guiding mechanisms are respectively arranged at two ends of the support rod. Each of the two strap guiding mechanisms is connected between the corresponding first connecting rod and the corresponding long rod.

Furthermore, the fixing strap assembly includes a restraint strap assembly. The restraint strap assembly includes at least one restraint strap. The strap guiding mechanism includes a clamp body. The clamp body includes an upper housing and a lower housing connected to the upper housing. The upper housing and the lower housing jointly define a through-passage. The through-passage has a first port and a second port, and the fixing strap assembly extends through the first port and the second port. The upper housing is fixed to the first connecting rod, and the lower housing is fixed to the long rod.

Furthermore, in two strap guiding mechanisms arranged at two ends of the support rod, when the restraint strap extends through one of the two strap guiding mechanisms away from a backrest of the seat, an end of the restraint strap extends through the first port and extends around an outer side of the first support frame, and another end of the restraint strap extends through the second port and extends out below the second support frame and the support rod.

Furthermore, when the restraint strap extends through the two strap guiding mechanisms arranged at the two ends of the support rod, the restraint strap extends between the second support frame and a carrying portion of a covering and extends in a guiding direction of the second connecting rod, and two ends of the restraint strap respectively extend through the two strap guiding mechanisms, respectively, and extend from the outer side of the first support frame.

The present disclosure further provides a buckle, including: a male buckle including a tongue with a locking hole; and a female buckle adapted to receive and releasably locking the tongue of the male buckle. The female buckle includes: a female buckle housing, an end of the female buckle housing having an insertion port into which the tongue can be inserted; and a locking member arranged in the female buckle housing. The locking member has a locking protrusion. The locking protrusion is adapted to protrude into the locking hole to enable the locking member to be engaged with the tongue. The female buckle housing includes a housing body and a cover plate connected to each other. The female buckle further includes a reinforcing fixing member. The reinforcing fixing member is received between the housing body and the cover plate and is kept fixed relative to the housing body. A tongue receiving cavity configure to receive the tongue is formed between a bottom surface of the reinforcing fixing member and a lower portion of the housing body.

Furthermore, the female buckle housing includes a housing body and a cover plate connected to each other. A housing end wall of the housing body and a cover plate end wall of the cover plate define the socket.

Furthermore, the locking member is configured to releasably retain the tongue in the tongue receiving cavity.

Furthermore, the male buckle further includes a male buckle connecting portion. The male buckle connecting portion is provided with a male buckle strap hole configured to be connected to a first webbing. The female buckle further includes a female buckle connecting portion. The female buckle connecting portion is provided with a female buckle strap hole configured to be connected to a second webbing.

Furthermore, the female buckle housing includes a housing body and a cover plate connected to each other. The cover plate includes a cover plate extension. The cover plate extension is provided with a cover plate strap hole. The housing body includes a housing body extension. The housing body extension is provided with a housing body strap hole. The cover plate strap hole and the housing body strap hole cooperate with each other to form the female buckle strap hole.

Furthermore, the female buckle further includes a reinforcing fixing member. The reinforcing fixing member is received in the female buckle housing. A reinforcing fixing member strap hole is provided on the reinforcing fixing member at a position corresponding to the female buckle strap hole. A shape and a size of the reinforcing fixing member strap hole match a shape and a size of the female buckle strap hole.

Furthermore, an end of the reinforcing fixing member adjacent to the socket is bent and extends toward the bottom wall of the housing body to form a first vertical portion. The first vertical portion abuts against a peripheral wall of the housing body, and is provided with a first limiting opening through which the tongue is adapted to extend. A middle part of the reinforcing fixing member includes a second vertical portion extending toward a bottom wall of the housing body and being parallel to the first vertical portion. The second vertical portion includes a second limiting opening through which the tongue is adapted to extend.

Furthermore, the female buckle further includes an elastic reset member. The elastic reset member is adapted to bias the locking member such that a locking protrusion of the locking member protrudes into a locking hole of the tongue.

Furthermore, the housing body includes two vertical walls extending vertically upward from a bottom wall of the housing body. Each of the vertical walls has a groove structure, and the groove structure of one of the vertical walls faces the groove structure of the other of the vertical walls. The female buckle further includes two guide members. The two guide members are mounted in the two groove structures. The locking member has two arms extending outwardly. The two arms can be slidably received in the two guide members respectively.

Furthermore, each of the two guide members has a C-shaped cross section, and each of the two guide members has a sliding passage in which the arm is received and allowed to slide.

Furthermore, the reinforcing fixing member is provided with two rectangular holes, and the two guide members extend through the two rectangular holes respectively.

Furthermore, an end of the locking protrusion close to the socket has a driving slope to allow the tongue to be inserted into the tongue receiving cavity and pass over the locking protrusion.

Furthermore, the locking protrusion has a first position and a second position. When the locking protrusion is at the first position, the locking protrusion protrudes into the tongue receiving cavity, and the locking member is adapted to be engaged with the tongue. When the locking protrusion is at the second position, the locking protrusion retracts from the tongue receiving cavity to allow the tongue to be inserted.

Furthermore, the female buckle further includes an unlocking member. A portion of the unlocking member is exposed from an outer surface of the cover plate for operation. The unlocking member is operable to disengage the locking protrusion of the locking member from the tongue. The unlocking member includes an unlocking member body and at least one push rod. The unlocking member body is located between the cover plate and the reinforcing fixing member. The at least one push rod extends through the reinforcing fixing member and abuts against the locking member. The at least one push rod is adapted to push the locking member to be disengaged from the locking hole when the unlocking member is operated.

Furthermore, the cover plate is connected to the housing body through a plurality of fasteners. The plurality of fasteners extend through the reinforcing fixing member to secure the reinforcing fixing member between the cover plate and the housing body.

Furthermore, one of the male buckle and the female buckle includes an anti-misalignment protrusion, and another of the male buckle and the female buckle includes an anti-misalignment notch. The anti-misalignment protrusion is adapted to enter or extend through the anti-misalignment notch, to limit an orientation of the tongue of the male buckle when it is inserted into the female buckle.

Furthermore, the anti-misalignment protrusion is located on a first surface of the tongue, and the anti-misalignment notch is located on a first side of the female buckle housing and is adjacent to an upper edge of the socket. When the tongue is inserted into the socket with the first surface of the tongue facing the first side of the female buckle housing, the anti-misalignment protrusion enters or extends through the anti-misalignment notch to allow the tongue to be further inserted into the socket. When the tongue is inserted into the socket with a second surface of the tongue opposite to the first surface facing the first side of the female buckle housing, a housing end wall of the housing body abuts against the anti-misalignment protrusion to prevent the tongue from being further inserted into the socket.

Furthermore, the female buckle housing includes a housing body and a cover plate connected to each other. The first side of the female buckle housing is the cover plate side, or the housing body side.

The present disclosure further provides a carrier, including: a first webbing; a second webbing; and the above-described buckle. The first webbing is connected to a male buckle of the buckle, and the second webbing is connected to a female buckle of the buckle.

### BRIEF DESCRIPTION OF THE DRAWINGS

In order to more clearly illustrate the embodiments of the present disclosure or the technical solutions in the prior art, the drawings required for use in the embodiments or the description of the prior art will be briefly introduced below. Apparently, the drawings described below are only for some embodiments of the present disclosure. For those of ordinary skill in the art, drawings of other embodiments can be obtained based on these drawings without creative effort.
FIG. 1 is a perspective view of a wheeled movable device according to an embodiment, FIG. 2 is a front view of the wheeled movable device shown in FIG. 1, and FIG. 3 is a left view of the wheeled movable device shown in FIG. 1.
FIG. 4 is an exploded perspective view of a first locking mechanism according to an embodiment, FIG. 5 is an exploded perspective view of the first locking mechanism shown in FIG. 4 from another perspective, FIG. 6 is a sectional view of the first locking mechanism shown in FIG. 4 in a locked state, and FIG. 7 is a sectional view of the first locking mechanism shown in FIG. 4 in an unlocked state.
FIG. 8 is a front view of the wheeled movable device shown in FIG. 2 when the wheeled movable device is being folded, and d, FIG. 9 is a front view of the wheeled movable device shown in FIG. 2 after the wheeled movable device have been folded.
FIG. 10 is a top view of a carrier according to an embodiment, FIG. 11 is a bottom view of the carrier shown in FIG. 10, FIG. 12 is an enlarged sectional view taken along a line U1-U1 in FIG. 11, FIG. 13 is an enlarged sectional view taken along a line U2-U2 in FIG. 11, and FIG. 14 is an enlarged sectional view taken along a line U3-U3 in FIG. 10.
FIG. 15 is a partial enlarged view of a strap guiding mechanism shown in FIG. 10, with a cover housing omitted, and FIG. 16 is a partial enlarged view of the strap guiding mechanism shown in FIG. 10 from another perspective.

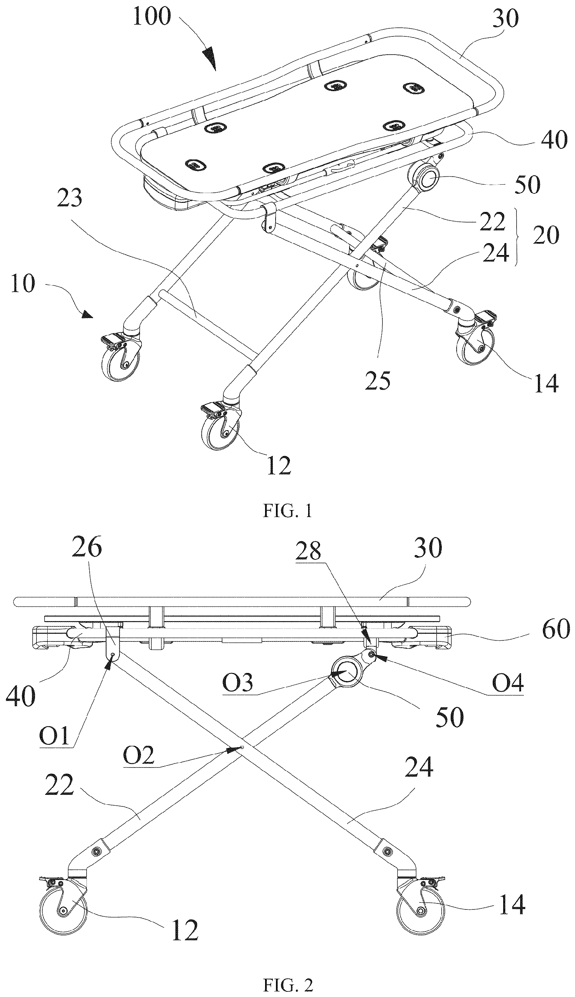

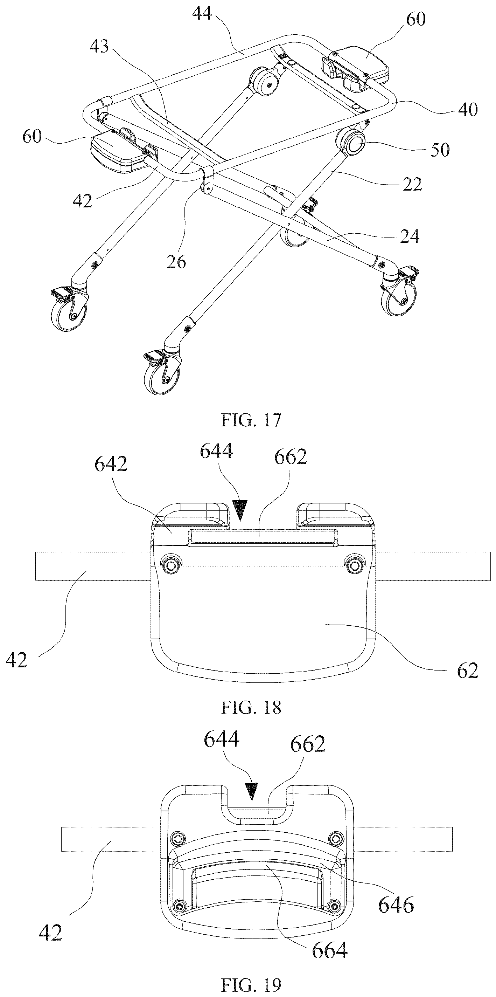

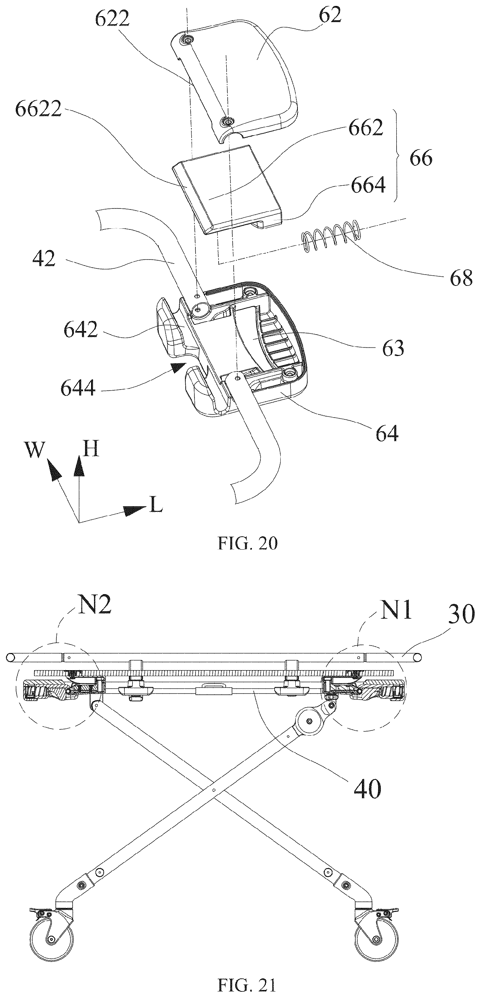

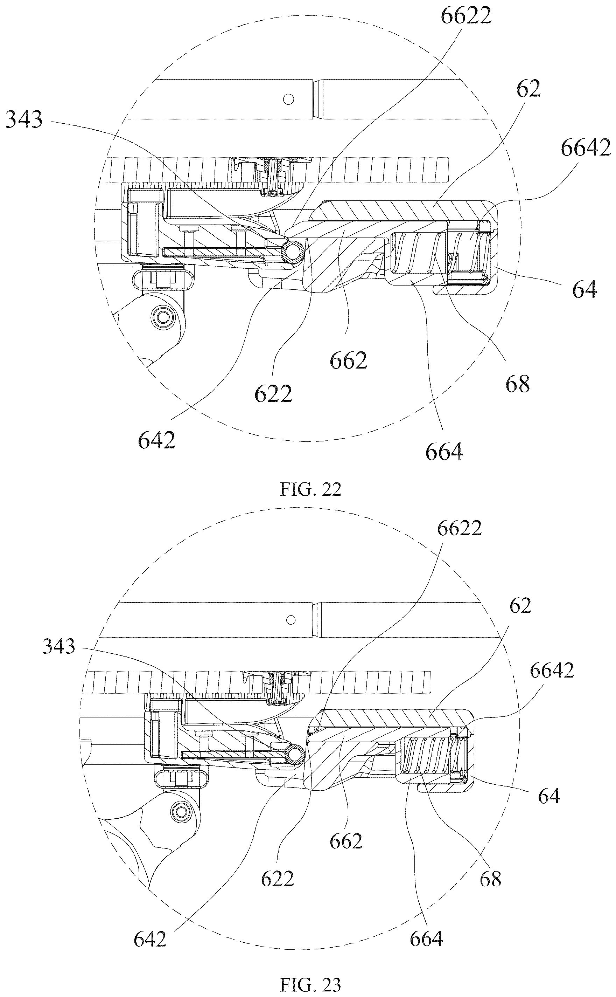

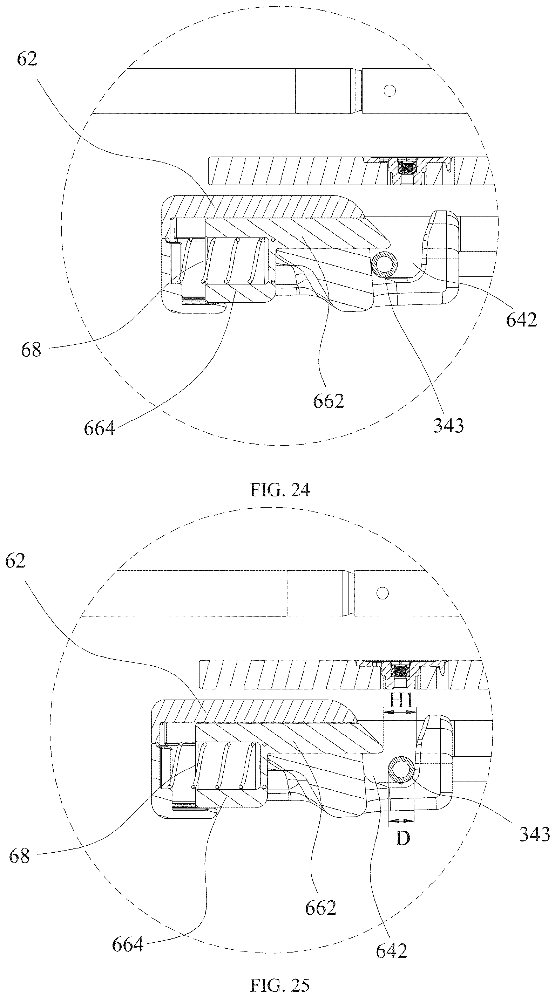

FIG. 17 is a perspective view of the wheeled movable device shown in FIG. 1 wit the carrier removed, FIG. 18 is a top view of an engaging mechanism shown in FIG. 17, FIG. 19 is a bottom view of the engaging mechanism shown in FIG. 17, FIG. 20 is an exploded perspective view of the engaging mechanism shown in FIG. 17, FIG. 21 is a sectional view of the wheeled movable device shown in FIG. 17, FIG. 22 is an enlarged view of a portion N1 in FIG. 21, with the engaging mechanism in an engagement state, FIG. 23 is an enlarged view of the portion N1 in FIG. 21, with the engaging mechanism in a release state, FIG. 24 is an enlarged view of a portion N2 in FIG. 21, with an engaging rod at a third position, and FIG. 25 is an enlarged view of the portion N2 in FIG. 21, with the engaging rod at a fourth position.

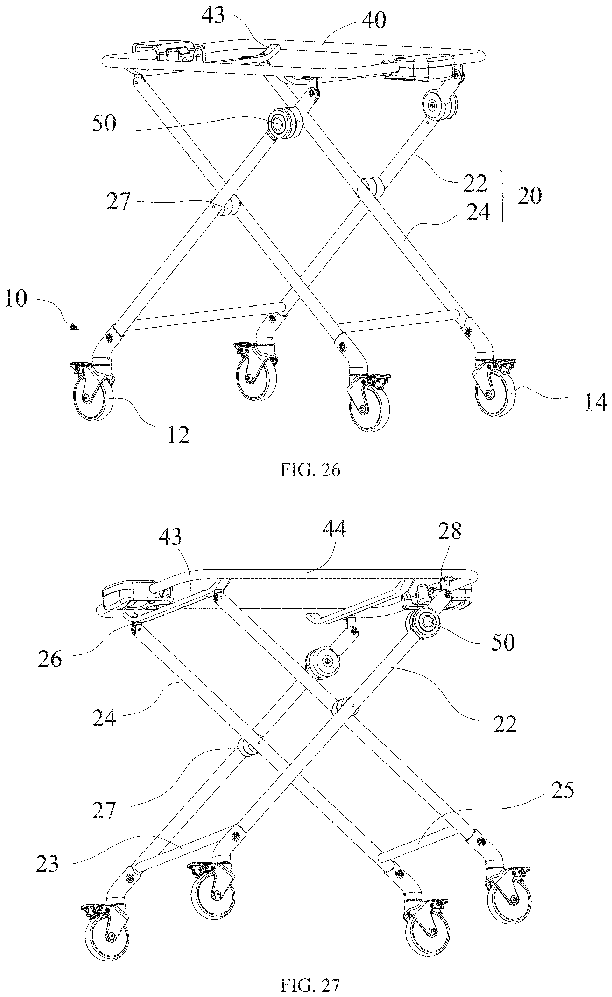

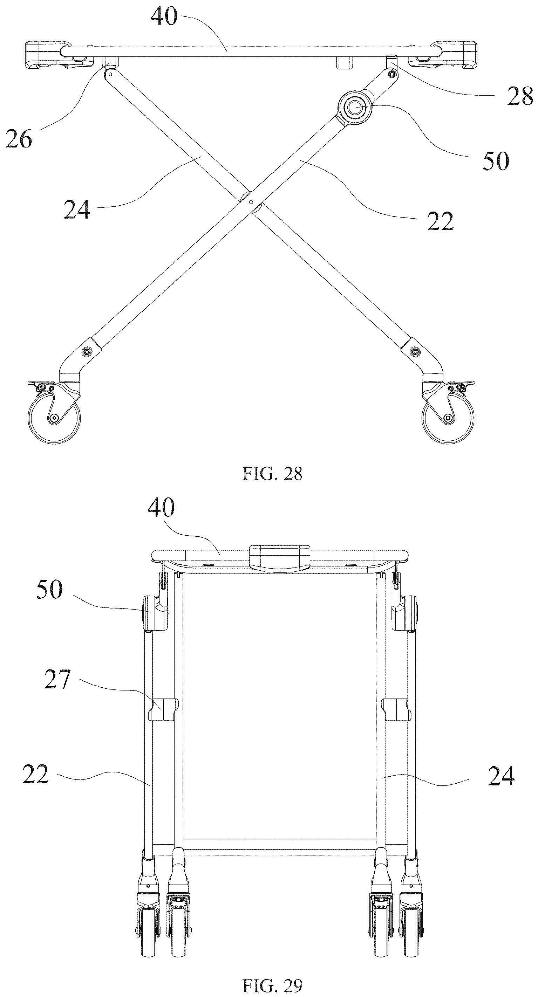

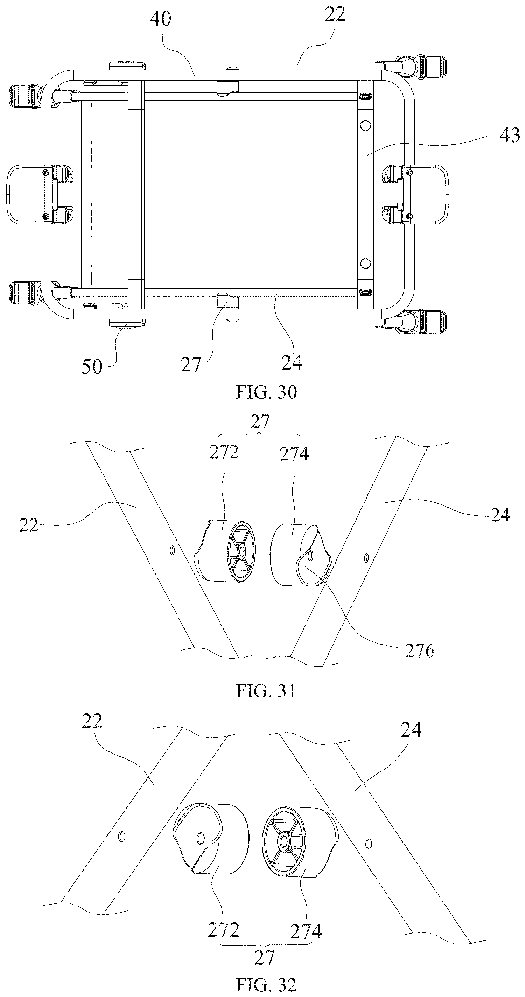

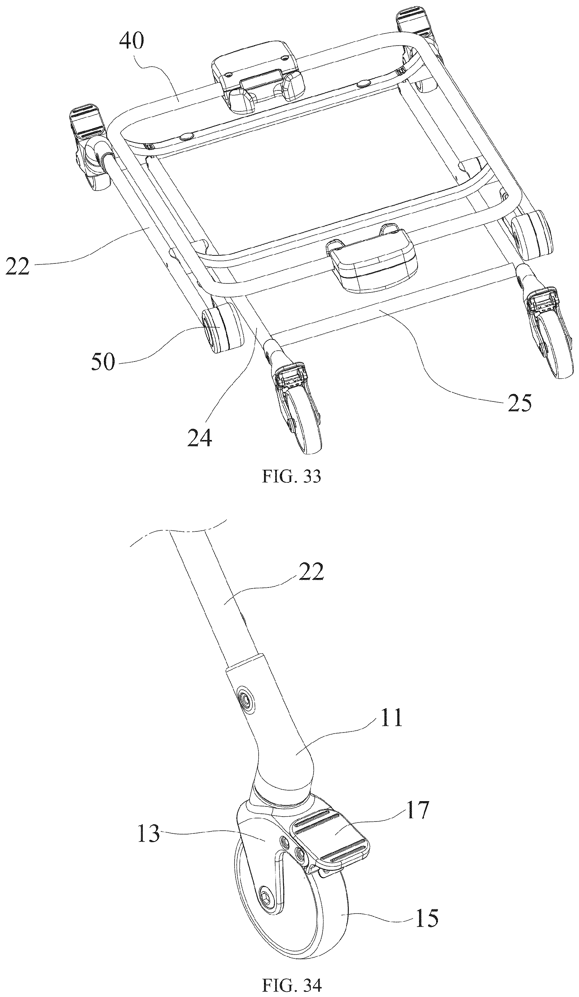

FIG. 26 is a perspective view of a wheeled movable device according to another embodiment, FIG. 27 is a perspective view of the wheeled movable device shown in FIG. 26 from another perspective, FIG. 28 is a front view of the wheeled movable device shown in FIG. 26, FIG. 29 is a left view of the wheeled movable device shown in FIG. 26, FIG. 30 is a top view of the wheeled movable device shown in FIG. 26, FIG. 31 is a partially enlarged exploded view of the wheeled movable device shown in FIG. 26, FIG. 32 is a partially enlarged exploded view of the wheeled movable device shown in FIG. 26 from another perspective, and FIG. 33 is a perspective view of the wheeled movable device shown in FIG. 26 after the wheeled movable device has been folded.
FIG. 34 is a perspective view of a wheel assembly in a free rotation state according to an embodiment, FIG. 35 is a front view of the wheel assembly shown in FIG. 34, FIG. 36 is a sectional view of the wheel assembly shown in FIG. 34, FIG. 37 is an exploded perspective view of the wheel assembly shown in FIG. 34, FIG. 38 is a perspective enlarged view of a brake elastic piece in FIG. 37, and FIG. 39 is a perspective enlarged view of the brake elastic piece in FIG. 37 from another perspective.
FIG. 40 is a perspective view of a wheel assembly in a braking state according to an embodiment, FIG. 41 is a front view of the wheel assembly shown in FIG. 40, FIG. 42 is a sectional view of the wheel assembly shown in FIG. 40, and FIG. 43 is a schematic view showing a brake elastic piece meshing with a toothed plate.
FIG. 44 is a perspective view of a carrier according to another embodiment, and FIG. 45 is a schematic view of the carrying fabric in FIG. 44.
FIG. 46 is a schematic view of a carrying fabric according to another embodiment.
FIG. 47 is a perspective view of a carrier according to another embodiment, and FIG. 48 is a perspective view of the carrier shown in FIG. 47 from another perspective.
FIG. 49 is a perspective view of a carrier mounted on a trolley according to an embodiment.
FIG. 50 is a perspective view of a carrier according to an embodiment, FIG. 51 is a perspective view of the carrier shown in FIG. 50, with a mesh fabric removed, FIG. 52 is a bottom view of the carrier shown in FIG. 51, FIG. 53 is a schematic view of a base fabric separated from a support plate, FIG. 54 is a partial enlarged view of the base fabric connected to the support plate, FIG. 55 is a partial enlarged view of the carrier shown in FIG. 52, and FIG. 56 is a front view of the mesh fabric shown in FIG. 50.
FIG. 57 is a front view of a buckle assembly according to an embodiment, FIG. 58 is a perspective view of the buckle assembly shown in FIG. 57, FIG. 59 is an exploded perspective view of the buckle assembly shown in FIG. 58, FIG. 60 is a sectional view of the buckle assembly shown in FIG. 58 in a state, and FIG. 61 is a sectional view of the buckle assembly shown in FIG. 58 in another state.
FIG. 62 is a bottom view of a carrier according to another embodiment, and FIG. 63 is a front view of a mesh fabric according to another embodiment.
FIG. 64 is a front view of a buckle assembly according to another embodiment, and FIG. 65 is a perspective view of the buckle assembly shown in FIG. 64.
FIG. 66 is a front view of a buckle assembly according to another embodiment, and FIG. 67 is a perspective view of the buckle assembly shown in FIG. 66.
FIG. 68 is a front view of a buckle assembly according to another embodiment, FIG. 69 is a front view of the buckle assembly shown in FIG. 68 when the buckle assembly is unlocked, and FIG. 70 is a side view of the buckle assembly shown in FIG. 68.
FIG. 71 is a front view of a buckle assembly according to another embodiment, and FIG. 72 is a perspective view of the buckle assembly shown in FIG. 71.
FIG. 73 is a bottom view of a carrier according to another embodiment, FIG. 74 is a partial enlarged view of a positioning piece and a fixing strap that are connected to each other, and FIG. 75 is a partial enlarged view of the positioning piece and the fixing strap that are separated from each other.
FIG. 76 a partial enlarged view of the carrier shown in FIG. 73 in another state, FIG. 77 is a partial enlarged view of the carrier shown in FIG. 73 in another state, and FIG. 78 is a partial enlarged view of the carrier shown in FIG. 73 in another state.
FIG. 79 is a perspective view of a wheeled movable device according to an embodiment of the present disclosure.
FIG. 80 is a perspective view of the wheeled movable device shown in FIG. 79, with a covering omitted.
FIG. 81 is a perspective view of a frame of the wheeled movable device shown in FIG. 79.
FIG. 82 is a top view of a frame of the wheeled movable device shown in FIG. 79.
FIG. 83 is a side view of the frame of the wheeled movable device shown in FIG. 79, with the frame in an unfolded state.
FIG. 84 is a side view of the frame of the wheeled movable device shown in FIG. 79, with the frame is in a state between an unfolded state and a folded state.
FIG. 85 is a side view of the frame of the wheeled movable device shown in FIG. 79, with the frame in a folded state.
FIG. 86 is an exploded view of the wheeled movable device shown in FIG. 80.
FIG. 87 is a sectional view taken along a line U31-U31 in FIG. 80.
FIG. 88 is a front view of a carrier in the wheeled movable device shown in FIG. 80, with the carrier provided with a second locking mechanism, an unlocking assembly and a strap guiding mechanism.
FIG. 89 is an exploded view of the second locking mechanism and the unlocking assembly of the carrier shown in FIG. 88.
FIG. 90 is a back view of the carrier in the wheeled movable device shown in FIG. 80, with the carrier provided with the second locking mechanism, the unlocking assembly and the strap guiding mechanism.
FIG. 91 is an exploded view of a portion of the second locking mechanism and the unlocking assembly of the carrier shown in FIG. 90.
FIG. 92 is a perspective view of a driving member of the second locking mechanism shown in FIG. 91.
FIG. 93 is a side view of the wheeled movable device shown in FIG. 79 with a covering omitted.
FIG. 94 is a sectional view taken along a line U32-U32 in FIG. 93, and for ease of illustration, the sectional view in FIG. 94 is rotated 90 degrees clockwise.
FIG. 95 is a sectional view taken along a line U33-U33 in FIG. 80, with the unlocking assembly in a state where the second locking member is not unlocked.
FIG. 96 is a sectional view taken along a line U34-U34 in FIG. 93, with the unlocking assembly in a state where the second locking member is not unlocked, and for ease of illustration, the sectional view in FIG. 96 is rotated 90 degrees clockwise.
FIG. 97 is a sectional view taken along a line U33-U33 in FIG. 80, with the unlocking assembly in a state where the second locking member is unlocked.
FIG. 98 is a sectional view taken along a line U34-U34 in FIG. 93, with the unlocking assembly in a state where the second locking member is unlocked, and for ease of illustration, the sectional view in FIG. 98 is rotated 90 degrees clockwise.
FIG. 99 is an exploded view of the strap guiding mechanism of the carrier shown in FIG. 90, and FIG. 100 is a perspective view of the strap guiding mechanism in FIG. 99.
FIG. 101 is a side view of the carrier shown in FIG. 88, and FIG. 102 is a sectional view taken along a line U35-U35 in FIG. 101.
FIG. 103 is a top view of a carrier in an embodiment of the present disclosure, FIG. 104 is a bottom view of the carrier shown in FIG. 103, and FIG. 105 is a sectional view taken along a line U36-U36 in FIG. 103.
FIG. 106 is a perspective view of the wheel assembly in the wheeled movable device shown in FIG. 79, with a wheel assembly in a free rotation state, and FIG. 107 shows a perspective view of a brake elastic piece.
FIG. 108 is a schematic view of a buckle according to an embodiment of the present disclosure, with a male buckle separated from a female buckle.
FIG. 109 is a top view of the buckle in FIG. 108, with the male buckle engaged with the female buckle, FIG. 110 is a bottom view of the buckle shown in FIG. 109, and FIG. 111 is a side view of the buckle shown in FIG. 109.
FIG. 112 is a perspective view of the male buckle shown in FIG. 108.
FIG. 113 is an exploded perspective view of the female buckle shown in FIG. 108.
FIG. 114 is a perspective view of the buckle shown in FIG. 109, with an unlocking member not pressed, FIG. 115 shows a cross section taken along a line U11-U11 in FIG. 114, and FIG. 116 shows a cross section taken along a line U12-U12 in FIG. 114.
FIG. 117 is a perspective view of the buckle shown in FIG. 109, with the unlocking member pressed, FIG. 118 shows a cross section taken along a line U13-U13 in FIG. 117, and FIG. 119 shows a cross section taken along a line U14-U14 in FIG. 117.
FIG. 120 is a perspective view of a male buckle of a buckle according to an embodiment of the present disclosure.
FIG. 121 is a perspective view of a female buckle of a buckle according to an embodiment of the present disclosure.
FIG. 122 is a perspective view of a cover plate of the female buckle shown in FIG. 121.
FIG. 123 is a perspective view of the buckle shown in FIGS. 120 and 121, with the male buckle in a process of being mounted to the female buckle.
FIG. 124 shows the buckle shown in FIG. 123 with the cover plate removed.
FIG. 125 shows a cross section taken along a line U15-U15 in FIG. 123.
FIG. 126 is a bottom view of the buckle shown in FIG. 123, with the male buckle reversely mounted to the female buckle.
FIG. 127 shows a cross section taken along a line U16-U16 in FIG. 126.

### DETAILED DESCRIPTION

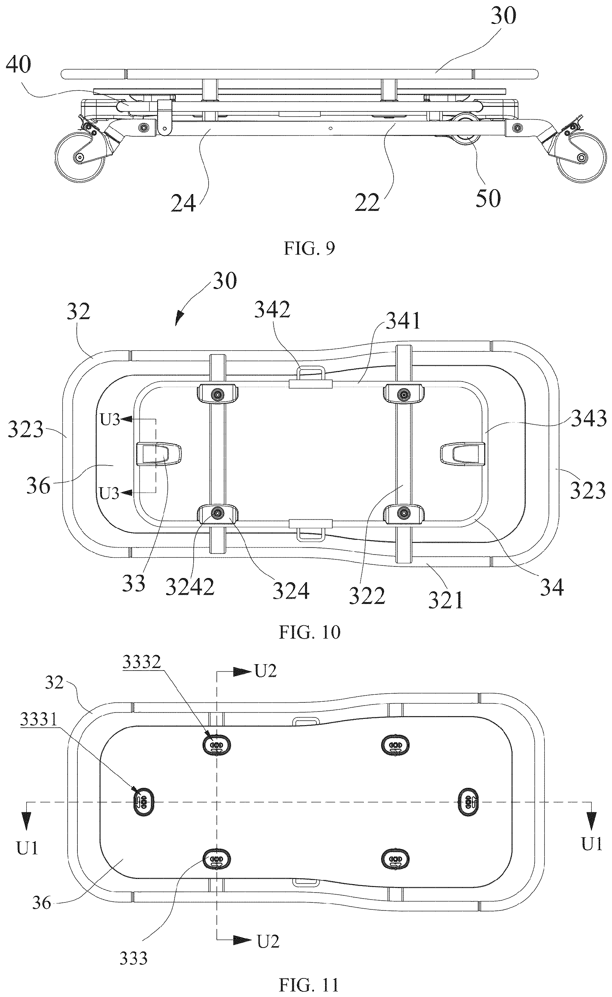

Referring to FIGS. 1 to 3, a wheeled movable device 100 according to an embodiment of the present disclosure includes a wheel assembly 10, a frame 20, a carrier 30, a carrying frame 40, and a first locking mechanism 50. The wheel assembly 10 includes a front wheel assembly 12 and a rear wheel assembly 14. The frame 20 includes a front rod 22 connected to the front wheel assembly 12 and a rear rod 24 connected to the rear wheel assembly 14. A middle portion of the front rod 22 and a middle portion of the rear rod 24 are pivotally connected to each other. The carrying frame 40 is pivotally connected to the front rod 22 and the rear rod 24, respectively. The carrier 30 is removably mounted on the carrying frame 40. The frame 20 has an unfolded state shown in FIG. 2 and a folded state shown in FIG. 9. The first locking mechanism 50 is arranged between the frame 20 and the carrying frame 40. The first locking mechanism 50 has a locked state and an unlocked state. When the first locking mechanism 50 is in the locked state, the frame 20 is locked in the unfolded state or the folded state. When the first locking mechanism 50 is in the unlocked state, the frame 20 can be freely switched between the unfolded state and the folded state.

In this embodiment, the wheel assembly 10 includes two front wheel assemblies 12 and two rear wheel assemblies 14. The frame 20 includes two front rods 22 respectively connected to the two front wheel assemblies 12 and two rear rods 24 respectively connected to the two rear wheel assemblies 14. The two front rods 22 are arranged in parallel and are fixedly connected to each other by a front reinforcing rod 23. The front reinforcing rod 23 and the two front rods 22 can be collectively referred to as a front support frame. The two rear rods 24 are arranged in parallel and are fixedly connected to each other by a rear reinforcing rod 25. The rear reinforcing rod 25 and the two rear rods 24 can be collectively referred to as a rear support frame. Each front rod 22 and the corresponding rear rod 24 are in a crossed configuration and are rotatably connected to each other by a pin shaft. More specifically, the two rear rods 24 are arranged on the outer side of the two front rods 22, that is, a distance between the two rear rods 24 is slightly greater than a distance between the two front rods 22. In other embodiments, the two rear rods 24 are arranged on the inner side the two front rods 22, that is, the distance between the two rear rods 24 is slightly less than the distance between the two front rods 22.

As shown in FIG. 1 and FIG. 17, the carrying frame 40 is mainly used to support the carrier 30. The carrying frame 40 has a generally a square frame structure, and includes two short rods 42 and two long rods 44. The two short rods 42 are parallel to each other, the two long rods 44 are parallel to each other, and the two short rods 42 and the two long rods 44 are connected end to end in sequence, so as to facilitate the user to push and pull the frame 20. In order to increase the structural strength, two cross supports 43 that are parallel to each other and spaced apart are arranged between the two long rods 44.

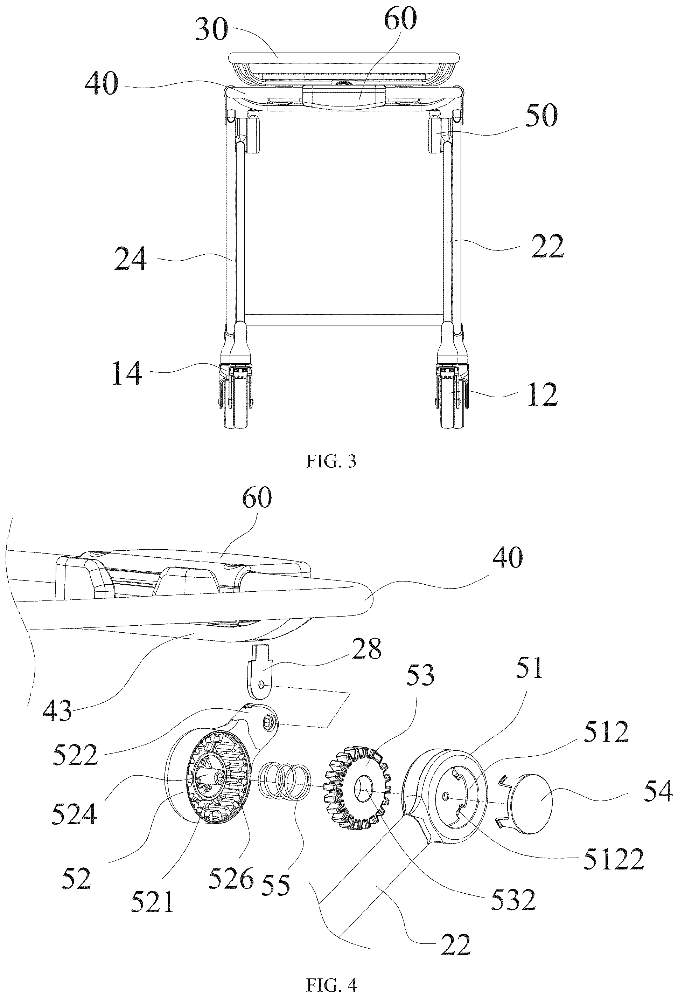

As shown in FIG. 4 and FIG. 17, in this embodiment, the frame 20 further includes a first transition member 26 and a second transition member 28 both fixed on the carrying frame 40. The first transition member 26 is pivotally connected to the rear rod 24, and the second transition member 28 is pivotally connected to the front rod 22. Specifically, one end of the first transition member 26 is fixed to the long rod 44 by screws or welding, and another end of the first transition member 26 is pivotally connected to the rear rod 24. One end of the second transition member 28 is inserted into and fixed to the cross support 43, and another end of the second transition member 28 is pivotally connected to the front rod 22 through a first locking mechanism 50. It can be understood that in other embodiments, the first transition member 26 may be also pivotally connected to the front rod 22, and the second transition member 28 can be pivotally connected to the rear rod 24. It can be understood that in other embodiments, the one end of the second transition member 28 may be also fixed to the short rod 42 instead of being fixed to the cross support 43. In addition, in other embodiments, if the distance between the two long rods 44 of the carrying frame 40 is not the same, or the front rod 22 and the rear rod 24 are bent, the first transition member 26 and the second transition member 28 may be also pivotally connected to the long rod 44. In addition, the first transition member 26 and the second transition member 28 may be also omitted, in which case the front rod 22 and the rear rod 24 are directly pivotally connected to the carrying frame 40.

In this embodiment, two first locking mechanisms 50 are respectively arranged at the upper ends of the two front rods 22. However, it can be understood that the first locking mechanism 50 may be also arranged at the upper end of the rear rod 24. In addition, four or more first locking mechanisms 50 may be also provided.

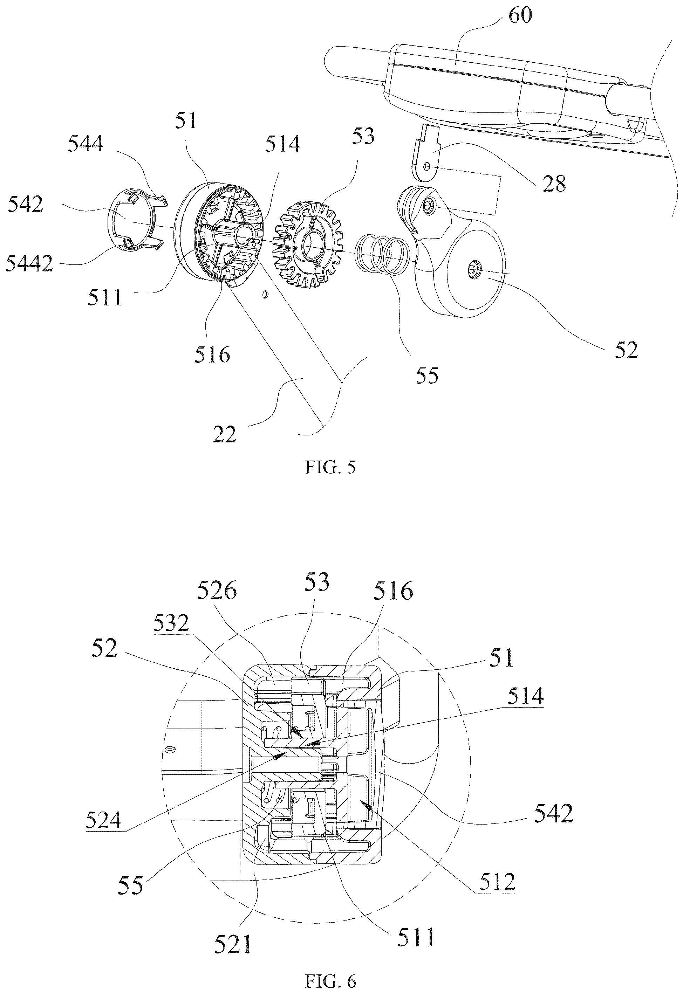

Referring to FIGS. 4 and 5, the first locking mechanism 50 includes a first fixing base 51, a second fixing base 52, a first locking member 53, an unlocking member 54 and a first elastic member 55.

The first fixing base 51 has a substantially disk shape and is fixedly connected to the upper end of the front rod 22. In other embodiments, the first fixing base 51 may also be fixedly connected to the upper end of the rear rod 24. A sliding groove 512 for slidably receiving the unlocking member 54 is arranged on a side of the first fixing base 51, and a substantially annular first accommodation space 511 is arranged on another side of the first fixing base 51. The first fixing base 51 is provided with a hollow shaft sleeve 514 in the middle of the first accommodation space 511. The first fixing base 51 further includes a first locking groove 516 arranged at the edge of the first accommodation space 511 and surrounding the shaft sleeve 514.

The second fixing base 52 includes a substantially disc-shaped main body portion and a connecting arm 522 fixedly connected to the main body portion. The connecting arm 522 is pivotally connected to the second transition member 28 through a pin shaft. A substantially annular second accommodation space 521 is arranged inside the main body portion. The second fixing base 52 is provided with a rotating shaft 524 in the middle of the second accommodation space 521. The rotating shaft 524 can be inserted into the shaft sleeve 514 of the first fixed seat 51 and can rotate relative to the shaft sleeve 514. The second fixing base 52 further includes a second locking groove 526 arranged at the edge of the second accommodation space 521 and surrounding the rotating shaft 524.

Referring to FIG. 2, the carrying frame 40, the front rod 22, the rear rod 24, and the first locking mechanism 50 define a four-linkage mechanism. More specifically, a first pivot point O1 between the rear rod 24 and the first transition member 26 fastened to the carrying frame 40, a second pivot point O2 between the front rod 22 and the rear rod 24, a third pivot point O3 between the first fixing base 51 and the second fixing base 52, and a fourth pivot point O4 between the second fixing base 52 and the second transition member 28 fastened to the carrying frame 40 form four hinged points of the four-linkage mechanism.

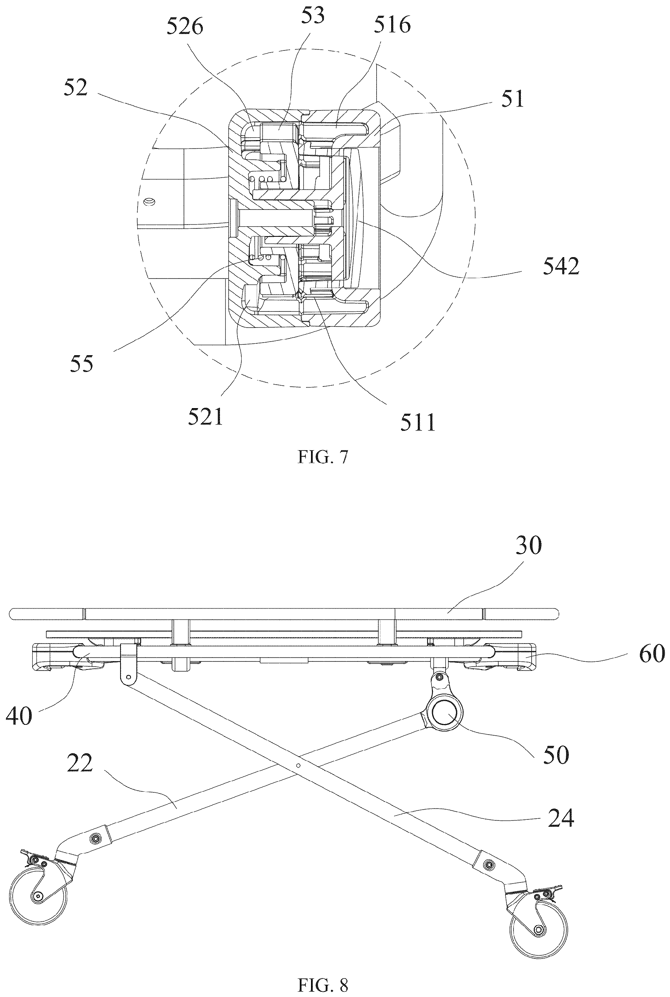

Referring to FIGS. 6 and 7, the first locking member 53 is received in an accommodation space formed by the first accommodation space 511 and the second accommodation space 521, so as to cooperate with both the first locking groove 516 and the second locking groove 526 to achieve locking. A through hole 532 is further formed in the middle of the first locking member 53. The shaft sleeve 514 of the first fixing base 51 extends through the through hole 532, so that the first locking member 53 can slide back and forth along the shaft sleeve 514 in the accommodation space formed by the first accommodation space 511 and the second accommodation space 521. In this embodiment, the first locking member 53 is a gear, and both the first locking groove 516 and the second locking groove 526 are gear grooves meshing with the first locking member 53. It can be understood that in other embodiments, the first locking member 53 may be of other shapes, such as an irregular polygon, etc., and the first locking groove 516 and the second locking groove 526 may be of other corresponding shapes.

The unlocking member 54 can drive the first locking member 53 to move axially. The unlocking member 54 includes a substantially circular pressing part 542, and a plurality of pushing parts 544 configured to extend from an edge of the pressing part 542 toward a side thereof. The pressing part 542 is slidably received in the sliding groove 512 of the first fixing base 51. In an embodiment, the pressing part 542 protrudes from the edge of the sliding groove 512, for example, by approximately 2.5 mm. In addition, the middle portion of the pressing part 542 may be provided with a certain recess to facilitate the user to press by hand. The bottom of the sliding groove 512 is further provided with a plurality of limiting holes 5122. After extending through the respective limiting holes 5122, the plurality of pushing parts 544 abut against the first locking member 53. In order to prevent the pressing part 542 from escaping from the sliding groove 512, a hook 5442 is further arranged at the end of the pushing part 544. The hook 5442 has a certain elasticity and can abut against the edge of the limiting hole 5122, thereby preventing the entire unlocking member 54 from falling from the first fixing base 51 when the pressing part 542 slides in the sliding groove 512.

The first elastic member 55 is arranged inside the second fixing base 52. Two ends of the first elastic member 55 respectively abut against the first locking member 53 and the side of the second fixing base 52 facing the first fixing base 51. In this embodiment, the first elastic member is a compression spring, which makes the first locking member 53 always have a tendency to move toward the first locking groove 516.

Referring to FIG. 6 and FIG. 7 together, the operating principle of the first locking mechanism 50 is briefly described below.

When the first locking mechanism 50 is in the locked state shown in FIG. 6, the first locking member 53 cooperates with both the first locking groove 516 and the second locking groove 526 to achieve locking. In this case, the first fixing base 51 and the second fixing base 52 are fixed to each other and not rotatable relative to each other. Therefore, the frame 20 is also locked in the unfolded state shown in FIG. 2. In this state, the overall height of the wheeled movable device 100 is relatively high so as to facilitate the user to can transfer the animal placed on the carrier 30 by pushing or pulling.

When it is required to transfer the wheeled movable device 100 to an ambulance, the frame 20 can be folded to reduce the height of the wheeled movable device 100. In this embodiment, when the frame 20 is folded or unfolded, it is not necessary to remove the carrier 30 from the frame 20. In this case, the unlocking members 54 of the two first locking mechanisms 50 can be pressed by hand at the same time, and the plurality of pushing parts 544 can abut against the first locking member 53, and drive the first locking member 53 to slide toward the second accommodation space 521 against the elastic force of the first elastic member 55. As shown in FIG. 7, after the first locking member 53 enters the second accommodation space 521, the first locking member 53 is disengaged from the first locking groove 516. At this time, the first locking mechanism 50 is in the unlocked state, and the first fixing base 51 can rotate around the rotating shaft 524 relative to the second fixing base 52.

As shown in FIG. 2, FIG. 8 and FIG. 9, when the first fixing base 51 is rotatable relative to the second fixing base 52, the front rod 22 of the frame 20 is pivotable relative to the rear rod 24, so that the front rod 22 and the rear rod 24 are finally folded from an intersecting state shown in FIG. 2 to an approximately parallel state shown in FIG. 9. That is, the frame 20 is switched from the unfolded state shown in FIG. 2 to a half-folded state shown in FIG. 8, and finally to a fully folded state shown in FIG. 9, thereby reducing the height and occupied volume of the wheeled movable device 100.

In some embodiments, when the frame 20 is in the fully folded state shown in FIG. 9, the locking may not be formed because the rotation of the first fixing base 51 relative to the second fixing base 52 may cause the first locking member 53 to be misaligned with the first locking groove 516 and the second locking groove 526. Therefore, in this folded state, the first fixing base 51 and the second fixing base 52 may not be locked to each other. This makes it more convenient and quick to unfold the frame 20, since the carrying frame 40 can be directly lifted upwardly without operating the unlocking member 54.

When the carrying frame 40 is lifted upwardly, so that the frame 20 is restored from the fully folded state shown in FIG. 9 to the unfolded state shown in FIG. 2, under the action of the elastic restoring force of the first elastic member 55, the first locking member 53 slides from the second accommodation space 521 toward the first accommodation space 511 so as to cooperate with the first locking groove 516 and the second locking groove 526 again to achieve locking. At this time, the first locking mechanism 50 is restored to the locked state shown in FIG. 6, and the front rod 22 and the rear rod 24 of the frame 20 are locked in the unfolded state shown in FIG. 2.

It is understood that in another embodiment, when the frame 20 is in the fully folded state shown in FIG. 9, the first locking mechanism 50 can also realize the locking function, thereby locking the front rod 22 and the rear rod 24 in the folded state shown in FIG. 9. In this case, when it is required to unfold the frame 20, the unlocking member 54 is required to be manually pressed first. It can be understood that in another embodiment, the unlocking member 54 can drive the first locking member 53 to be disengaged from the second locking groove 526, thereby realizing the unlocked state of the first locking mechanism 50. In addition, if other components are used to drive the first locking member 53 to move, the unlocking member 54 and the first elastic member 55 may be also omitted.

It should be noted that, in the above embodiment, the first locking mechanism 50 is configured to lock the relative position between the first fixing base 51 and the second fixing base 52, so that the first fixing base 51 and the second fixing base 52 is not rotatable relative to each other, and the frame 20 is locked in a certain state. That is, as long as the first locking mechanism 50 is in the locked state, the relative position between the first fixing base 51 and the second fixing base 52 is locked, so that the frame 20 is locked in a certain state. Such certain state is not limited to the unfolded state and the fully folded state as described above, and may be also another folded state between the unfolded state and the fully folded state (as shown in FIG. 8).

According to the embodiment of the present disclosure, the frame 20 can be switched between the unfolded state and the folded state by pressing the unlocking member 54 of the first locking mechanism 50, so that the wheeled movable device 100 can be stored conveniently when not in use, without taking up extra space. Referring to FIGS. 8 and 9, when the frame 20 is switched to the fully folded state, the upper end of the front rod 22 is proximate to the lower end of the rear rod 24, and the upper end of the rear rod 24 is proximate to the lower end of the front rod 22.

As shown in FIGS. 10 and 11, in this embodiment, the carrier 30 may have a configuration similar to a stretcher, and include a support frame arrangement and at least one strap guiding mechanism 33 arranged on the support frame arrangement. The support frame arrangement includes a first support frame 32, a second support frame 34, and a support plate 36 located between the first support frame 32 and the second support frame 34.

The first support frame 32 is a substantially annular square frame (for example, but not limited to a rectangular frame), which includes two long sides 321 and two short sides 323 connected to the two long sides 321. It should be noted that in this embodiment, the lengths of the two short sides 323 are not equal to each other. In FIG. 10, the length of the short side 323 on the right side is slightly less than the length of the short side 323 on the left side. Certainly, in other embodiments, the lengths of the two short sides 323 may also be equal to each other. The first support frame 32 can be made of a metal material. In an embodiment, the two short sides 323 may be also wrapped with anti-slip materials such as leather or rubber to facilitate the user to grip. The second support frame 34 has substantially the same shape as the first support frame 32, but smaller in size than the first support frame 32. Two parallel support rods 322 are arranged between the two long sides of the first support frame 32. Two fixing bases 324 are also arranged on each support rod 322.

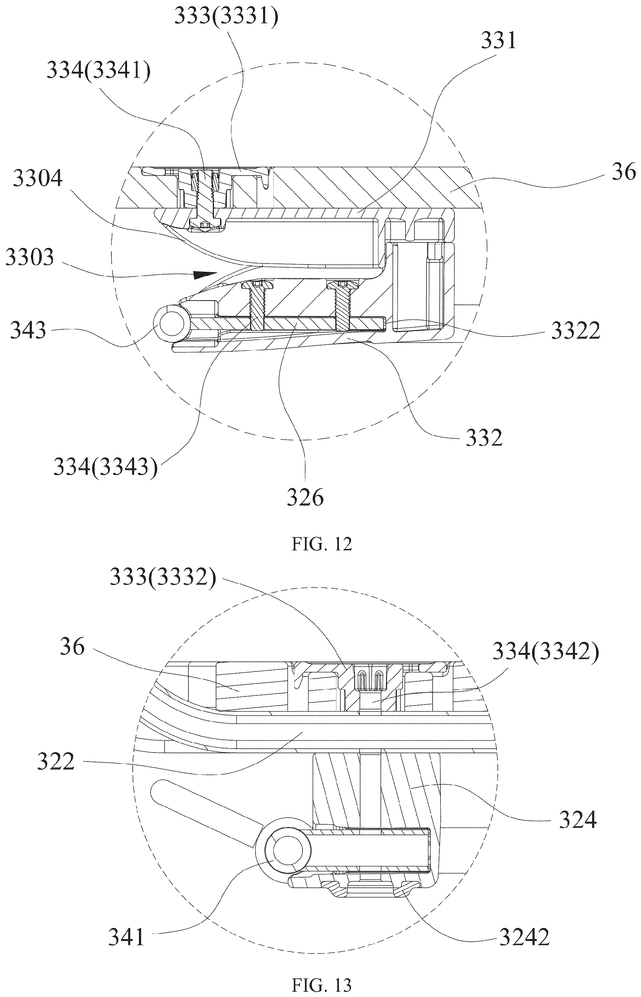

The support plate 36 is mainly used to carry pets, and can be made of a rigid material (such as a metal plate, a plastic plate) or a flexible material (such as canvas) according to the actual application requirements. The support plate 36 is a substantially square flat plate fixed to four fixing bases 324. Referring to FIG. 13, specifically, a plurality of positioning bases 333 (more specifically, positioning bases 3332) are provided at positions corresponding to the fixing bases 324 on the support plate 36. Each positioning base 333 is embedded in the support plate 36. Screws 334 (more specifically, screws 3342) extend through the respective positioning bases 333 and the respective fixing bases 324 to secure the support plate 36 to the fixing bases 324. In addition, in order to enhance the engagement strength, the surface of the fixing base 324 is provided with a locking gasket 3242 cooperating with each screw 334.

The second support frame 34 includes two long connecting rods (also called long sides) 341 and two short engaging rods (also called short sides) 343. The two connecting rods 341 are fixedly connected to the two support rods 322, respectively, through the four fixing bases 324. A middle part of each of the two connecting rods 341A is provided with a fixing ring 342.

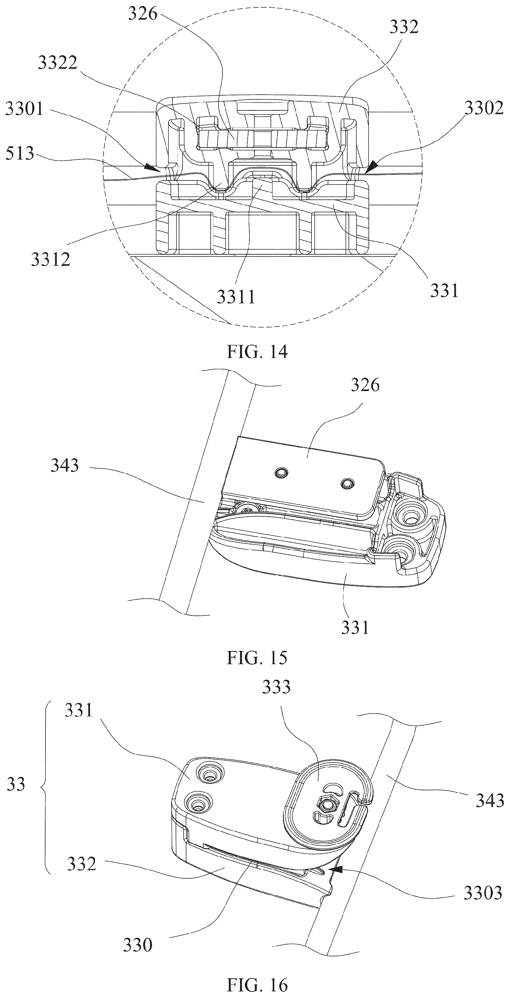

As shown in FIGS. 12 and 15, two fixing pieces 326 are arranged on the second support frame 34. Specifically, the two fixing pieces 326 can be fixed to the two engaging rods 343 of the second support frame 34 by welding or the like, and the two fixing pieces 326 are arranged oppositely. Each strap guiding mechanism 33 is fixed to one fixing piece 326 by a fastener such as a screw.

As shown in FIG. 10 to FIG. 12 and FIG. 14 to FIG. 16, two strap guiding mechanisms 33 are respectively arranged on the second support frame 34. Specifically, each strap guiding mechanism 33 is arranged in the middle part of the engaging rod 343 of the second support frame 34. The strap guiding mechanism 33 includes a base housing 331 and a cover housing 332. The base housing 331 is fixed on the support plate 36, and the cover housing 332 is fixed to the second support frame 34. A plurality of positioning bases 333 are further respectively arranged on the support plate 36 at positions corresponding to the strap guiding mechanisms 33. The base housing 331 can be fixed to the positioning base 333 (more specifically, the positioning base 3331) by, for example, screws 334 (more specifically, screws 3341). The cover housing 332 has a receiving groove 3322 configure to receive the fixing piece 326. The fixing piece 326 is inserted into the receiving groove 3322 of the cover housing 332 and fixed to the cover housing 332 by a plurality of screws 334 (more specifically, screws 3343). The base housing 331 and the cover housing 332 may also be fixedly connected to each other by a plurality of screws. It can be understood that in other embodiments, the strap guiding mechanism 33 may also be fixed to the support plate 36 only by the positioning base 3331, and in this case, the fixing piece 326 may also be omitted. Similarly, in other embodiments, the strap guiding mechanism 33 may also be fixed to the second support frame 34 only by the fixing piece 326, and in this case, the positioning base 3331 may also be omitted.

As shown in FIGS. 12, 14 and 16, the base housing 331 and the cover housing 332 jointly define a passage 330 through which a restraint strap 513 (see FIG. 14) of a fixing strap assembly extends through. The passage 330 has a first port 3301 and a second port 3302. The passage 330 also has a lateral introduction port 3303. The lateral introduction port 3303 is in communication with both the first port 3301 and the second port 3302, and the lateral introduction port 3303 has a guide slope 3304. The lateral introduction port 3303 and the guide slope 3304 are provided to enable the restraint strap 513 to easily slide into the passage 330 laterally. At least one first rib 3311 is arranged on the base housing 331 and protrudes toward the cover housing 332. At least one second rib 3312 is arranged on the cover housing 332 and protrudes toward the base housing 331. The first rib 3311 and the second rib 3312 are alternately arranged in the extending direction of the restraint strap 513. That is, the first rib 3311 and the second rib 3312 are arranged on side walls of the passage 330 facing each other. By reasonably arranging the height of the first rib 3311 and the height of the second rib 3312, the restraint strap 513 located between the first port 3301 and the second port 3302 is bent in the passage 330 and passes over the top of the first rib 3311 and the top of the second rib 3312, so that the restraint strap 513 is subjected to the movement resistance from the first rib 3311 and the second rib 3312. In this way, when the fixing strap assembly is tightened, the restraint strap 513 does not easily slide relative to the support frame arrangement.

Referring to FIG. 17 again, in order to realize the rapid mounting and removal of the carrier 30, the wheeled movable device 100 further includes an engaging mechanism 60 arranged on the carrying frame 40. The engaging mechanism 60 has an engagement state shown in FIG. 22 and a release state shown in FIG. 23. When the engaging mechanism 60 is in the engagement state, the carrier 30 and the engaging mechanism 60 are locked to each other, that is, the carrier 30 is fixed on the carrying frame 40. When the engaging mechanism 60 is in the release state, the carrier 30 can be separated from the engaging mechanism 60, so that the carrier 30 can be easily removed from the carrying frame 40. In this embodiment, two engaging mechanisms 60 are respectively arranged on two opposite short rods 42 of the carrying frame 40. In other embodiments, one, three, four or more engaging mechanisms 60 may also be provided. In addition, the engaging mechanism 60 may also be arranged on two long rods 44 of the carrying frame 40.

Referring to FIGS. 18 to 20, the engaging mechanism 60 includes an upper housing 62, a lower housing 64, an engaging member 66, and a second elastic member 68. The upper housing 62 and the lower housing 64 jointly form a housing. An accommodating space 63 in which the engaging member 66 can slide is formed inside the housing. In this embodiment, the upper housing 62 and the lower housing 64 are assembled together by fasteners such as screws, and clamp onto and are thus fixed on the short rod 42. In other embodiments, the upper housing 62 and the lower housing 64 may be also integrally formed. The lower housing 64 is substantially square, and provided with an engaging groove 642 on its front surface. The engaging groove 642 is adjacent to the short rod 42 and is arranged in the extending direction of the short rod 42, and the width of the engaging groove 642 matches the size of the engaging rod 343 of the carrier 30. The engaging rod 343 of the carrier 30 can be engaged in the locking groove 642, thereby restricting the movement of the carrier 30 in a length direction L in FIG. 20. A limiting notch 644 in communication with the engaging groove 642 is also arranged in the middle part of the lower housing 64 at a side thereof. When the engaging rod 343 is received in the engaging groove 642, the strap guiding mechanism 33 on the engaging rod 343 can be positioned in the limiting notch 644, thereby restricting the movement of the carrier 30 in a width direction W in FIG. 20. An operating groove 646 in communication with the accommodating space 63 is also arranged on the back surface of the lower housing 64. The upper housing 62 covers the lower housing 64, and a through hole 622 in communication with the accommodating space 63 and the engaging groove 642 is formed between the upper housing 62 and the lower housing 64 (see FIG. 22).

The engaging member 66 is substantially a square plate (for example, but not limited to a rectangular plate), and includes an engaging tongue 662 and an operating part 664 that are integrally formed. The engaging tongue 662 is substantially a square piece, which matches the shape of the through hole 622. An end of the engaging tongue 662 has a guide slope 6622 in contact with the engaging rod 343. The engaging member 66 can slide in the accommodating space 63 of the housing, and the engaging tongue 662 can extend through the through hole 622 and enter the engaging groove 642. The thickness of the operating part 664 is greater than that of the engaging tongue 662. The operating part 664 is movable in the operating groove 646, thereby driving the engaging tongue 662 to extend out via the through hole 622 or retract into the accommodating space 63. In other words, the operating part 664 can drive the engaging tongue 662 to move between a first position where the engaging tongue 662 extends into the engaging groove 642 and a second position where the engaging tongue 662 retracts from the engaging groove 642. A receiving cavity 6642 (see FIG. 22) is further arranged on the side of the operating part 664 away from the engaging tongue 662. In this embodiment, as shown in FIG. 20, the engaging groove 642 is located on the inner side of the short rod 42, and the operating part 664 is located on the outer side of the short rod 42, so that the design of the engaging mechanism 60 is more reasonable, and the unlocking operation is more convenient.

Referring to FIG. 22, the second elastic member 68 is a compression spring in this embodiment. The second elastic member 68 is partially received in the receiving cavity 6642. Two ends of the second elastic member 68 abut against the inner side wall of the lower housing 64, and the inner wall of the operating part 664 located at one end of the receiving cavity 6642, respectively. The second elastic member 68 has a constant tendency to move the engaging member 66 toward the engaging groove 642. In other words, in an initial state, the second elastic member 68 keeps the engaging tongue 662 at the first position where the engaging tongue 662 extends into the engaging groove 642.

Referring to FIGS. 21 to 23, the operating principle of the engaging mechanism 60 is briefly described below.

In the initial state shown in FIG. 18, under the action of the second elastic member 68, the engaging tongue 662 of the engaging member 66 extends out via the through hole 622 and is at the first position where the engaging tongue 662 extends into the engaging groove 642.

When it is required to secure the carrier 30 to the carrying frame 40, the two engaging rods 343 of the carrier 30 can be engaged into the two engaging grooves 642 of the two engaging mechanisms 60, respectively. As the engaging rod 343 enters the engaging groove 642, the engaging rod 343 first contacts the engaging tongue 662. Under the action of the guide slope 6622 of the engaging tongue 662, the engaging rod 343 can push the engaging tongue 662 into the through hole 622, so that the engaging rod 343 can smoothly enter the engaging groove 642. After the engaging rod 343 passes over the engaging tongue 662 and enters the engaging groove 642, under the action of the second elastic member 68, the engaging tongue 662 extends out via the through hole 622 and extends into the engaging groove 642 again, and abuts against the top of the engaging rod 343. When the engaging mechanism 60 is in the engaging state, the movement of the engaging rod 343 in the length direction L of the carrier 30 in FIG. 20 is restricted under the action of the two side walls of the engaging groove 642. The strap guiding mechanism 33 on the engaging rod 343 is positioned just within the limiting notch 644, so that the movement of the engaging rod 343 in the width direction W of the carrier 30 in FIG. 20 is restricted. Under the action of the bottom wall of the engaging groove 642 and the engaging tongue 662, the movement of the engaging rod 343 in the height direction H of the carrier 30 in FIG. 20 is restricted. Finally, as shown in FIG. 20, the carrier 30 is relatively firmly mounted on the carrying frame 40.

In this embodiment, by adopting the structure in which the limiting notch 644 cooperates with the strap guiding mechanism 33 and the engaging groove 642 cooperates with the engaging rod 343, the carrier 30 can be fixed on the carrying frame 40 more stably and will not shake with the movement of the frame 20. In addition, in some embodiments, the engaging groove 642 is arranged on the inner side of the short rod 42, so that the distance between the two engaging rods 343 of the carrier 30 is less than the distance between the two short rods 42 of the carrying frame 40, thereby ensuring that the projection of the second support frame 34 on the ground is located within the projection of the carrying frame 40 on the ground, so that the carrier 30 is more stable when placed on the carrying frame 40, preventing rollover, and guaranteeing the safety of the pet.

When it is required to remove the carrier 30 from the carrying frame 40, the user can reach into the operating groove 646 by hand and apply a force to the operating part 664 to move it away from the engaging groove 642. The operating part 664 overcomes the elastic force of the second elastic member 68, thereby driving the engaging tongue 662 to move from the first position where the engaging tongue 662 extends into the engaging groove 642 toward the second position where the engaging tongue 662 retracts from the engaging groove 642, and finally, to retract into the accommodating space 63. When the engaging mechanism 60 is in the release state, the engaging rod 343 is not blocked by the engaging tongue 662 above it, so the engaging rod 343 can be easily removed from the engaging groove 642, that is, the carrier 30 is separated from the engaging mechanism 60. After the force on the operating part 664 stops, the engaging tongue 662 extends out via the through hole 622 under the elastic restoring force of the second elastic member 68, and moves into the first position of inserting into the engaging groove 642 again.

It can be understood that the operating groove 646 may be also arranged on the upper housing 62. In addition, if the movement of the engaging member 66 is directly controlled by hand, the guide slope 6622 and the second elastic member 68 may be also omitted. If the strap guiding mechanism 33 is not arranged on the engaging rod 343, the limiting notch 644 may be also omitted.

In another embodiment, as shown in FIG. 24, the width of the engaging groove 642 of the engaging mechanism 60 on the short rod 42 on at least one side of FIG. 21 is greater than the diameter of the engaging rod 343, so that when the engaging rod 343 is engaged in the engaging groove 642, the engaging rod 343 can make a certain movement in the engaging groove 642 in the length direction of the carrier 30. Specifically, the engaging rod 343 has a third position (as shown in FIG. 24) close to the engaging tongue 662 and a fourth position (as shown in FIG. 25) away from the engaging tongue 662 in the engaging groove 642. The third position and the fourth position can be located at left and right ends of the engaging groove 642. When the engaging rod 343 is at the third position, the engaging tongue 662 of the engaging member 66 is located directly above the engaging rod 343, so that the engaging rod 343 can be fixed in the engaging groove 642. When the engaging rod 343 is at the fourth position, the engaging rod 343 is separated from the engaging tongue 662, that is, the engaging tongue 662 is not blocked by the engaging tongue 662. In addition, when the engaging tongue 662 of the engaging member 66 is at the first position shown in FIGS. 24 and 25, the distance H1 between the engaging tongue 662 and a side wall of the engaging groove 642 is greater than the size (more specifically, the diameter) D of the engaging rod 343. It can be understood that if the cross section of the engaging rod 343 is non-circular, such as square, triangle, etc., the distance H1 between the engaging tongue 662 and the side wall of the engaging groove 642 is greater than the size (more specifically, the width) D of the engaging rod 343.

When the carrier 30 is normally fixed on the carrying frame 40, since the spacing between the two engaging rods 343 of the carrier 30 matches the spacing between the two engaging grooves 642 of the engaging mechanism 60 on two sides, the engaging rods 343 on two sides are respectively at the third position in the engaging grooves 642 (as shown in FIG. 24), and in this case, the engaging tongues 662 of the engaging members 66 are located directly above the engaging rods 343 respectively, so that the engaging rods 343 on the two sides can be fixed in the engaging grooves 642, respectively. When it is required to remove the carrier 30 from the carrying frame 40, only the engaging mechanism 60 on the short rod 42 that is on the right shown in FIG. 21 can be unlocked, without unlocking the engaging mechanism 60 on the short rod 42 that is on the left. After the engaging rod 343 on the right is separated from the engaging groove 642 on the right, the carrier 30 can be directly dragged to the right, so that the engaging rod 343 on the left moves in the engaging groove 642 on the left. When the engaging rod 343 on the left moves from the third position to the fourth position in the engaging groove 642, the engaging rod 343 is separated from the engaging tongue 662, and because the distance H1 between the engaging tongue 662 and the side wall of the engaging groove 642 is greater than the diameter D of the engaging rod 343, the engaging rod 343 is not blocked by the engaging tongue 662, so the engaging rod 343 can be easily removed from the engaging groove 642, that is, the carrier 30 is separated from the engaging mechanism 60. In the above embodiments, the operation step of unlocking the engaging mechanism 60 on the short rod 42 that is on the left can be omitted, making the whole operation more convenient and quick. It can be understood that in other embodiments, the width of the engaging grooves 642 of the engaging mechanisms 60 located on the left and right sides (N2 and N1) in FIG. 21 may be also greater than the diameter of the locking rod 343. In this case, it is only necessary to unlock the engaging mechanism 60 on either side, and the carrier 30 can be separated from the engaging mechanism 60, so that the user can easily remove the carrier 30 from the frame 20 on either side.

Referring to FIGS. 26 to 27, the wheeled movable device 100 according to an embodiment of the present disclosure has substantially the same configuration as the wheeled movable device 100 shown in FIGS. 1 to 3, and includes the wheel assembly 10, the frame 20, the carrier (not shown), the carrying frame 40, and the first locking mechanism 50. The difference therebetween lies in that the configuration of the frame 20 is varied.

As shown in FIGS. 28 to 30, the wheel assembly 10 includes a front wheel assembly 12 and a rear wheel assembly 14. The frame 20 includes a front rod 22 connected to the front wheel assembly 12 and a rear rod 24 connected to the rear wheel assembly 14. Two front rods 22 are arranged outside the two rear rods 24, that is, the distance between the two front rods 22 is greater than the distance between the two rear rods 24. The frame 20 further includes pivot bases 27. The middle part of the front rod 22 and the middle part of the rear rod 24 are pivotally connected to each other through the pivot base 27 (the "middle part" herein is any position between the two ends, not strictly the midpoint).

As shown in FIGS. 31 and 32, the pivot base 27 includes a first base body 272 and a second base body 274. The first base body 272 and the second base body 274 are identical in structure and opposite in orientation. An engaging groove 276 is arranged on the first base body 272 or the second base body 274. The front rod 22 and the rear rod 24 can be engaged into the engaging grooves 276 corresponding to the first base body 272 and the second base body 274, respectively, so that the first base body 272 is fixedly connected to the front rod 22, and the second base body 274 is fixedly connected to the rear rod 24. A shaft hole is arranged on each of the first base body 272 and the second base body 274. A pin shaft (not shown) extends through the shaft holes, so that the first base body 272 and the second base body 274 can rotate relative to each other. As shown in FIG. 30, with the arrangement of the first base body 272 and the second base body 274, the lateral distance between the front rod 22 and the rear rod 24 is increased. When the wheeled movable device 100 is switched from the unfolded state shown in FIG. 26 toward the folded state shown in FIG. 33, the front rod 22 and the rear rod 24 are folded from a crossed state to an approximately parallel state. The sufficient lateral distance between the front rod 22 and the rear rod 24 can prevent the user's fingers from being accidentally pinched, thereby further improving the use safety of the product. It can be understood that the first base body 272 and the second base body 274 can also have different configurations. In addition, in other embodiments, the pivot base 27 may be also a single element, that is, the first base body 272 and the second base body 274 are integrally formed. In this case, the front rod 22 and the rear rod 24 are respectively pivotally connected to the pivot base 27 by pin shafts or the like.

The carrying frame 40 is pivotally connected to the front rod 22 and the rear rod 24. The first locking mechanism 50 is arranged between the frame 20 and the carrying frame 40. Specifically, the first locking mechanism 50 is arranged on the front rod 22. The first locking mechanism 50 in this embodiment has a configuration similar to the first locking mechanism 50 shown in FIGS. 4 and 5, and thus is not repeatedly described herein. As shown in FIGS. 27 and 28, in this embodiment, the frame 20 further includes a first transition member 26 and a second transition member 28 both fixed to the carrying frame 40. An end of the first transition member 26 is inserted into and fixed to the cross support 43, and another end of the first transition member 26 is pivotally connected to the rear rod 24. An end of the second transition member 28 is fixed to the long rod 44 by screws or welding, and another end of the second transition member 28 is pivotally connected to the first locking mechanism 50.

As shown in FIGS. 30 and 33, since the first locking mechanism 50 is positioned on the outermost side of the frame 20, when the unlocking member 54 is operated to switch the wheeled movable device 100 from the unfolded state shown in FIG. 26 to the folded state shown in FIG. 33, it is possible to avoid pinching a finger, which is caused by a too small gap between the unlocking member 54 and the rear rod 24. Meanwhile, when the first locking mechanism 50 is positioned on the inner side of the frame 20, it is also possible to pinching the finger, which is likely to occur due to a too small gap between the first locking mechanism 50 and the rear reinforcing rod 25.

In order to control the traveling direction of the wheeled movable device 100 and secure the wheeled movable device 100 at a specific position. The wheeled movable device 100 in this embodiment is further provided with a brake mechanism. The brake mechanism can be arranged at the front wheel assembly 12 alone, or at the rear wheel assembly 14 alone, or on both the front wheel assembly 12 and the rear wheel assembly 14. The following description is made by taking the brake mechanism arranged on the front wheel assembly 12 as an example.

Referring to FIGS. 34 to 35, the wheel assembly 10 includes an adapting base 11, a wheel seat 13, a caster 15 and a brake assembly 17. The adapting base 11 is fixed to a tip end of the front rod 22. The wheel seat 13 is pivotally connected to the adapting base 11. The caster 15 is pivotally connected to the wheel seat 13. The brake assembly 17 can simultaneously restrict the rotation of the wheel seat 13 relative to the adapting base 11 and restrict the rotation of the caster 15 relative to the wheel seat 13, thereby achieving the braking and directional locking of the caster 15.

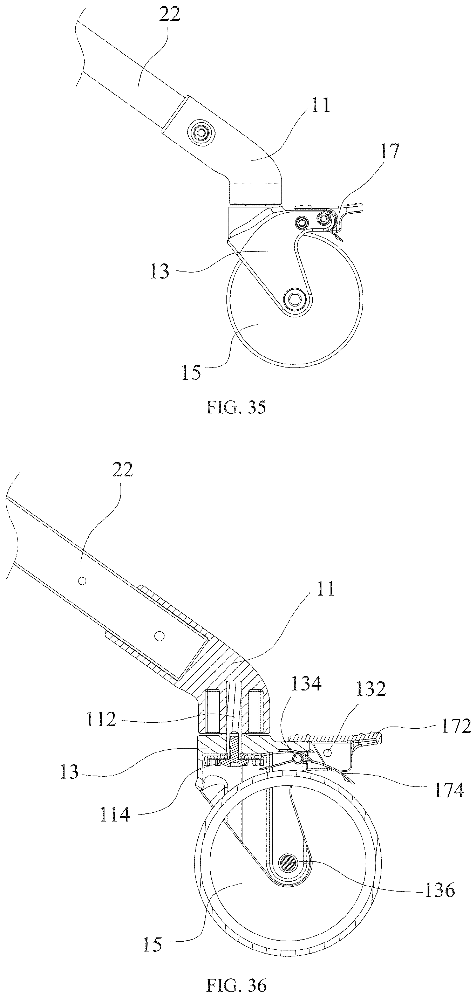

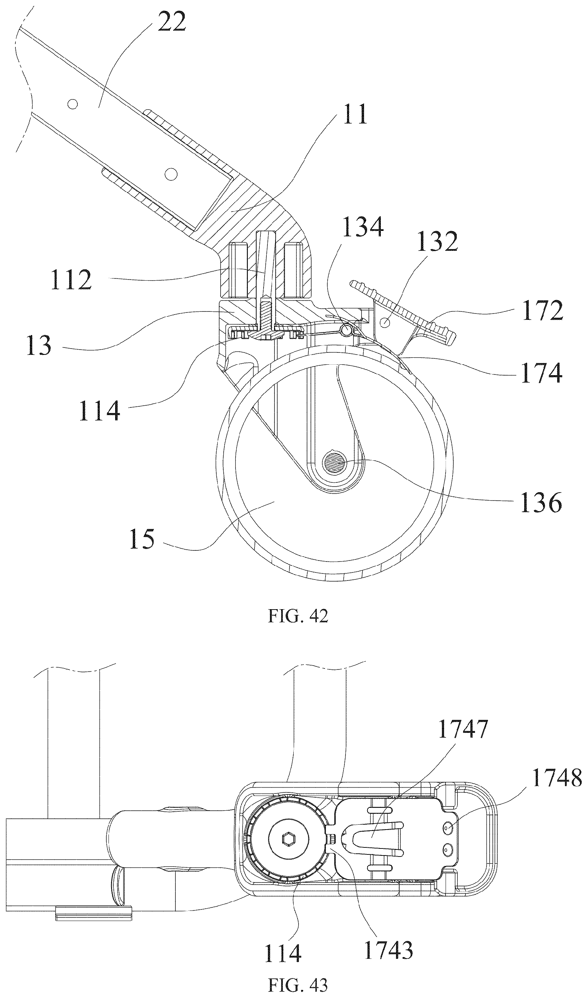

Referring to FIGS. 36 to 37, the wheel assembly 10 further includes a universal shaft 112 fixed to the adapting base 11. The wheel seat 13 is sleeved on the universal shaft 112 and can rotate relative to the universal shaft 112, so that the caster 15 can rotate in a universal direction. The tip end of the universal shaft 112 is fixed with a toothed plate 114 by screws (see FIG. 42). The rotation of the toothed plate 114 relative to an axis of the universal shaft 112 is restricted. The top of the wheel seat 13 is provided with a first pivot hole 132 and a second pivot hole 134 that are adjacent to each other. The bottom of the wheel seat 13 is further provided with a third pivot hole 136. The caster 15 is pivotally connected to the third pivot hole 136 by a pin shaft 152 and a fastener 154, so that the caster 15 can roll on the ground.

The brake assembly 17 includes a pedal 172 and a brake elastic piece 174. The pedal 172 is pivotally connected to the first pivot hole 132 of the wheel seat 13 by a pin shaft 1772. The brake elastic piece 174 is pivotally connected to the second pivot hole 134 of the wheel seat 13 through a pin shaft 1742.

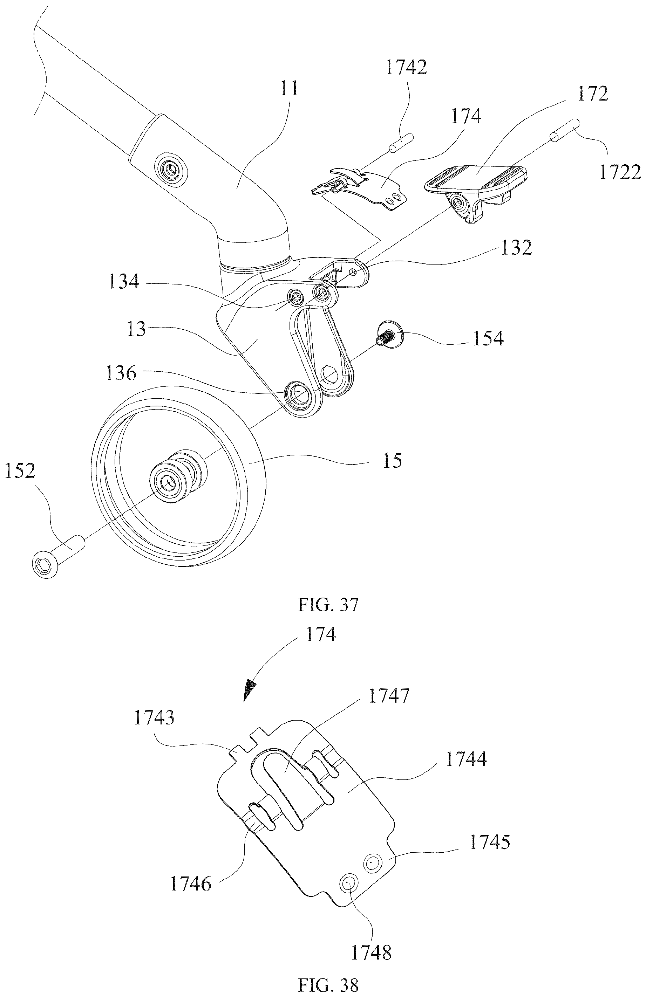

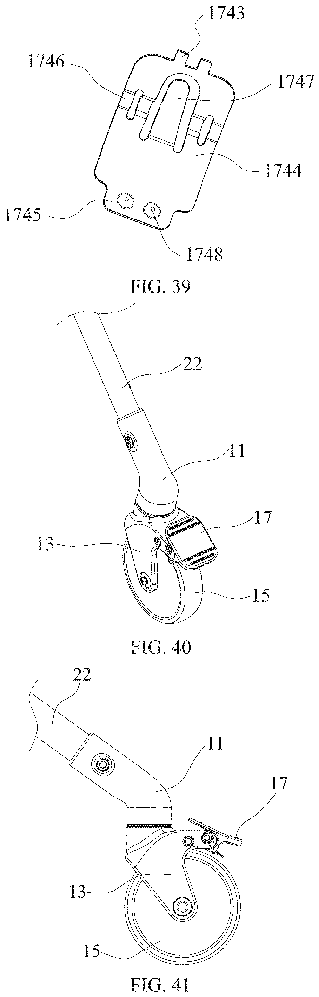

As shown in FIGS. 38 and 39, the brake elastic piece 174 is a substantially arc-shaped piece, and includes a body portion 1744, a pivot portion 1746 arranged at the middle part of the body portion 1744, and an engaging tooth 1743 and a brake portion 1745 arranged at two ends of the body portion 1744 respectively. The pin shaft 1742 extends through the pivot portion 1746 and cooperates with the second pivot hole 134, so that the brake elastic piece 174 can rotate at a certain angle relative to the wheel seat 13. The engaging tooth 1743 can be engaged with the toothed plate 114 on the adapting base 11, thereby fixing the wheel seat 13 to the adapting base 11. When the engaging tooth 1743 is disengaged from the toothed plate 114, the wheel seat 13 can rotate freely relative to the adapting base 11. The brake portion 1745 can abut against the caster 15, thereby forming a braking effect. In some embodiments, a surface of the brake portion 1745 facing the caster 15 may also be provided with a plurality of protrusions 1748. The protrusions 1748 can be inserted into the texture on the surface of the caster 15, thereby further enhancing the braking effect. A reset elastic piece 1747 that is tilted upwardly is also formed at the middle part of the brake elastic piece 174. The reset elastic piece 1747 always abuts against the inner wall of the wheel seat 13.

The pedal 172 can rotate at a certain angle relative to the wheel seat 13, so as to have a horizontal state as shown in FIGS. 34 and 35 and an inclined state as shown in FIGS. 40 and 41. As shown in FIG. 36, when the pedal 172 is in the horizontal state, the pedal 172 is in contact with the brake elastic piece 174. The brake elastic piece 174 is in a first state shown in FIG. 36. At this time, the engaging tooth 1743 of the brake elastic piece 174 and the toothed plate 114 are in a non-engagement state, and the brake portion 1745 of the brake elastic piece 174 and the caster 15 are in a separated state. In this state, the wheel seat 13 can rotate freely relative to the adapting base 11, and the caster 15 can rotate freely forwardly and rearwardly relative to the wheel seat 13.

When braking is required, the pedal 172 can be depressed by foot to switch the pedal 172 from the horizontal state shown in FIG. 35 to the inclined state shown in FIG. 41. As shown in FIG. 42, during this process, the pedal 172 gradually applies a force to the brake elastic piece 174 to rotate it clockwise around the second pivot hole 134, the engaging tooth 1743 is lifted up and approaches the toothed plate 114, and the brake portion 1745 is lowered and approaches the caster 15. When the pedal 172 reaches the inclined state shown in FIG. 41, the brake elastic piece 174 is in a second state shown in FIG. 42. In this case, the engaging tooth 1743 is engaged with the toothed plate 114 on the one hand, and the brake portion 1745 abuts against the caster 15 on the other hand. Meanwhile, the brake elastic piece 174 and the pedal 172 abuts against each other to keep the pedal 172 in the inclined state. When the engaging tooth 1743 is engaged with the toothed plate 114, the wheel seat 13 is fixed to the adapting base 11, and does not rotate freely, thereby locking the rotation direction of the wheel seat 13 relative to the adapting base 11 to achieve the rotation orientation of the caster 15. When the brake portion 1745 abuts against the caster 15, the friction between the brake portion 1745 and the caster 15 also causes the caster 15 to slow down and eventually stop rotating, that is, the rotation of the caster 15 is locked, thereby achieving the dual effects of rotation orientation and braking. In this case, the wheeled movable device 100 can stay stably on flat ground or slopes, so that medical staff can transfer and settle animals on the carrier 30.

When it is no longer necessary for the wheeled movable device 100 to stop, the pedal 172 can be lifted up by the foot or by depressing another end of the pedal 172, so that the pedal 172 is switched from the inclined state shown in FIG. 41 to the horizontal state shown in FIG. 35, and the brake elastic piece 174 returns to the first state shown in FIG. 36. When the pedal 172 stops applying force to the brake elastic piece 174, the brake elastic piece 174 rotates counterclockwise around the second pivot hole 134 under the action of the reset elastic piece 1747, so that the engaging tooth 1743 of the brake elastic piece 174 are disengaged from the toothed plate 114, and the brake portion 1745 of the brake elastic piece 174 does not abut against the caster 15. In this case, the wheel seat 13 can rotate freely relative to the adapting base 11, and the caster 15 can rotate freely forwardly and rearwardly relative to the wheel seat 13.

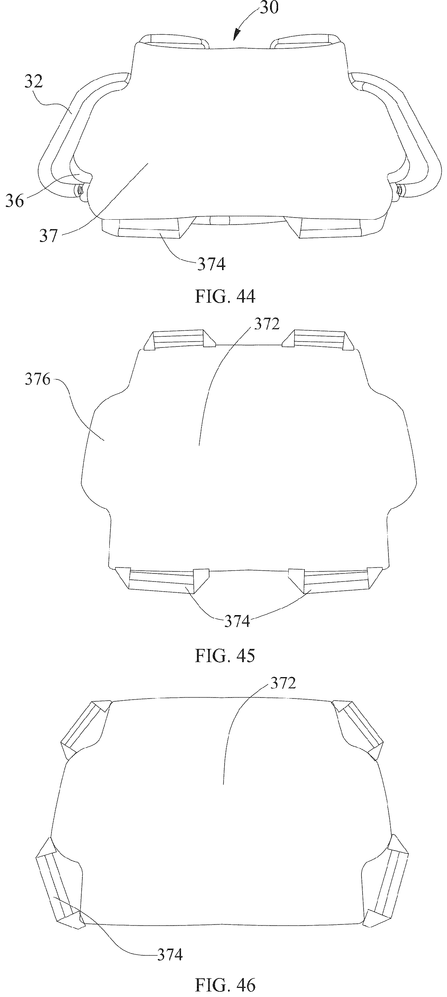

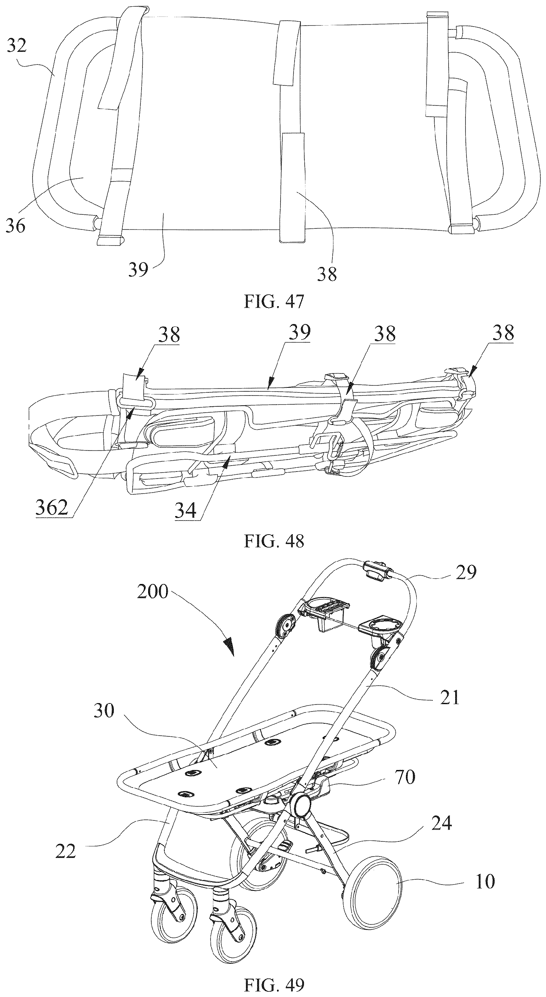

Referring to FIG. 44, a carrier 30 according to another embodiment of the present disclosure is substantially the same as the carrier 30 shown in FIG. 10, and includes the first support frame 32, the second support frame 34 (see FIG. 48), and the support plate 36 located between the first support frame 32 and the second support frame 34. The difference therebetween lies in that the carrier 30 shown in FIG. 44 further includes a carrying fabric 37 covering the support plate 36.

Referring to FIG. 45, the carrying fabric 37 includes a main body 372 and at least one handle 374 arranged at the edge of the main body 372. The length of the main body 372 is substantially the same as the length of the support plate, and the width of the main body 372 is greater than the width of the support plate 36. The main body 372 may be made of canvas or the like. Two handles 374 are respectively arranged on each of the two long sides of the main body 372 to facilitate the user to apply force with left and right hands at the same time. When a large pet is required to be transported onto the support plate 36 of the carrier 30, or to be transported away from the support plate 36, two users can stand on either side of the carrying fabric 37, each holding one handle 374 in each of left and right hands at the same time, so that the pet can be conveniently lifted and transported to a designated location. In addition, when the carrying fabric 37 is arranged on the support plate 36, the four handles 374 can be folded up or fixed to the bottom of the support plate 36 by Velcro, etc., so as to prevent the carrying fabric 37 from sliding freely relative to the support plate 36, and improve the appearance of the carrier 30.

In this embodiment, the carrying fabric 37 and the support plate 36 are independently provided, that is, the carrying fabric 37 can be laid on the support plate 36 without being fixed. It can be understood that the carrying fabric 37 may be also fixed on the support plate 36 to prevent the carrying fabric 37 from sliding off from the support plate 36. For example, in an embodiment, each of left and right ends of the carrying fabric 37 is provided with a pocket-shaped fixing portion 376. The fixing portion 376 can be sleeved on the edge of the support plate to achieve rapid fixing between the carrying fabric 37 and the support plate. Certainly, in other embodiments, Velcro-like fixing devices may be also correspondingly arranged on the carrying fabric 37 and the support plate 36 to facilitate rapid fixing between the two. In addition, in other embodiments, the support plate 36 may be also covered with a base fabric, and the carrying fabric 37 is arranged on the base fabric.

Referring to FIG. 46, in another embodiment, the four handles 374 are not arranged on opposite sides of the main body 372, but are arranged at positions adjacent to the four corners of the main body 372.

Referring to FIG. 47, a carrier 30 according to another embodiment of the present disclosure is substantially the same as the carrier 30 shown in FIG. 44, and includes the first support frame 32, the second support frame 34 (see FIG. 35), and the support plate 36 located between the first support frame 32 and the second support frame 34. The support plate 36 is also covered with the base fabric 39. The difference therebetween lies in that the carrier 30 further includes a restraining device in order to more firmly restrain the pet on the carrier 30. In this embodiment, the restraining device includes a restraint strap 38 arranged on the base fabric 39 or the support plate 36. The restraining device may also include one, two or more restraint straps 38. In this embodiment, the restraining device includes three restraint straps. The three restraint straps are in parallel and spaced apart, and extend in the width direction of the support plate 36. It can be understood that in another embodiment, the carrier 30 further includes a carrying fabric or a protective cover (not shown) covering the base fabric 39, and the restraining device is arranged on the carrying fabric.

As shown in FIG. 48, two ends of each restraint strap 38 extend through a buckle 362 arranged on the base fabric 39 or the support plate 36, respectively, so that the length of the restraint strap 38 on the front surface of the base fabric 39 can be adjusted to accommodate pets of different sizes. In other embodiments, the buckle 362 may also be arranged on the support frame arrangement, or on the carrying fabric. The buckle 362 may be a tri-glide buckle, a strap buckle, a locking ring, etc. In an embodiment, the locking ring is a double ring, and a free end of the restraint strap 38 can extend into it via one ring and then extends out of it via another ring. The length of the restraint strap 38 can be adjusted by pulling the free end of the restraint strap 38, which is easy to operate. In addition, the double ring structure can also increase the connection strength.

When the pet is placed on the base fabric 39, the lengths of the three straps 38, i.e., left, middle and right restraint straps 38, can be adjusted to stably restrain the pet on the support plate 36 to prevent the pet from moving arbitrarily and falling out of the carrier 30. Then, the carrier 30 can be lifted up on its front and back sides, to move the pet to a designated location.

Referring to FIG. 49, a wheeled movable device 200 according to another embodiment of the present disclosure includes a frame, an engaging base assembly 70 and a carrier 30. The carrier 30 in this embodiment has the same configuration as the carrier 30 of FIG. 10 in the embodiment described above, and is not repeatedly described herein. The frame in this embodiment has a configuration similar to a trolley, and includes a front rod 22, a rear rod 24, an upper rod 21, a handlebar 29 and a wheel assembly 10. The engaging base assembly 70 is mounted on the frame, and can lock and unlock the carrier 30. By operating the engaging base assembly 70, the user can conveniently and stably mount the carrier 30 on the frame, or remove it from the frame. The carrier 30 of the above embodiment has a variety of usage modes, and can not only cooperate with a movable bracket (such as the wheeled movable device shown in FIG. 17), but also cooperate with a trolley. This greatly meets the diverse needs of transporting different pets and has a wide range of applications.

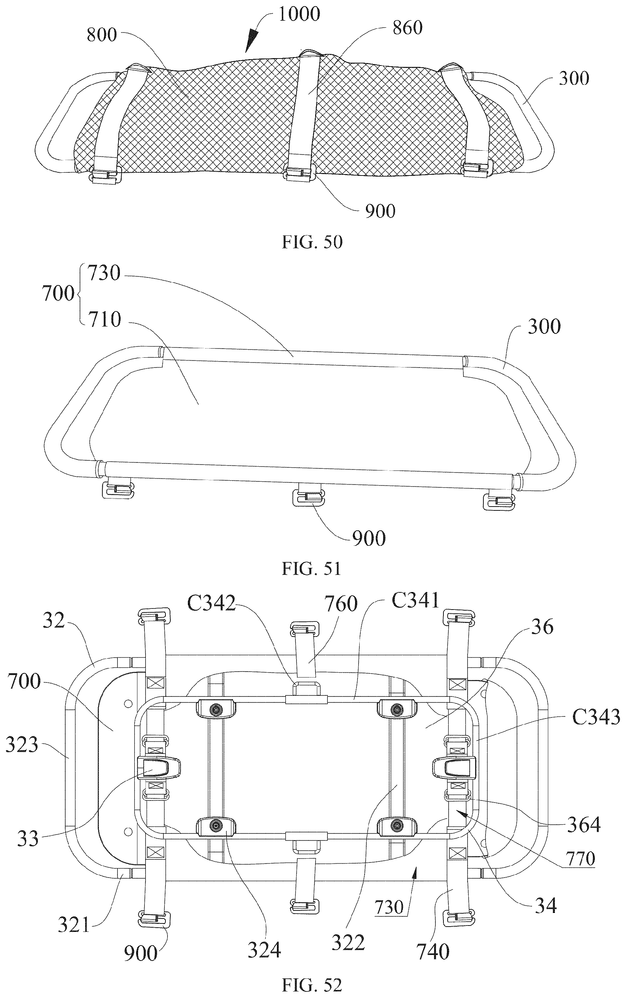

Referring to FIGS. 50 to 53, a carrier 1000 according to an embodiment of the present disclosure includes a support frame arrangement 300, a base fabric 700, a mesh fabric 800, and a buckle assembly. Any two of the base fabric 700, the mesh fabric 800, and the support frame arrangement 300 are removably connected to each other through the buckle assembly. The base fabric 700 is arranged on the support frame arrangement 300, and the mesh fabric 800 is arranged on the base fabric 700. A receiving space is formed between the base fabric 700 and the mesh fabric 800, for receiving pets or other items.

Referring to FIGS. 51 and 52, the support frame arrangement 300 includes the first support frame 32, the second support frame 34, and the support plate 36 located between the first support frame 32 and the second support frame 34. Furthermore, the support plate 36 can be arranged on the first support frame 32 and/or the second support frame 34.

The first support frame 32 is a substantially annular square frame (for example, but not limited to a rectangular frame), which includes two long sides 321 and two short sides 323 connected to the two long sides 321. Two parallel support rods 322 are arranged between the two long sides 321 of the first support frame 32. Two fixing bases 324 are also arranged on each support rod 322. The second support frame 34 has a shape substantially the same as that of the first support frame 32, and a size less than that of the first support frame 32. The second support frame 34 includes two long sides C341 and two short sides C343. The two long sides C341 are fixedly connected to the two support rods 322 respectively, through the four fixing bases 324. A fixing ring 342 is also arranged at each of the middle part of the two long sides C341.

The two strap guiding mechanisms 33 are respectively arranged on the second support frame 34 and/or the support plate 36. Specifically, each strap guiding mechanism 33 is arranged at the middle part of the short side C343 of the second support frame 34. It can be understood that in other embodiments, the second support frame 34 may be also omitted.

The support plate 36 is a substantially square flat plate (for example, but not limited to, a rectangular flat plate), which is fixed to the two support rods 322 by fasteners such as screws. The support plate 36 can be made of a rigid material (for example, a metal plate, a plastic plate) and/or a flexible material (for example, a canvas) according to actual application requirements, or made of a flexible material wrapped with a rigid material. In this embodiment, the support plate 36 can be selected as a metal plate wrapped with a flexible material, but which is not limited thereto.

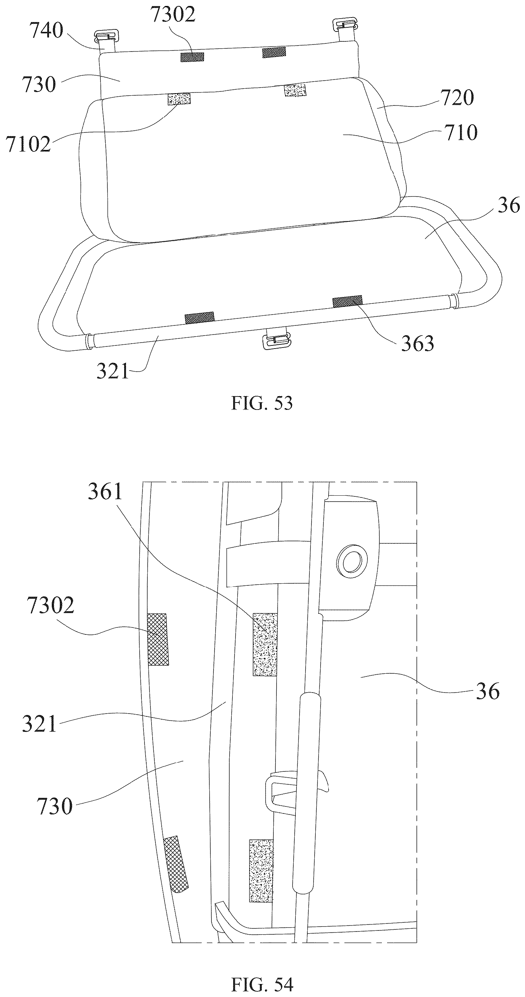

The base fabric 700 is covered on the support plate 36 and fixed to the support plate 36. The base fabric 700 includes a plurality of fixing mechanisms fixedly connected to the support plate 36. Specifically, as shown in FIGS. 51 and 53, the base fabric 700 includes a main body 710. The main body 710 is in a substantially square shape (for example, but not limited to a rectangle), and has area and shape similar to those of the support plate 36. The edge of the main body 710 is provided with a plurality of Velcro 7102, and a carrying surface of the support plate 36 is correspondingly provided with a plurality of Velcro 363. Through the bonding effect of the Velcro 7102 and the Velcro 363, the base fabric 700 can be relatively firmly covered on the support plate 36. It can be understood that in other embodiments, the Velcro 7102 and 363 may be also replaced by a hook and a fixing ring that cooperate with each other, a strap and a positioning ring that cooperate with each other, buttons that cooperate with each other, strap buckles that cooperate with each other, and other similar structures. Certainly, the base fabric 700 and the support plate 36 may be also positioned by sewing.

As shown in FIGS. 52 and 53, the base fabric 700 further includes two first fixing portions 720. The two first fixing portions 720 are respectively arranged at the two ends of the main body 710, that is, at the two short sides of the main body 710. Each first fixing portion 720 has a configuration similar to a pocket, which can be sleeved on one end of the support plate 36, that is, sleeved on the short side of the support plate 36. It can be understood that in other embodiments, the first fixing portion 720 and the support plate 36 may be also respectively provided with a hook and a fixing ring that cooperate with each other, a strap and a positioning ring that cooperate with each other, Velcros that cooperate with each other, buttons that cooperate with each other, and other similar mechanisms, to enhance the binding force between the first fixing portion 720 and the support plate 36. Certainly, the first fixing portion 720 and the support plate 36 may be also positioned by sewing.

As shown in FIGS. 51 and 53, the base fabric 700 further includes two second fixing portions 730. The two second fixing portions 730 are respectively arranged on two sides of the main body 710, that is, at the two long sides of the main body 710. The second fixing portions 730 can respectively wrap and be respectively fixed on the two long sides 321 of the first support frame 32. Specifically, as shown in FIGS. 53 and 54, the second fixing portion 730 is provided with a Velcro 7302. An edge of the bottom of the support plate 36 is also correspondingly provided with a Velcro 361. After the second fixing portion 730 winds around the long side 321 of the first support frame 32, the second fixing portion 730 is fixed on the long side 321 by the bonding effect of the Velcro 7302 and the Velcro 361. It can be understood that in other embodiments, the Velcros 7302 and 361 may be also replaced by a hook and a fixing ring that cooperate with each other, a strap and a positioning ring that cooperate with each other, buttons or strap buckles that cooperates with each other, or the like. Certainly, the second fixing portion 730 and the support plate 36 may be also positioned by sewing.

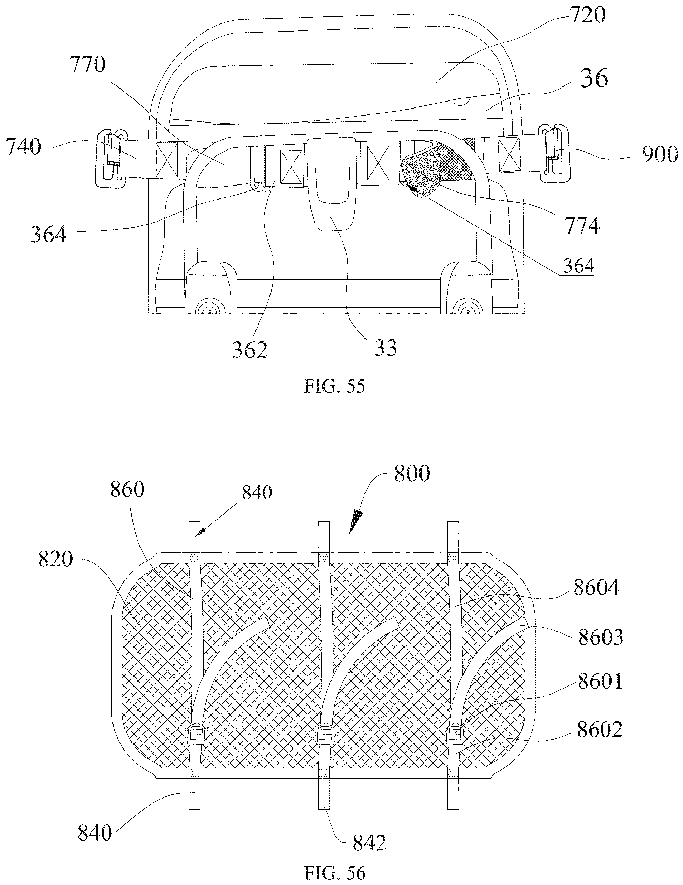

As shown in FIG. 55, in some embodiments, the base fabric 700 further includes four fixing straps 770 located at the four corners of the main body 710. As long as connection positions between individual fixing straps 770 and the main body 710 are respectively adjacent to the four corners of the main body 710, it is fallen within the protection scope of the present disclosure. In some embodiments, the connection position between each fixing strap 770 and the base fabric 700 is on the respective second fixing portion 730. In some embodiments, the connection position between each fixing strap 770 and the base fabric 700 is on the main body 710.

Each fixing strap 770 is provided with a seventh fixing portion 774. A plurality of positioning pieces 362 and positioning rings 364 connected to the positioning pieces 362 are arranged on the support plate 36. The positioning pieces 362 can be fixed to the support plate 36 by, for example, sewing or the like. More specifically, the positioning pieces 362 are fixed to the bottom surface of the support plate 36. The strap guiding mechanism 33 corresponds to the middle position of the bottom surface of the support plate 36, and the strap guiding mechanism 33 is adjacent to the short side of the support plate 36. The configuration of the strap guiding mechanism 33 can refer to the configuration of the strap guiding mechanism 33 illustrated in FIGS. 12, 14 to 16 of the present disclosure. More specifically, the strap guiding mechanism 33 includes a base housing 331 and a cover housing 332. The base housing 331 is fixed to the support plate 36, and the cover housing 332 is fixed to the second support frame 34. Two positioning pieces 362 are respectively located on two sides of the strap guiding mechanism 33. That is, positioning pieces 362 are arranged on the two sides of each strap guiding mechanism 33. Two positioning rings 364 are movably arranged at the ends of the two positioning pieces 362. More specifically, the two positioning rings 364 are arranged at the ends of the two positioning pieces 362 that are away from each other. In this embodiment, the positioning ring 364 can be a double ring, and the seventh fixing portion 774 is a Velcro. The double ring of the positioning ring 364 includes a first ring and a second ring. After extending through the first ring, the fixing strap 770 winds around the second ring, and then extends out through the first ring in the opposite direction, and then fixed to itself through the Velcro of the seventh fixing portion 774 (see FIG. 55). Through the bonding effect of the Velcro, the base fabric 700 can be more firmly fixed to the support plate 36. It can be understood that the seventh fixing portion 774 can also include mechanisms such as buttons that cooperate with each other, a hook and a ring that cooperate with each other.

As shown in FIGS. 53 and 55, the base fabric 700 further includes a plurality of first connecting straps 740 extending outwardly from the edge of the main body 710. The buckle assembly includes a first buckle assembly 900. Specifically, one ends of the plurality of first connecting straps 740 are fixed to the four corners of the main body 710 by sewing or the like, and other ends of the plurality of first connecting straps 740 extend outwardly. As long as the connection positions between the first connecting straps 740 and the base fabric 700 are close to the four corners of the main body 710, respectively, it is fallen within the protection scope of the present disclosure. In some embodiments, the connection position between each first connecting strap 740 and the base fabric 700 is on the second fixing portion 730. In some embodiments, the connection position between each first connecting strap 740 and the base fabric 700 is on the main body 710.

Each first connecting strap 740 is configured to be connected to the corresponding first buckle assembly 900. In this embodiment, each first connecting strap 740 is correspondingly arranged at one end of the fixing strap 770, thereby improving the connection strength of the first connecting strap 740. Specifically, in some embodiments, each first connecting strap 740 and the corresponding fixing strap 770 can be integrally formed, and middle sections of the first connecting straps 740 are sewn to the four corners of the main body 710, respectively. In other embodiments, the fixing strap 770 can be formed by extending the edge of the main body 710 outwardly (the fixing strap 770 be formed by extending the edge of the second fixing portion 730 is also be fallen within the protection scope of the present disclosure). The first connecting strap 740 is sewn to the main body 710 or the second fixing portion 730 at a position corresponding to the fixing strap 770, and extends in a direction opposite to the extending direction of the fixing strap 770.

As shown FIG. 56, the shape of the mesh fabric 800 is substantially square (for example, but not limited to, rectangular). The two long sides of the mesh fabric 800 are removably connected to the two second fixing portions 730 located on two sides of the base fabric 700 through the first buckle assemblies 900, so as to facilitate the loading of items into the receiving space. Each of the two short sides of the mesh fabric 800 is further provided with a mesh fixing portion 820. The shape of the mesh fixing portion 820 matches the shapes of the two short sides of the support plate 36, and has a configuration similar to a pocket, which can be sleeved on the end of the support plate 36 corresponding to the short side thereof, for example, sleeved on the first fixing portion 720 of the base fabric 700.

At least one adjusting strap 860 is further arranged on the mesh fabric 800. In this embodiment, three adjusting straps 860 are provided. The three adjusting straps 860 are arranged in parallel and extend in the width direction of the mesh fabric 800. It can be understood that in other embodiments, one, two, four or more adjusting straps 860 may also be provided. Each adjusting strap 860 includes a fixed section 8602 and a separating section 8604 connected to each other. The fixed section 8602 is fixed to the mesh fabric 800 by sewing or the like, and the separating section 8604 is not fixed to the mesh fabric 800, that is, it is in a separated state. A strap buckle 8601 is also fixedly arranged at the tip end of the fixed section 8602. The tip end 8603 of the separating section 8604 extends through the strap buckle 8601 and can slide back and forth relative to the strap buckle 8601. The available length of the separation section 8604 can be adjusted by the strap buckle 8601, thereby adjusting the size of the receiving space formed by the base fabric 700 and the mesh fabric 800, to match the size of the pet being carried.

The edge of the mesh fabric 800 is further provided with a plurality of second connecting straps 840 extending outwardly. In this embodiment, each second connecting strap 840 is correspondingly arranged at one end of the adjusting strap 860. Specifically, in some embodiments, each second connecting strap 840 and the corresponding adjusting strap 860 can be integrally formed, that is, each second connecting strap 840 is correspondingly formed by extending the edge of the fixed section 8602 and the separating section 8604 outwardly. In other embodiments, the second connecting strap 840 may be also sewn to the edge of the fixed section 8602 and the edge of t the separating section 8604, and extend in a direction away from the mesh fabric 800. Since the second connecting strap 840 is not directly connected to the mesh fabric 800, and is connected to the adjusting strap 860, when the second connecting strap 840 is subjected to a tension force, the tension force can be transmitted to the adjusting strap 860 to disperse the force on the mesh fabric 800, so as to avoid deformation or tearing of the mesh fabric 800 due to excessive force.

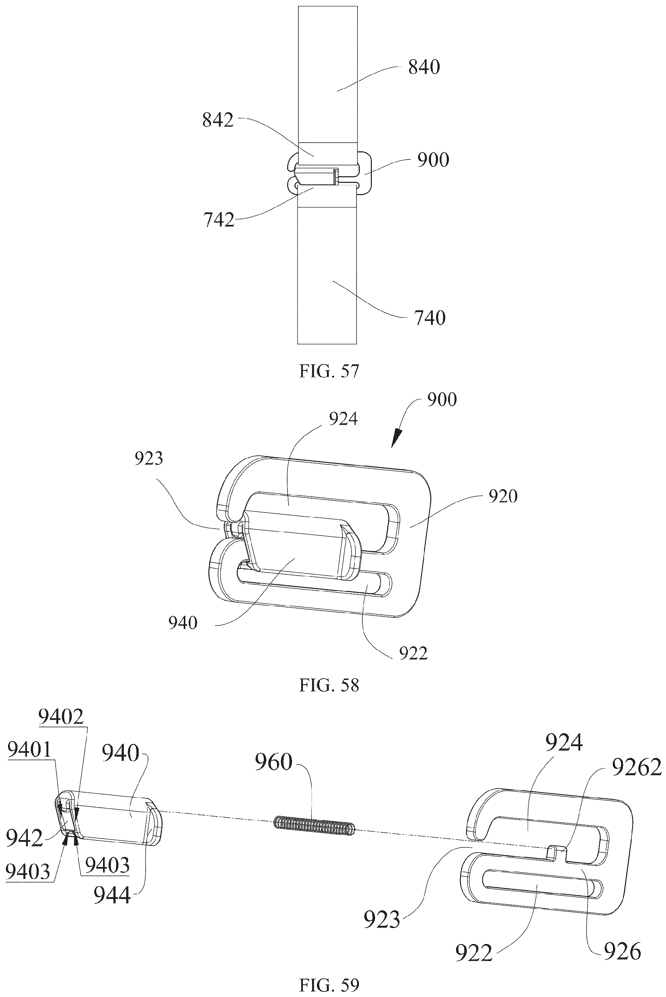

Referring to FIG. 57, an end of the first buckle assembly 900 is fixedly connected to the base fabric 700 by the first connecting strap 740, and another end of the first buckle assembly 900 is movably connected to the mesh fabric 800 by the second connecting strap 840.

Specifically, referring to FIGS. 58 to 61, the first buckle assembly 900 includes a buckle body 920 and a locking member 940. The buckle body 920 is similar in shape to a tri-glide buckle. The buckle body 920 is provided with a first connecting hole 922 and a second connecting hole 924 that are arranged in parallel. The first connecting hole 922 and the second connecting hole 924 are both elongated holes, and the first connecting hole 922 and the second connecting hole 924 are separated by a support bar 926. The first connecting hole 922 is a fully enclosed hole. An end of the first connecting strap 740 is provided with a first loop 742 configured to extend through the first connecting hole 922 and is fixedly connected to the buckle body 920. The edge of the second connecting hole 924 is also provided with a passage 923 that is in communication with the outside. An end of the second connecting strap 840 is provided with a second loop 842 configured to extend through the passage 923 to enter the second connecting hole 924. When the second loop 842 enters the second connecting hole 924, the second connecting strap 840 is connected to the buckle body 920, thereby achieving the fixation between the mesh fabric 800 and the base fabric 700; when the second loop 842 extends through the passage 923 and is separated from the second connecting hole 924, the second connecting strap 840 is separated from the buckle body 920, thereby achieving the separation of the mesh fabric 800 from the base fabric 700.

In some embodiments, the edge of the first connecting hole 922 of the buckle body 920 may also be provided with a passage in communication with the outside. Such passage may also be closed or opened by the corresponding locking member 940, so that the second loop 842 is allowed to enter and to be locked in the buckle body 920 or the second loop 842 is allowed to move away from the buckle body 920. In some embodiments, the buckle body 920 may be S-shaped.

As shown in FIG. 59, the locking member 940 is substantially in the shape of a square sleeve. An accommodating groove 942 through which the support bar 926 can extend is arranged in the locking member 940. The locking member 940 is slidably arranged on the support bar 926 and can move between a first position where the locking member 940 closes the passage 923 and a second position where the locking member 940 opens the passage 923.

Referring to FIG. 59, the locking member 940 is substantially U-shaped. The locking member 940 includes two opposite side walls 9401 and 9402. A tip end of at least one of the side walls 9401 and 9402 may be provided with an engaging boss 9403 protruding toward the inside of the U-shaped structure. The side walls 9401 and 9402 may elastically expand so that the support bar 926 may enter the interior of the accommodating groove 942 or move out of the accommodating groove 942. When the support bar 926 enters the accommodating groove 942, the side walls 9401 and 9402 are reset, and the engaging boss 9403 abuts against the support bar 926, and the engaging boss 9403 can prevent the support bar 926 from being accidentally separated from the accommodating groove 942.

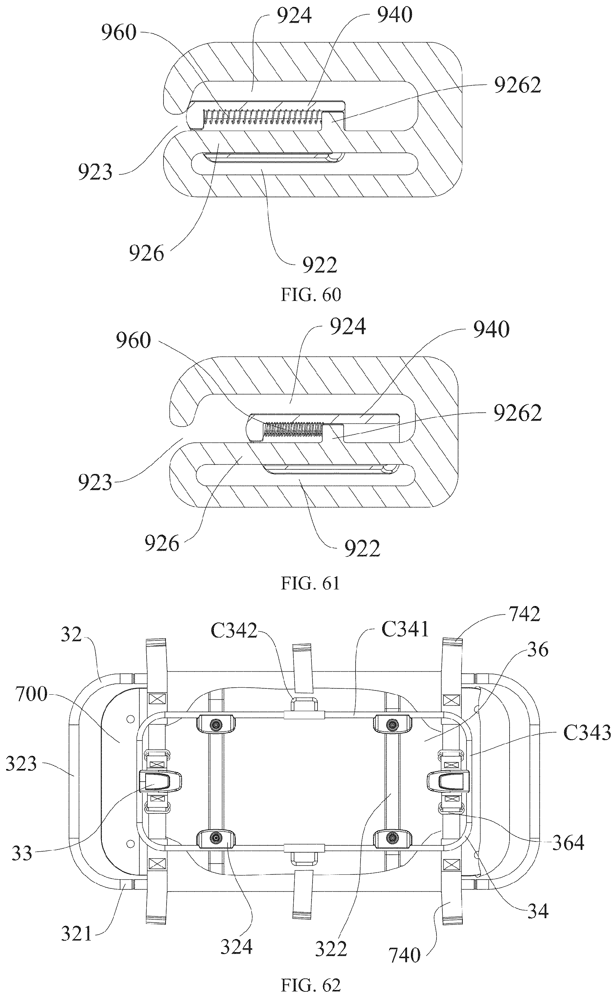

Referring to FIGS. 59 and 60, in this embodiment, the first buckle assembly 900 further includes an elastic member 960 located in the accommodating groove 942. The elastic member 960 is configured to drive the locking member 940 to move toward the first position. In this embodiment, the elastic member 960 is a compression spring, and a stopper 9262 protruding upwardly is also arranged on the support bar 926. An end of the spring abuts against the stopper 9262, and another end of the spring abuts against the inner wall of the accommodating groove 942. Therefore, in a normal state, the locking member 940 stays in the first position shown in FIG. 58 under the action of the spring. In this case, the locking member 940 closes the passage 923, that is, prevents the second loop 842 of the second connecting strap 840 from extending through the passage 923 and entering the second connecting hole 924, or extending out via the passage 923 to be separated from the second connecting hole 924. Furthermore, an operating part 944 protruding outwardly is further provided at an end of the locking member 940 away from the passage 923.

Referring to FIG. 50 again, when the carrier 1000 is configured to transport a pet, the pet can be placed on the base fabric 700 supported by the support plate 36 first, and then the mesh fabric 800 can be covered on the base fabric 700. Then, the user applies force to the operating part 944 of the locking member 940 to compress the elastic member 960 and slide the locking member 940 from the first position toward the second position. As shown in FIG. 61, when the locking member 940 slides to the second position, the passage 923 is in an opened state. In this case, the second loop 842 of the second connecting strap 840 can extend through the passage 923 and enter the second connecting hole 924. After stopping applying force to the operating part 944, the locking member 940 returns from the second position to the first position under the action of the restoring force of the elastic member 960, thereby closing the passage 923. In this case, the second loop 842 is not able be separated from the second connecting hole 924, that is, the mesh fabric 800 and the base fabric 700 are fixed to each other. Then, the length of the adjusting strap 860 can be adjusted to adjust the size of the receiving space jointly formed by the base fabric 700 and the mesh fabric 800, to enable it to match the size of the pet loaded. When the pet is transported to the designated location, the user can apply force to the operating part 944 of the locking member 940 again, to overcome the elastic force of the elastic member 960 and slide the locking member 940 from the first position toward the second position. When the locking member 940 is separated from the passage 923, the passage 923 is in an opened state. In this case, the second loop 842 of the second connecting strap 840 can extend through the passage 923 and be separated from the second connecting hole 924, thereby separating the mesh fabric 800 from the base fabric 700. At this time, the pet can be removed from the carrier 100 relatively easily.

The carrier 100 includes the buckle body 920 with the passage 923, and the locking member 940 that can selectively open or close the passage. The first connecting strap 740 and the second connecting strap 840 can be quickly connected to each other by simply operating the locking member 940, thereby facilitating the connection, fixation and removal of the mesh fabric 800, improving the user's operating experience, and improving the timeliness of pet treatment, thereby avoiding delays in pet treatment time due to the inconvenience of connecting, fixation or removal of the mesh fabric 800.

It can be understood that in other embodiments, the stopper 9262 and the operating part 944 may be also omitted.

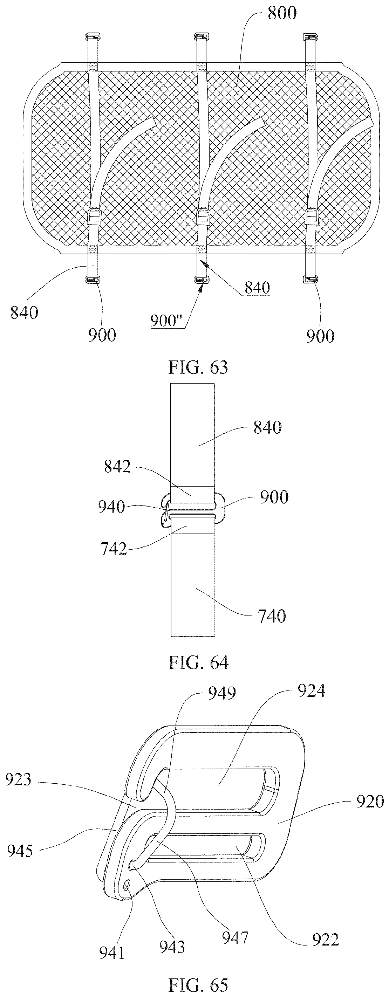

Referring to FIGS. 62 and 63, in another embodiment, the configuration of the first buckle assembly 900 is substantially the same as that of the first buckle assembly 900 shown in FIGS. 58 and 59. The difference therebetween lies in that an end of the first buckle assembly 900 is fixedly connected to the second connecting strap 840 of the mesh fabric 800, that is, the second loop 842 extends through and is fixed to the first connecting hole 922. At this time, another end of the first buckle assembly 900 may be also movably connected to the first connecting strap 740 of the base fabric 700, that is, the first loop 742 extends through the passage 923. In this way, after the mesh fabric 800 is removed from the base fabric 700, the first buckle assembly 900 is removed together with the mesh fabric 800, and is not suspended on the edge of the base fabric 700, so that the support frame arrangement 300 appears cleaner and tidier. It can be understood that in other embodiments, the first loop 742 may be also directly arranged on the base fabric 700, and the first connecting strap 740 may be also omitted.

Referring to FIGS. 64 and 65, a carrier according to another embodiment of the present disclosure is similar to the carrier 1000 in the embodiment shown in FIG. 50, and includes the support frame arrangement, the base fabric, the mesh fabric, and the first buckle assembly 900. The difference therebetween lies in that the configuration of the first buckle assembly 900 is varied.

The first buckle assembly 900 includes the buckle body 920 and the locking member 940. The buckle body 920 is similar in shape to a tri-glide buckle. A first connecting hole 922 and a second connecting hole 924 are arranged in parallel on the buckle body 920. The first connecting hole 922 is a fully enclosed hole, and the first loop 742 of the first connecting strap 740 extends through the first connecting hole 922 and is fixedly connected to the buckle body 920. The edge of the second connecting hole 924 is further provided with a passage 923 in communication with the outside. The second loop 842 of the second connecting strap 840 extends through the passage 923 to enter the second connecting hole 924. In this embodiment, the locking member 940 is substantially in the shape of a torsion spring, and is made of an elastically deformable material (such as metal). Specifically, the locking member 940 includes a first pivot portion 941, a second pivot portion 943, a first force-applying portion 945, a second force-applying portion 947 and a blocking portion 949. The first pivot portion 941 and the second pivot portion 943 respectively extend through the buckle body 920, and are pivotable with respect to the buckle body 920. An axis of the first pivot portion 941 and an axis of the second pivot portion 943 are staggered from each other. The first force-applying portion 945 is connected to the first pivot portion 941, and the second force-applying portion 947 is connected to the second pivot portion 943. The blocking portion 949 is connected between the first force-applying portion 945 and the second force-applying portion 947, and can move between a first position of closing the passage 923 and a second position of opening the passage 923. In a normal state, the locking member 940 stays at the first position shown in FIG. 65. At this position, the blocking portion 949 abuts against the hole wall of the second connecting hole 924, thereby closing the passage 923.

When the first buckle assembly 900 is in use, the user can apply force to the first force-applying portion 945 and the second force-applying portion 947 to rotate the locking member 940 about the first pivot portion 941 and the second pivot portion 943, thereby moving the blocking portion 949 from the first position toward the second position in the direction away from the passage 923. When the blocking portion 949 is separated from the passage 923, the passage 923 is in the opened state. In this case, the second loop 842 of the second connecting strap 840 can extend through the passage 923 and enter the second connecting hole 924. After stopping applying force to the first force-applying portion 945 and the second force-applying portion 947, the blocking portion 949 returns from the second position to the first position under the action of the restoring force of the locking member 940 itself, thereby closing the passage 923. In this case, the second loop 842 is not able to be separated from the second connecting hole 924, that is, the mesh fabric 800 and the base fabric 700 are fixed to each other.

It can be understood that in other embodiments, the second loop 842 of the second connecting strap 840 extends through the first connecting hole 922 and is fixedly connected to the buckle body 920. In this case, the first loop 742 of the first connecting strap 740 extends through the passage 923 to enter the second connecting hole 924.

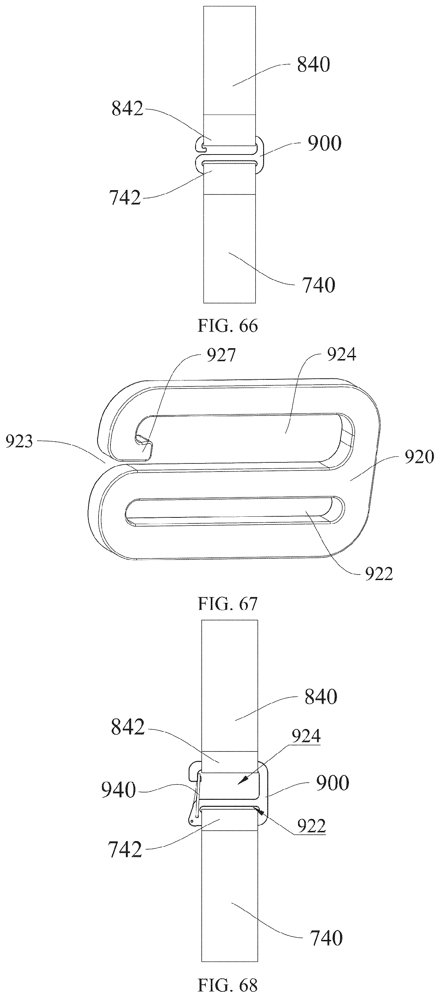

Referring to FIGS. 66 and 67, a carrier according to another embodiment of the present disclosure is similar to the carrier 1000 in the embodiment shown in FIG. 50, and includes the support frame arrangement, the base fabric, the mesh fabric and the first buckle assembly 900. The difference therebetween lies in that the configuration of the first buckle assembly 900 is varied.

In this embodiment, the first buckle assembly 900 includes a buckle body 920. The edge of the buckle body 920 close to the passage 923 is provided with a limiting protrusion 927 protruding toward the second connecting hole 924. In this embodiment, the spacing of the passage 923 is relatively small, which is substantially equal to or slightly greater than the thickness of the second connecting strap 840. Certainly, the spacing of the passages 923 may be also slightly less than the thickness of the second connecting strap 840. Therefore, when the second loop 842 of the second connecting strap 840 extends through the passage 923 and enters the second connecting hole 924, even if a locking member is not provided, the second loop 842 is difficult to extend through the passage 923 and disengage from the second connecting hole 924 under the action of the limiting protrusion 927, thereby achieving the fixation between the mesh fabric 800 and the base fabric 700. In another embodiment, the longitudinal cross-sectional area of the limiting protrusion 927 may also be gradually increased, so as to further compress the spacing of the passage 923, thereby increasing the difficulty of the second loop 842 extending through the passage 923, thereby achieving the fixation between the mesh fabric 800 and the base fabric 700.

For example, in some embodiments, the passage 923 is, for example, trumpet-shaped. In a direction in which the second connecting strap 840 extends into the passage 923 from the outside, the size of the passage 923 gradually decreases, and the narrowest part of the passage 923 is, for example, less than the thickness of the second connecting strap 840. In this way, the second loop 842 is easily guided into the second connecting hole 924 via the passage 923, but is not easy to move out from the second connecting hole 924 via the passage 923.

It can be understood that in other embodiments, the passage 923 and the limiting protrusion 927 may be also arranged at the edge of the first connecting hole 922, and in this case, the second connecting hole 924 is a fully enclosed hole. In addition, in some embodiments, the passage 923 and the limiting protrusion 927 may be also arranged at each of the edge of the first connecting hole 922 and the edge of the second connecting hole 924. In some embodiments, the buckle body 920 can be S-shaped.

Referring to FIGS. 68 to 70, a carrier 1000 according to another embodiment of the present disclosure is similar to the carrier 1000 in the embodiment shown in FIG. 50, and includes the support frame arrangement, the base fabric, the mesh fabric and the first buckle assembly 900. The difference therebetween lies in that the configuration of the first buckle assembly 900 is varied.

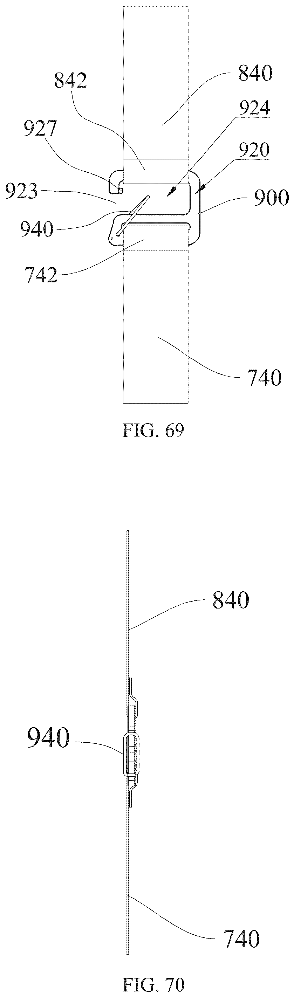

In this embodiment, the first buckle assembly 900 includes the buckle body 920 and the locking member 940. The edge of the buckle body 920 close to the passage 923 is provided with the limiting protrusion 927 protruding toward the second connecting hole 924. The configuration of the locking member 940 in this embodiment is the same as that of the locking member 940 in the embodiment shown in FIG. 64, which is not repeatedly described herein. In a normal state, the locking member 940 stays at a first position shown in FIG. 68. At this position, the blocking portion 949 is engaged with the limiting protrusion 927, thereby closing the passage 923. When the user applies force to the first force-applying portion 945 and the second force-applying portion 947 of the locking member 940, the locking member 940 can rotate with the first pivot portion 941 and the second pivot portion 943 as the axis, so that the blocking portion 949 moves from a first position of abutting against the limiting protrusion 927 toward a second position shown in FIG. 69. When the blocking portion 949 is separated from the passage 923, the passage 923 is in an opened state. In this case, the second loop 842 of the second connecting strap 840 can extend through the passage 923 and enter the second connecting hole 924. After stopping applying force to the first force-applying portion 945 and the second force-applying portion 947, the blocking portion 949 returns from the second position to the first position of abutting against the limiting protrusion 927 under the action of the restoring force of the locking member 940 itself, thereby closing the passage 923. In this case, the second loop 842 is not able to be separated from the second connecting hole 924, and the mesh fabric 800 and the base fabric 700 are fixed to each other.

It can be understood that in other embodiments, the second loop 842 of the second connecting strap 840 extends through the first connecting hole 922 and is fixedly connected to the buckle body 920. In this case, the first loop 742 of the first connecting strap 740 extends through the passage 923 and enters the second connecting hole 924.

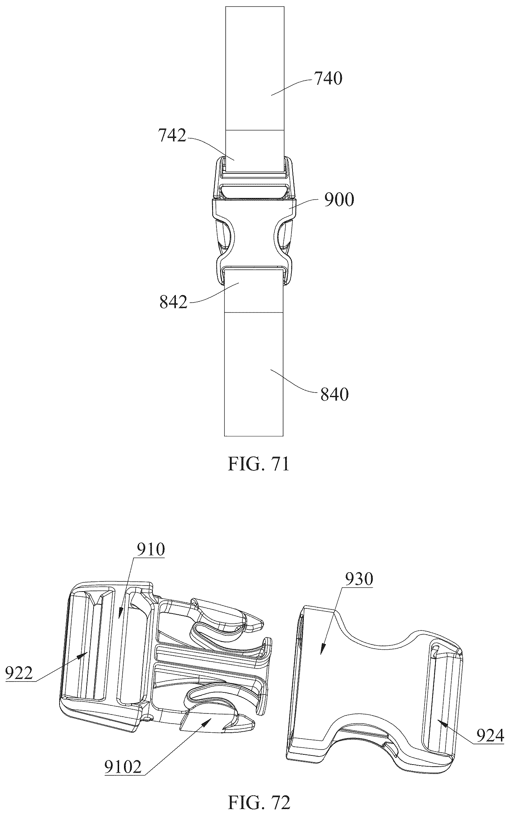

Referring to FIGS. 71 and 72, a carrier according to another embodiment of the present disclosure is similar to the carrier 1000 in the embodiment shown in FIG. 50, and includes the support frame arrangement, the base fabric, the mesh fabric, and the first buckle assembly 900. The difference therebetween lies in that the configuration of the first buckle assembly 900 is varied.

In this embodiment, the first buckle assembly 900 includes a male buckle 910 and a female buckle 930. The male buckle 910 is provided with a first connecting hole 922, and the female buckle 930 is provided with a second connecting hole 924. A first loop 742 of the first connecting strap 740 extends through the first connecting hole 922 and is fixedly connected to the male buckle 910, so that the male buckle 910 is fixedly connected to the base fabric 700. A second loop 842 of the second connecting strap 840 extends through the second connecting hole 924 and is fixedly connected to the female buckle 930, so that the female buckle 930 is fixedly connected to the mesh fabric 800.

When the first buckle assembly 900 is in use, the male buckle 910 can be inserted into the female buckle 930, so that the mesh fabric 800 and the base fabric 700 are fixed to each other, which is very convenient and quick. Similarly, when it is required to separate the mesh fabric 800 from the base fabric 700, elastic arms 9102 on two sides of the male buckle 910 can be pressed, so that the male buckle 910 can be removed from the female buckle 930 more conveniently.

It can be understood that in other embodiments, the male buckle 910 may be also fixedly connected to the mesh fabric 800 by the second connecting strap 840, and in this case, the female buckle 930 is fixedly connected to the base fabric 700 by the first connecting strap 740.

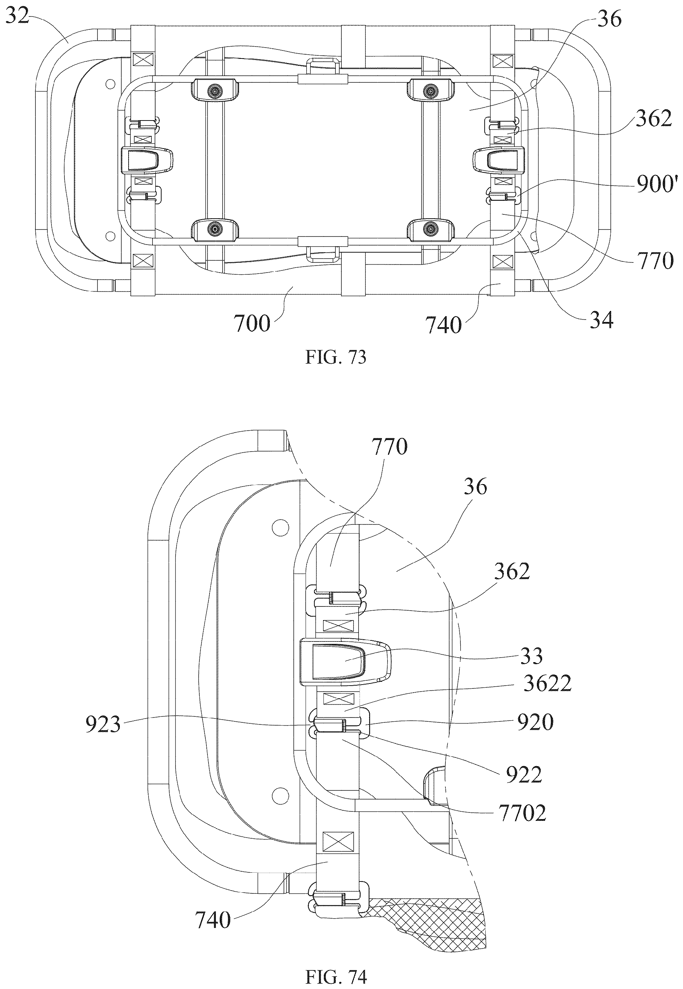

Referring to FIG. 73 to FIG. 74, a carrier according to another embodiment of the present disclosure is similar to the carrier 1000 in the embodiment shown in FIGS. 52 and 62, and includes the support frame arrangement 300, the base fabric 700, the mesh fabric and a second buckle assembly 900'. The difference therebetween lies in that the positioning ring 364 shown in FIGS. 52 and 55 is replaced by the second buckle assembly 900'. In other words, the buckle assembly includes a second buckle assembly 900 ' arranged between the base fabric 700 and the support frame arrangement 300.

The support frame arrangement 300 includes the first support frame 32, the second support frame 34, and the support plate 36 arranged between the first support frame 32 and the second support frame 34.

The base fabric 700 is covered on the support plate 36 and fixed to the support plate 36. A plurality of positioning pieces 362 are provided at two ends of the support plate 36. The positioning pieces 362 can be fixed to the support plate 36 by, for example, sewing or the like. More specifically, the positioning pieces 362 are fixed to the bottom surface of the support plate 36. The strap guiding mechanism 33 corresponds to the middle position of the bottom surface of the support plate 36, and the strap guiding mechanism 33 is close to the short side of the support plate 36. The two positioning pieces 362 are respectively located on two sides of the strap guiding mechanism 33. That is, positioning pieces 362 are respectively arranged on two sides of each strap guiding mechanism 33. The base fabric 700 includes a main body 710 and four fixing straps 770 located at the four corners of the main body 710. As long as the connection positions between the individual fixing straps 770 and the main body 710 are adjacent to the four corners of the main body 710 respectively, it is fallen within the protection scope of the present disclosure. In some embodiments, the connection position between each fixing strap 770 and the base fabric 700 is on the respective second fixing portion 730. In some embodiments, the connection position between each fixing strap 770 and the base fabric 700 is on the main body portion 710.

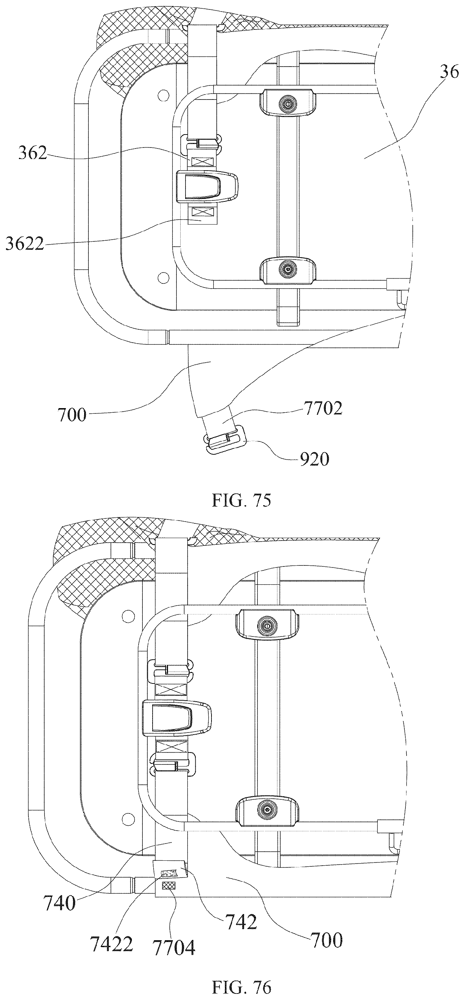

The second buckle assembly 900' is arranged between the positioning piece 362 and the fixing strap 770. In this embodiment, the specific configuration of the second buckle assembly 900' shown in FIG. 73 is substantially the same as the first buckle assembly 900 shown in FIG. 58, and therefore it is not repeatedly described herein. A third loop 7702 is provided at an end of the fixing strap 770, and extends through the first connecting hole 922 and is fixedly connected to the buckle body 920. A fourth loop 3622 is provided at an end of the positioning piece 362, and extends through the passage 923 to enter the second connecting hole 924. As shown in FIGS. 74 and 75, when the fourth loop 3622 enters the second connecting hole 924, the positioning piece 362 is connected to the buckle body 920, so that the base fabric 700 is fixed to the support plate 36. When the fourth loop 3622 extends through the passage 923 and is separated from the second connecting hole 924, the positioning piece 362 is separated from the buckle body 920, so that the base fabric 700 is separated from the support plate 36.

It can be understood that in another embodiment, the fourth loop 3622 of the positioning piece 362 extends through the first connecting hole 922 and is fixedly connected to the buckle body 920. In this case, the third loop 7702 of the fixing strap 770 can extend through the passage 923 to enter the second connecting hole 924, so that the base fabric 700 is also removably connected to the support plate 36.

It can be understood that the configuration of the second buckle assembly 900' shown in FIGS. 73 to 75 may be also replaced by the configuration of the first buckle assembly 900 shown in FIGS. 65, 67, 69 and 72.

Referring to FIGS. 74 and 76, in this embodiment, the base fabric 700 includes a plurality of first connecting straps 740 extending outwardly from the edge of the main body 710. Each first connecting strap 740 is respectively arranged at an end of the fixing strap 770, thereby improving the connection strength of the first connecting strap 740. Specifically, in some embodiments, each first connecting strap 740 and the corresponding fixing strap 770 may be integrally formed, and the middle sections of the first connecting straps 740 are sewn to the four corners of the main body 710, respectively. As long as the connection positions between the first connecting straps 740 and the base fabric 700 are close to the four corners of the main body 710 respectively, it is fallen within the protection scope of the present disclosure. In some embodiments, the connection position between each first connecting strap 740 and the base fabric 700 is on the second fixing portion 730. In some embodiments, the connection position between each first connecting strap 740 and the base fabric 700 is on the main body 710. In other embodiments, the fixing strap 770 can be formed by extending the edge of the main body 710 outwardly (the fixing strap 770 being also formed by extending the edge of the second fixing portion 730 outwardly is also fallen within the protection scope of the present disclosure), and the first connecting strap 740 is sewn to the main body 710 at a position corresponding to the fixing strap 770, and extends in a direction opposite to the extending direction of the fixing strap 770.

Referring to FIG. 76, an end of the first connecting strap 740 is provided with a first loop 742 configured to extend through the passage 923 of the first buckle assembly 900. A Velcro 7422 is arranged on a side of the first loop 742 facing the base fabric 700, and a Velcro 7704 is arranged on the base fabric 700 accordingly. When the first loop 742 is not connected to the first buckle assembly 900, the first loop 742 can be kept in a state of being attached to the base fabric 700 by the bonding effect of the Velcros 7422 and 7704, so as to prevent the first loop 742 from swinging freely and affecting the use, and to improve the overall appearance of the product. It can be understood that in other embodiments, the Velcros 7422 and 7704 may be also replaced by mechanisms such as buttons that cooperate with each other, a hook and a ring that cooperate with each other, etc. Certainly, if the sewing length between the first connecting strap 740 and the main body 710 is extended, the Velcros 7422 and 7704 may be also omitted.

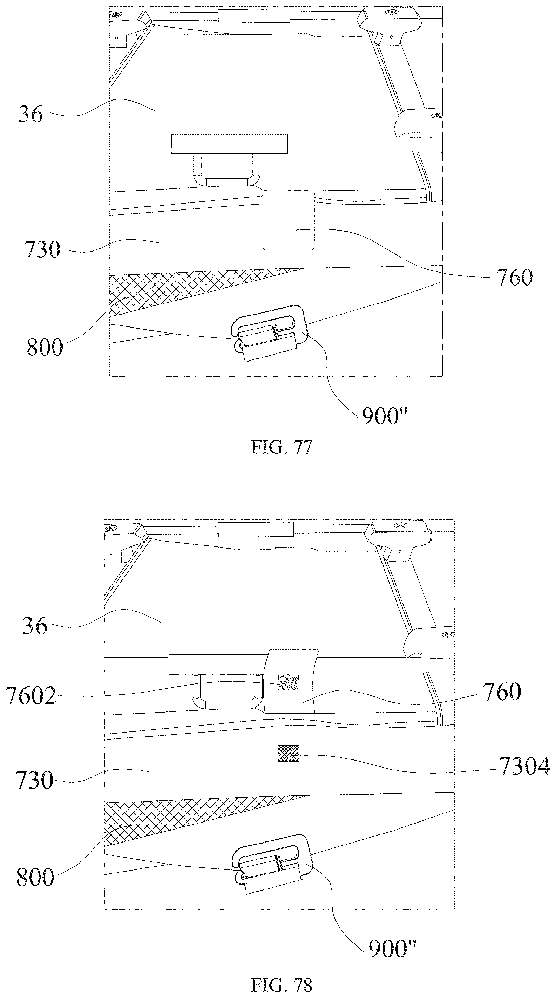

Referring to FIGS. 77 and 78, the buckle assembly further includes a third buckle assembly 900" arranged between the mesh fabric 800 and the support frame arrangement 300. In this embodiment, the middle edge of the support plate 36 extends outwardly to form a plurality of third connecting straps 760. The edge of the mesh fabric 800 is further provided with a plurality of second connecting straps 840 extending outwardly (see FIG. 63). The specific configuration of the third buckle assembly 900" shown in FIGS. 77 and 78 is substantially the same as that of the first buckle assembly 900 shown in FIG. 58, and therefore it is not repeatedly described herein. An end of the third buckle assembly 900" is fixedly connected to the second connecting strap 840 of the mesh fabric 800, and another end of the third buckle assembly 900" is movably connected to the third connecting strap 760. In this embodiment, a Velcro 7602 is arranged on a side of the third connecting strap 760 facing the second fixing portion 730 of the base fabric 700, and a corresponding Velcro 7304 is arranged on the second fixing portion 730 of the base fabric 700. When the third connecting strap 760 is not connected to the third buckle assembly 900", that is, the mesh fabric 800 is not arranged on the base fabric 700, the third connecting strap 760 can be kept in a state of being attached to the second fixing portion 730 through the bonding effect of the Velcros 7602 and 7304, so as to prevent the third connecting strap 760 from swinging freely and affecting the use when the third connecting strap 760 is not connected to the third buckle assembly 900", and to improve the overall appearance of the product. It can be understood that in other embodiments, the Velcros 7602 and 7304 may be also omitted, or replaced by buttons that cooperate with each other, a hook and a ring that cooperate with each other, or other mechanisms.

It can be understood that in other embodiments, the configuration of the third buckle assembly 900" shown in FIGS. 77 to 78 may be also replaced by the configuration of the first buckle assembly 900 shown in FIGS. 65, 67, 69 and 72.

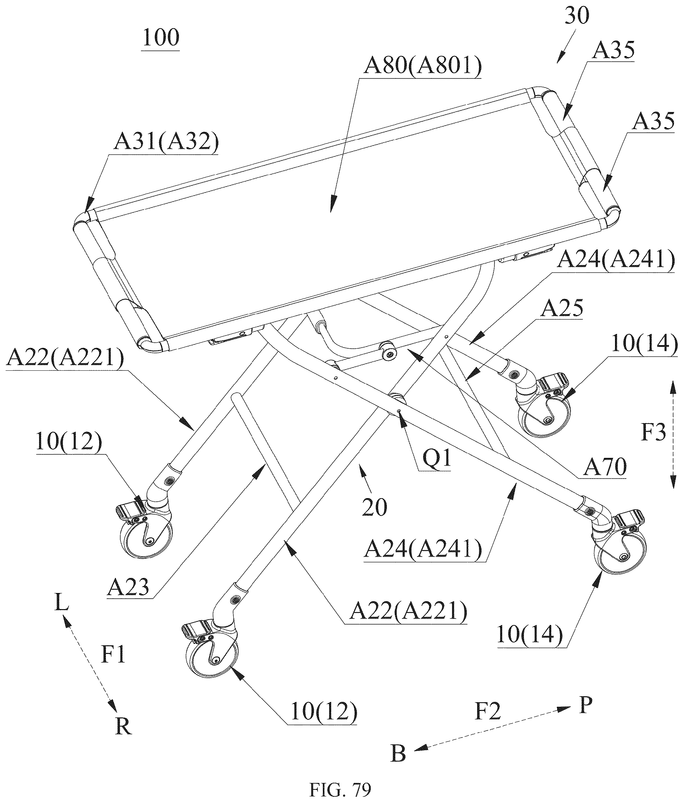

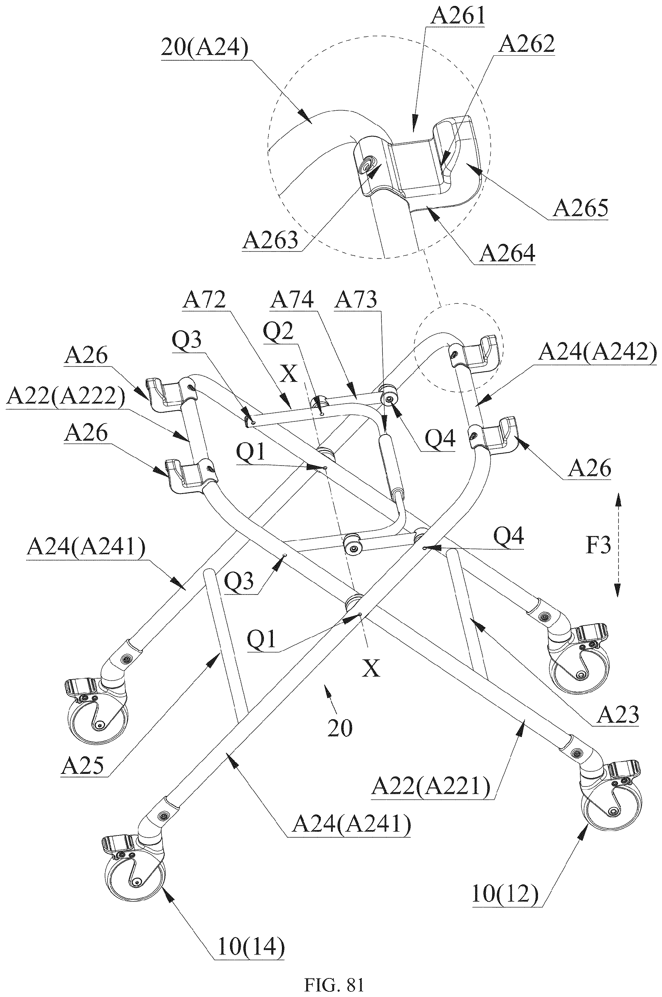

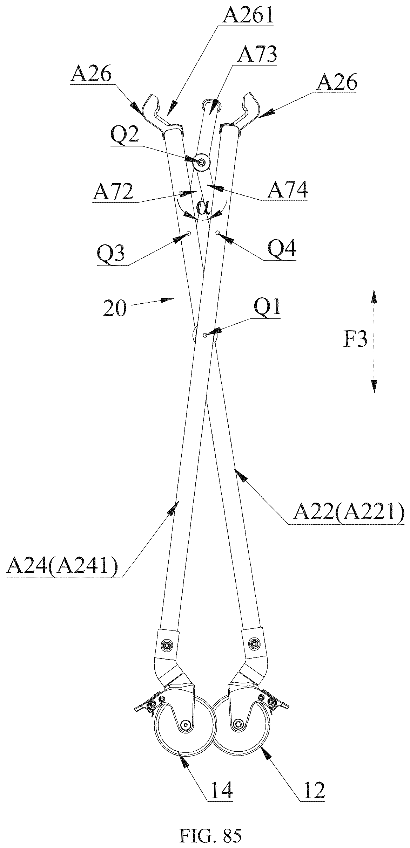

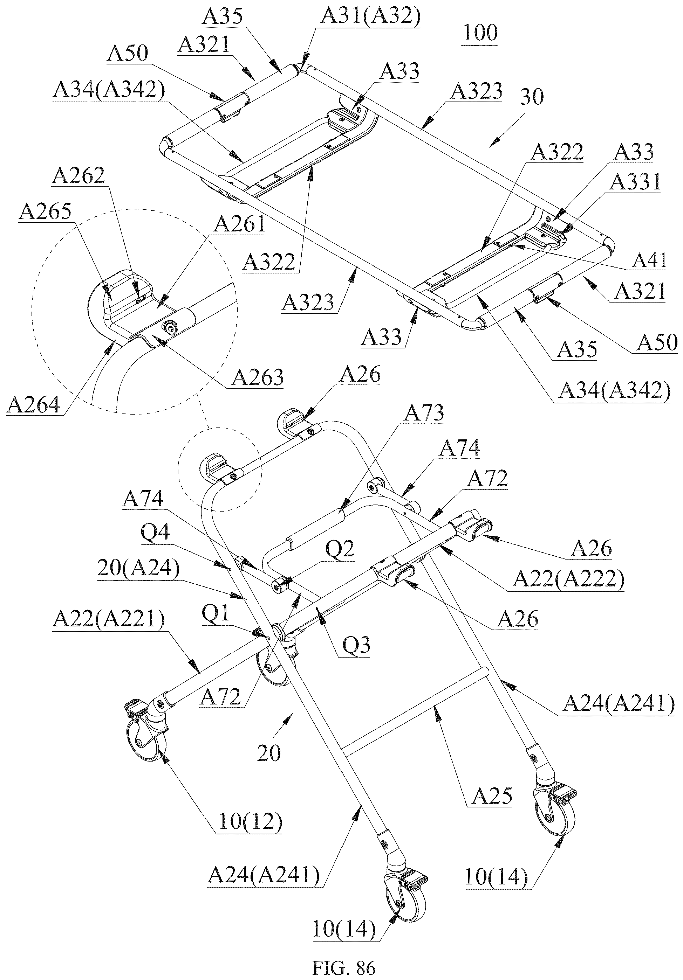

FIG. 79 shows a perspective view of a wheeled movable device 100 according to an embodiment of the present disclosure. The wheeled movable device 100 may include a wheel assembly 10, a frame 20, a carrier 30 and a second locking mechanism A40. The wheel assembly 10 includes a front wheel assembly 12 and a rear wheel assembly 14. The frame 20 includes a front support frame A22 connected to the front wheel assembly 12 and a rear support frame A24 connected to the rear wheel assembly 14. The front support frame A22 and the rear support frame A24 are pivotally connected to each other so that the frame 20 can be switched between an unfolded state (see FIGS. 81 to 83) and a folded state (see FIG. 85). The carrier 30 is removably mounted on the frame 20 (see FIG. 86). When the carrier 30 is mounted on the frame 20, the frame 20 can be restricted from switching to the folded state. The second locking mechanism A40 is arranged on the carrier 30. When the frame 20 is in the unfolded state, the second locking mechanism A40 can lock the carrier 30 and the frame 20.

It should be noted that the present disclosure can vary according to the type of the carrier 30, and the wheeled movable device 100 can be regarded as different movable tools. For example, when the carrier 30 is a stretcher structure, the wheeled movable device 100 can be regarded as a wheeled movable stretcher, which can be used to transfer animals (such as pets), etc. In the embodiments shown below, the wheeled movable device 100 is exemplarily described by taking a wheeled movable stretcher as an example.

It should be noted that the carrier 30 can be removed from the frame 20 and used alone. In other words, the carrier 30 does not have to be used in cooperation with the frame 20. For example, the carrier 30 can be placed on the ground, a vehicle seat or other supporting objects for use.

In the wheeled movable device 100 as described above, the frame 20 can be freely switched between the unfolded state and the folded state by pivoting the front support frame A22 and the rear support frame A24. The carrier 30 can be removably mounted on the frame 20, so that when the wheeled movable device 100 is not in use, the carrier 30 can be removed from the frame 20 and the frame 20 can be in the folded state, thereby facilitating storage without occupying a large additional space.

Still referring to FIG. 79, in an embodiment, the wheeled movable device 100 includes a covering A80. The covering A80 covers the carrier 30 and forms a carrying portion A801. The carrying portion A801 is configured to support an object to be transferred, such as an animal. It should be noted that the covering A80 can be made of a rigid material (such as a plastic board, a wooden board) or a flexible material (such as a canvas) according to the actual application requirements. In some embodiments, the covering may be a combination of a rigid material and a flexible material.

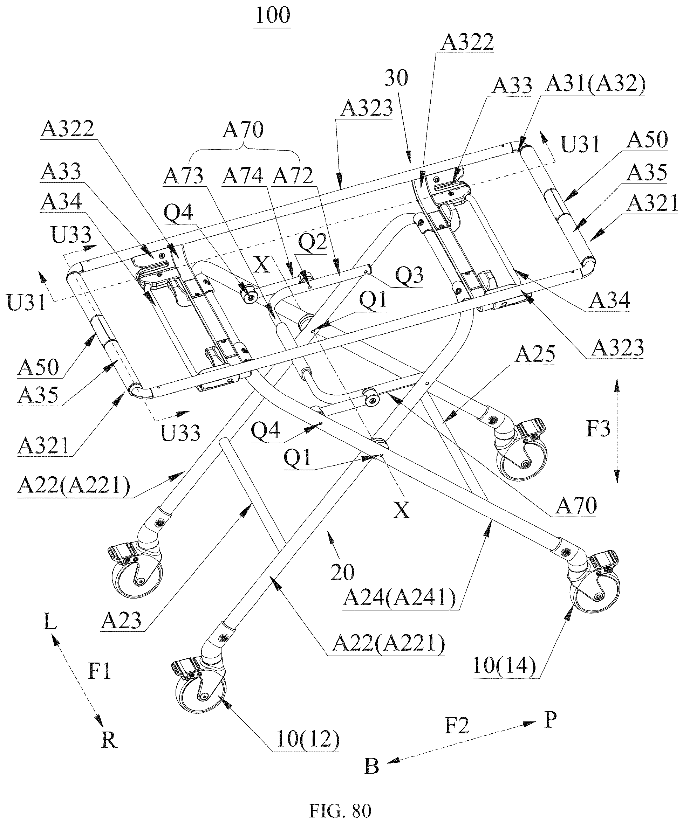

FIG. 80 shows a perspective view of the wheeled movable device 100 shown in FIG. 79 when the covering A80 is omitted. In some embodiments, the configuration of the frame 20 is substantially bilaterally symmetrical. Referring to FIGS. 80 and 81, specifically, the front support frame A22 is, for example, in a U-shaped structure, and includes front rods A221 arranged in parallel on two sides in the left-right direction and a front crossbar A222 connected between the two front rods A221. The front crossbar A222 extends in a first direction F1, which is equivalent to the left-right direction. More specifically, the front crossbar A222 is located at the top ends of the two front rods A221. The rear support frame A24 is, for example, in a U-shaped structure, and includes rear rods A241 arranged in parallel on two sides in the left-right direction and a rear crossbar A242 connected between the two rear rods A241. The rear crossbar A242 extends in the first direction F 1 and is located at the top ends of the two rear rods A241. More specifically, each front rod A221 is respectively arranged crosswise with the rear rod A241 on the same side, and the front rod A221 and the rear rod A241 on the same side are pivotally connected at a first pivot point Q1 through a locking pin. A rotation axis X-X is formed at the first pivot point Q1. The rotation axis X-X is the central axis of the locking pin (the rotation axis X-X is parallel to the first direction Fl). More specifically, the two front rods A221 are arranged on the inner side of the two rear rods A241, that is, the distance between the two front rods A221 is slightly less than the distance between the two rear rods A241. Certainly, in other alternative embodiments, the two front rods A221 are arranged on the outer side of the two rear rods A241, that is, the distance between the two front rods A221 is slightly greater than the distance between the two rear rods A241.

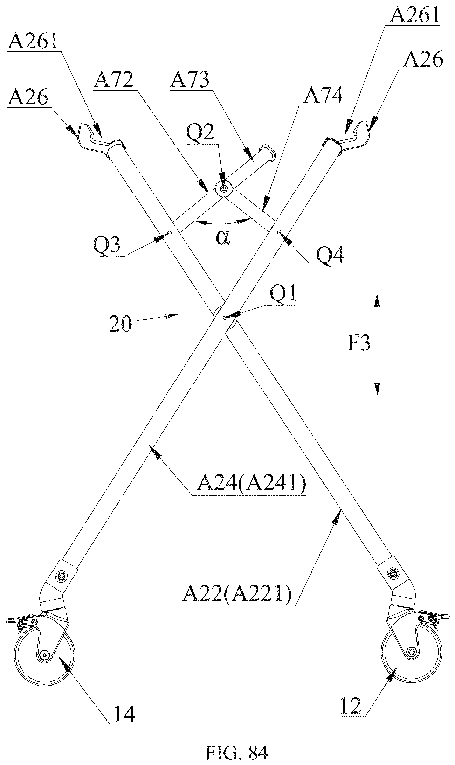

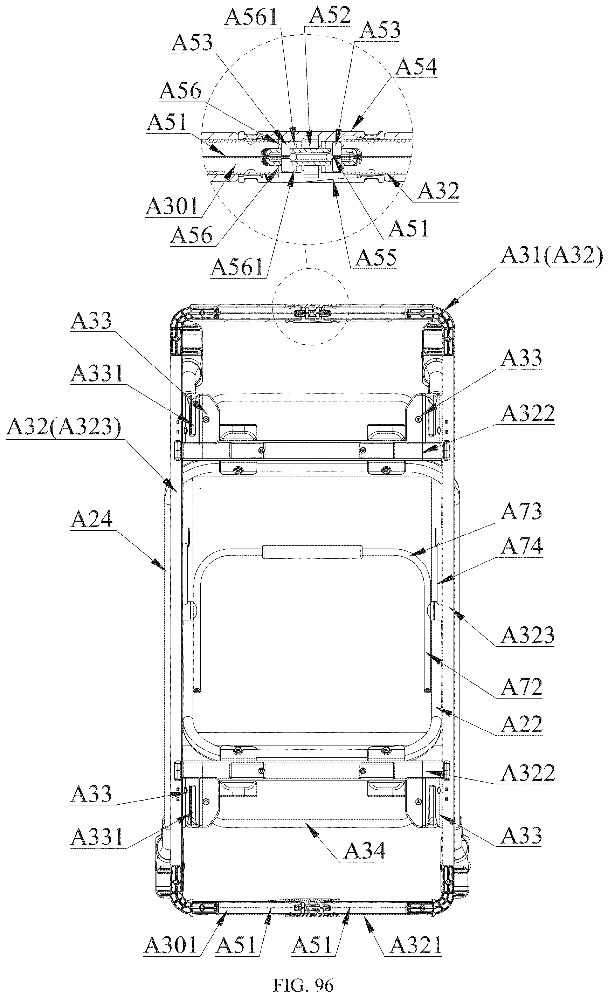

It should be noted that, unless otherwise clearly specified and limited, the directional terms such as "front", "rear", "left", and "right" with respect to the wheeled movable device 100 in the embodiments of FIGS. 79 to 107 of the present disclosure are based on the "front", "rear", "left", and "right" directions of the wheeled movable device 100 in normal travel, and the "front" and "rear" directions are schematically indicated by arrows B and P in the figures, and the "left" and "right" directions are schematically indicated by arrows L and R. These directional terms are only used to make the description of the embodiments of the present disclosure clearer, and are not used to improperly limit the scope of protection of the present disclosure.

Referring to FIGS. 79 to 81, in some embodiments, a front reinforcing bar A23 is further arranged between the two front rods A221, and the front reinforcing bar A23 is arranged parallel to the front crossbar A222 and close to the bottom end of the front rod A221. A rear reinforcing bar A25 is further arranged between the two rear bars A241, and the rear reinforcing bar A25 is arranged parallel to the rear crossbar A242 and close to the bottom end of the rear rod A241.

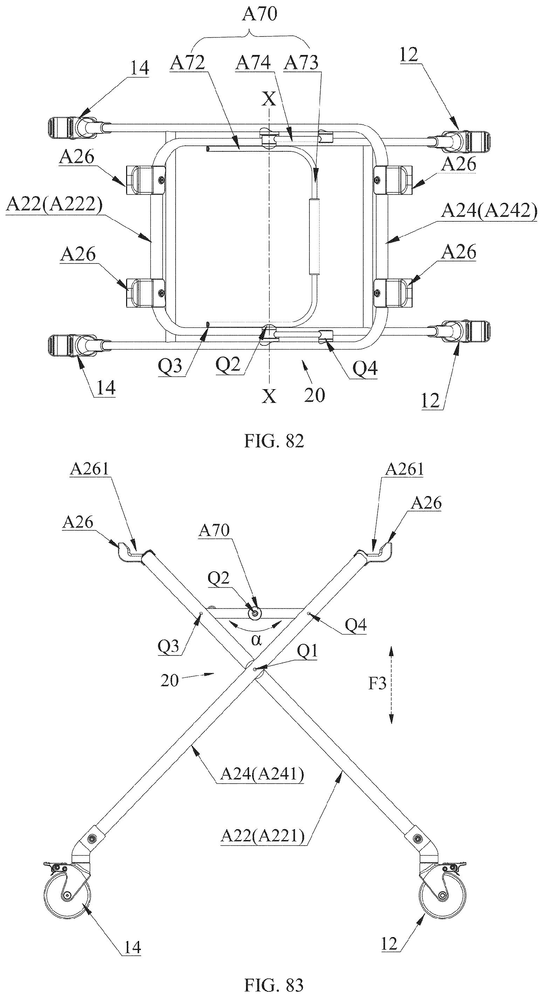

Referring to FIGS. 80 to 82, in some embodiments, the wheeled movable device 100 further includes a linkage mechanism A70. The linkage mechanism A70 is pivotally connected between the front support frame A22 and the rear support frame A24, and the linkage mechanism A70 has an extended state and a retracted state. When the linkage mechanism A70 is switched between the extended state (see FIG. 83) and the retracted state (see FIG. 85), the frame 20 moves with movement of the linkage mechanism A70 to switch between an unfolded state (see FIG. 83) and a folded state (see FIG. 85).

Still referring to FIGS. 80 to 82, in some embodiments, the linkage mechanism A70 includes a rotating member A72 and a linkage member A74 that are pivotally connected to each other. Specifically, one of a first end of the rotating member A72 and a first end of the linkage member A74 is pivotally connected to the front support frame A22, and the other of the first end of the rotating member A72 and the first end of the linkage member A74 is pivotally connected to the rear support frame A24. A second end of the linkage member A74 is pivotally connected to a second pivot point Q2 of the rotating member A72. In some embodiments, one of the first end of the rotating member A72 and the first end of the linkage member A74 is pivotally connected to a third pivot point Q3 of the front support frame A22, and the other of the first end of the rotating member A72 and the first end of the linkage member A74 is pivotally connected to a fourth pivot point Q4 of the rear support frame A24. More specifically, in this embodiment, the first end of the rotating member A72 is pivotally connected to the third pivot point Q3 of the front support frame A22, and the first end of the linkage member A74 is pivotally connected to the fourth pivot point Q4 of the rear support frame A24 (see FIGS. 80 and 81). More specifically, as shown in FIG. 80, the third pivot point Q3 and the fourth pivot point Q4 are both located above the first pivot point Q1. In addition, in some alternative embodiments, the third pivot point Q3 and the fourth pivot point Q4 may be located below the first pivot point Q1. Certainly, in other alternative embodiments, the first end of the linkage member A74 is pivotally connected to the third pivot point Q3 of the front support frame A22, and the first end of the rotating member A72 is pivotally connected to the fourth pivot point Q4 of the rear support frame A24.

It should be noted that, in this embodiment, both the rotating member A72 and the linkage member A74 are of rod-shaped configurations, and both have two ends arranged oppositely in their axial direction or length direction. Taking the linkage member A74 as an example, one of its two ends can be called a "first end" and another of its two ends can be called a "second end". Taking the rotating member A72 as an example, an end thereof connected to the support frame A22 can be called a "first end", and another end thereof connected to an operating handle A73 as described below can be called a "second end". In an embodiment where the operating handle A73 is not provided, the end of the rotating member A72 that is relatively close to the second pivot point Q2 and away from the third pivot point Q3 can be called the "second end".

It should be noted that the "above" and "below" as described above are not limited to directly above and directly below.

It can be seen from FIGS. 81 to 85, when the linkage mechanism A70 is in the extended state, the frame 20 is also in the unfolded state. Referring to FIG. 83, in this case, the rotating member A72 and the linkage member A74 are unfolded relative to each other and arranged substantially horizontally, and an included angle a between the rotating member A72 and the linkage member A74 is approximately 180 degrees. The second pivot point Q2, the third pivot point Q3, and the fourth pivot point Q4 are substantially in the same horizontal plane. The upper end of the front support frame A22 and the upper end of the rear support frame A24 are far away from each other, and the lower end of the front support frame A22 and the lower end of the rear support frame A24 are far away from each other. Certainly, in some embodiments, when the frame 20 is in the unfolded state, the included angle a between the rotating member A72 and the linkage member A74 can be an obtuse angle greater than 90 degrees. Still referring to FIGS. 81 to 83, when the frame 20 is in the unfolded state, the second pivot point Q2 is located between the third pivot point Q3 and the fourth pivot point Q4. Referring to FIG. 85, when the linkage mechanism A70 is in the retracted state, the frame 20 is in the folded state, and the included angle a between the rotating member A72 and the linkage member A74 is an acute angle. The upper end of the front support frame A22 and the upper end of the rear support frame A24 approach each other, and the lower end of the front support frame A22 and the lower end of the rear support frame A24 approach each other.

In some embodiments, when the frame 20 is switched from the unfolded state toward the folded state, the carrier 30 does not need to be completely separated from the frame 20. As long as the carrier 20 is disconnected from one of the front support frame A22 and the rear support frame A24, the frame 20 is allowed to be folded. For example, in some embodiments, one short rod A321 of the carrier 30 is pivotally connected to one of the upper end of the front support frame A22 (e.g., the front crossbar A222) and the upper end of the rear support frame A24 (e.g., the rear crossbar A242), and another short rod A321 or a support rod A322 of the carrier 30 is provided with a second locking mechanism A40. A second locking member A41 of the second locking mechanism A40 cooperates with the engaging groove A262 to lock the carrier 30 on the frame 20, or to allow the carrier 30 to rotate around the front crossbar A222 or the rear crossbar A242 so as not to interfere with the folding of the frame 20.

Referring to FIGS. 80 and 81, in this embodiment, the linkage mechanism A70 includes two rotating members A72 and two linkage members A74. Specifically, the two rotating members A72 are arranged in parallel in the left-right direction, and the two linkage members A74 are also arranged in parallel in the left-right direction. The second end of each linkage member A74 is pivotally connected to the middle part of the rotating member A72 on the same side at the second pivot point Q2, and the first end of each linkage member A74 is pivotally connected to the rear rod A241 on the same side. The first end of each rotating member A72 is pivotally connected to the front rod A221 on the same side. More specifically, in some embodiments, the linkage mechanism A70 further includes an operating handle A73 connected to the second ends of the two rotating members A72, and the operating handle A73 is configured to drive the two rotating members A72 to rotate synchronously.

It should be noted that, in the rotating member A72 or the linkage member A74 having a rod-shaped configuration, the "middle part" refers to the region between the first end and the second end. Specifically, in this embodiment, as shown in FIG. 80, the first end of the rotating member A72 and the first end of the linkage member A74 are separated from each other, and the second end of the linkage member A74 is pivotally connected to the rotating member A72, specifically, pivotally connected to the middle part of the rotating member A72 (a region between the first end and the second end of the rotating member A72).

The unfolding and folding process of the frame 20 is described below with reference to FIGS. 81 to 85.

When the frame 20 in this embodiment is required to be folded, the operating handle A73 is pulled upwardly in a vertical direction (third direction F3). The third direction F3 is substantially perpendicular to the first direction F1. At this time, the rotating member A72 drives its first end to rotate around the third pivot point Q3 as the operating handle A73 moves. In addition, the second end of the linkage member A74 pivots around the second pivot point Q2 as the rotating member A72 moves, and the first end of the linkage member A74 rotates around the fourth pivot point Q4, so that the first end of the linkage member A74 relatively approaches the first end of the rotating member A72. At the same time, the front support frame A22 and the rear support frame A24 are pulled close to each other through the third pivot point Q3 and the fourth pivot point Q4 until the frame 20 is folded to the folded state shown in FIG. 85. During this process, the included angle a between the rotating member A72 and the linkage member A74 on the same side changes from approximately 180 degrees to an acute angle less than 90 degrees (as shown in FIG. 85, when the frame 20 is fully folded, the included angle a is less than 90 degrees). The frame 20 according to the embodiments of the present disclosure can reduce its volume by folding itself, so that the wheeled movable device 100 can be easily stored when not in use.

When the frame 20 in this embodiment is required to be unfolded, the user (mainly represented by medical staff) can directly press the front crossbar A222 and the rear crossbar A242 downwardly in the vertical direction, so that the front support frame A22 and the rear support frame A24 rotate at the first pivot point Q 1 and move away from each other. In this process, the front support frame A22 and the rear support frame A24 synchronously drive the rotating member A72 and the linkage member A74 to move together, so that the rotating member A72 rotates downwardly around the third pivot point Q3 of the front support frame A22, and the linkage member A74 rotates downwardly around the fourth pivot point Q4 of the rear support frame A24. At the same time, the rotating member A72 and the linkage member A74 rotate around the second pivot point Q2, and finally the rotating member A72 and the linkage member A74 are on the same horizontal plane (as shown in FIG. 83). That is, the included angle a between the linkage member A74 and the rotating member A72 is changed from an acute angle less than 90 degrees to approximately 180 degrees.

Referring to FIGS. 79 to 82, in some embodiments, two front wheel assemblies 12 are mounted at the bottom of the front support frame A22, and two rear wheel assemblies 14 are mounted at the bottom of the rear support frame A24. More specifically, one front wheel assembly 12 is mounted at the bottom end of each of the two front rods A221, and one rear wheel assembly 14 is mounted at the bottom end of each of the two rear rods A241. In this way, the user can easily drive the frame 20 to move by the wheel assembly 10.

Referring to FIGS. 80 and 86, in some embodiments, the carrier 30 can be removably mounted on the frame 20. In this embodiment, when the carrier 30 is a stretcher structure, for example, the carrier 30 includes a support frame arrangement A31, and the support frame arrangement A31 is substantially a rectangular frame structure. Specifically, the support frame arrangement A31 includes a first support frame A32, and the first support frame A32 includes two short rods A321 and two long rods A323 sequentially connected. The two short rods A321 and the two long rods A323 are parallel to each other and connected end to end in sequence, thereby forming a rectangular frame structure. The two short rods A321 are spaced apart in the second direction F2, and the two long rods A323 are spaced apart in the first direction F1. The second direction F2 is equivalent to the front-rear direction. The second direction F2 is not parallel to the first direction F1. More specifically, the second direction F2 is substantially perpendicular to the first direction F1. More specifically, referring to FIGS. 79 and 80, in an embodiment, the covering A80 is substantially rectangular in configuration, and four sides of the covering A80 are respectively connected to the corresponding two short rods A321 and two long rods A323, and the region of the covering A80 located inside the rectangular frame forms a carrying portion A801 that supports an object to be transferred.

Referring to FIGS. 79 and 80, in some implementations, each short rod A321 and/or each long rod A323 is covered with a gripping sheath A35, the gripping sheath A35 is used for the user to hold. Specifically, the gripping sheath A35 can be a rubber gripping sheath, which can increase the friction when the user holds the first support frame A32, so that the first support frame A32 is not easy to be separated from the hand. Alternatively, the gripping sheath A35 can be a sponge gripping sheath, which can increase the comfort of the user when holding the first support frame A32.

In some embodiments, the first support frame A32 further includes a support rod A322 connected between the two long rods A323. In this way, the overall structural strength of the carrier 30 can be effectively improved. More specifically, two support rods A322 are provided. The two support rods A322 are spaced apart in the length direction (front-rear direction or second direction F2) of the long rods A323.

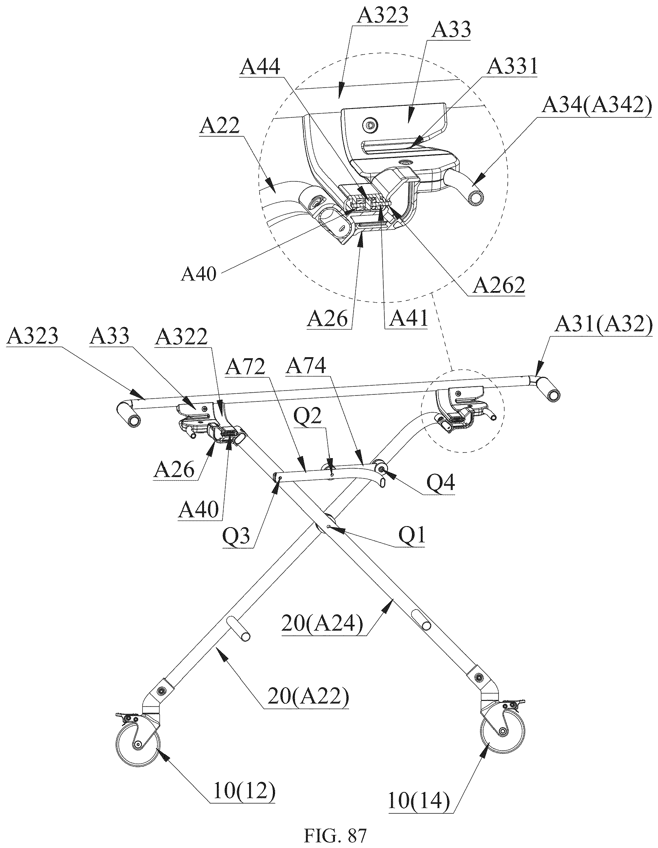

Referring to FIGS. 86 and 87, in some embodiments, in order to improve the stability of the carrier 30 when it is mounted on the frame 20, the carrier 30 can be locked on the frame 20 by the second locking mechanism A40. In some embodiments, the second locking mechanism A40 includes a second locking member A41. The second locking member A41 can move on the carrier 30 and has a locked position and an unlocked position. An engaging groove A262 is arranged on the frame 20. When the carrier 30 is mounted on the frame 20 and the second locking member A41 is at the locked position, the second locking member A41 extends into the engaging groove A262 to lock the carrier 30 to the frame 20 (see FIG. 87), so that the movement of the carrier 30 on the frame 20 in the first direction F1 is restricted, and at the same time, the movement of the carrier 30 on the frame 20 in the vertical direction (third direction F3) is restricted. When the carrier 30 is mounted on the frame 20 and the second locking member A41 is at the unlocked position, the second locking member A41 is retracted from the engaging groove A262 to release the locking between the carrier 30 and the frame 20. It can be understood that when the second locking member A41 is at the locked position, the carrier 30 and the frame 20 can be locked together, and the carrier 30 is not allowed to be removed from the frame 20. When the second locking member A41 is at the unlocked position, the carrier 30 is allowed to be removed from the frame 20.

In some embodiments, at least one second locking mechanism A40 is provided, and accordingly, at least one engaging groove A262 is arranged on the frame 20. More specifically, in this embodiment, four second locking mechanisms A40 and four engaging grooves A262 are provided. When the frame 20 is in the unfolded state and the carrier 30 is mounted on the frame 20, the four second locking mechanisms A40 are divided into two locking mechanism groups, and each locking mechanism group includes two second locking mechanisms A40. The two second locking members A41 included in each locking mechanism group are spaced apart in the first direction F1, and the two locking mechanism groups are spaced apart on the carrier 30 in the second direction F2. In this way, the two locking mechanism groups arranged in the front-rear direction can be regarded as a front locking mechanism group and a rear locking mechanism group.

Specifically, the second locking member A41 in each of the second locking mechanisms A40 can move on the carrier 30 in the front-rear direction (the second direction F2) to have a locked position of extending into the corresponding engaging groove A262 and an unlocked position of retracting from the engaging groove A262. More specifically, in the two locking mechanism groups (the front locking mechanism group and the rear locking mechanism group) arranged in the second direction F2, the unlocking and locking directions of the second locking members A41 in the two locking mechanism groups are opposite to each other. For example, the two second locking members A41 in the front locking mechanism group move forward to the locked position and move rearward to the unlocked position, while the two second locking members A41 in the rear locking mechanism group move forward to the unlocked position and move rearward to the locked position. In this way, when the two second locking members A41 in the front locking mechanism group are respectively inserted into the corresponding engaging grooves A262, and the two second locking members A41 in the rear locking mechanism group are respectively inserted into the corresponding engaging grooves A262, the movement of the carrier 30 on the frame 20 in the second direction F2 is restricted, and finally the carrier 30 is more firmly mounted on the frame 20. Certainly, in some alternative embodiments, the unlocking and locking directions of the second locking members A41 in the two locking mechanism groups can be the same.

Referring to FIGS. 87 to 91, specifically, in this embodiment, the second locking mechanism A40 is arranged on the support rod A322. More specifically, as shown in FIGS. 80 and 86, the frame 20 includes at least one support base A26. Each support base A26 is provided with a support groove A261, and the engaging groove A262 is arranged on the support base A26 and in communication with the support groove A261. When the carrier 30 is mounted on the frame 20, the support rod A322 is engaged in the support groove A261 and supported by the support base A26. In this case, when the second locking member A41 is at the locked position, the second locking member A41 extends into the engaging groove A262 to lock the carrier 30 on the support base A26. When the second locking member A41 is at the unlocked position, the second locking member A41 retracts from the engaging groove A262. In this way, the user can directly remove the carrier 30 from the frame 20. More specifically, the second locking mechanism A40 is arranged in the support rod A322, and the support rod A322 is provided with a telescopic hole group A325 through which the second locking member A41 can extend through. The second locking member A41 moves in the telescopic hole group A325 in the second direction F2. When the second locking member A41 extends out of the telescopic hole group A325, the second locking member A41 is at the locked position. When the second locking member A41 retracts into the telescopic hole group A325, the second locking member A41 is at the unlocked position.

Referring to FIGS. 81 and 86, in some embodiments, the support base A26 includes a connecting section A263, a supporting section A264, and a limiting section A265 sequentially connected and arranged at an included angle. The connecting section A263, the supporting section A264, and the limiting section A265 together form a supporting groove A261. The connecting section A263 is fixed to the frame 20, and the engaging groove A262 is arranged on a side of the limiting section A265 facing the supporting groove A261. Specifically, the support base A26 on the front support frame A22 is fixed to the front crossbar A222 by the connecting section A263, and the support base A26 on the rear support frame A24 is fixed to the rear crossbar 242 by the connecting section A263. In this way, when the support rod A322 is placed in the support groove A261, the limiting section A265 can abut against the support rod A322, thereby limiting the movement of the support rod A322 in the second direction F2. In this case, after the second locking member A41 extends through the telescopic hole group A325 and is inserted into the engaging groove A262, the movement of the support rod A322 in the third direction F3 and in the first direction F1 is limited. In this way, the stability of the carrier 30 mounted to the frame 20 is improved, and the random shaking of the carrier 30 caused by the movement of the frame 20 is avoided.

It should be noted that the connection method between the connecting section A263 and the front crossbar A222 or the rear crossbar A242 is not specifically limited, and can be, for example, welding, bonding or engagement.

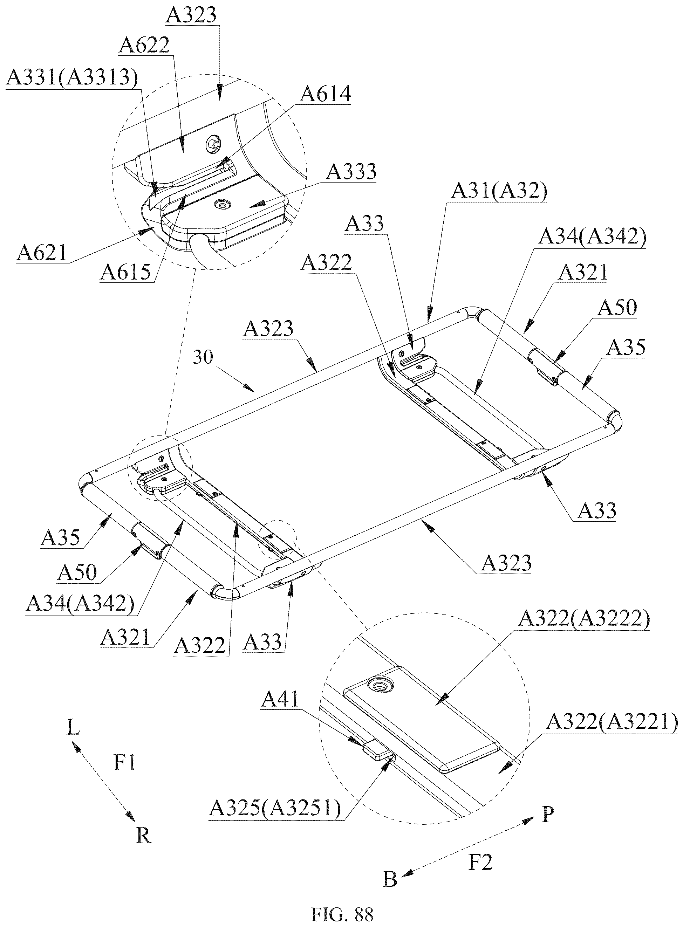

Referring to FIGS. 88 to 91, two second locking mechanisms A40 are respectively provided in the two support rods A322 arranged in the front-rear direction. In other words, as described above, the front locking mechanism group is provided in one of the support rods A322, and the rear locking mechanism group is provided in another of the support rods A322. Specifically, the two second locking mechanisms A40 located in the same support rod A322 are spaced apart in the left-right direction (first direction F1). More specifically, the second locking members A41 corresponding to any two second locking mechanisms A40 located in different support rods A322 have opposite directions of unlocking and locking. In some embodiments, the support base A26 is arranged on each of the front support frame A22 and the rear support frame A24. Specifically, the support base A26 arranged on the front support frame A22 is mounted on the front crossbar A222, and the support base A26 arranged on the rear support frame A24 is mounted on the rear crossbar A242. In the two support rods A322 arranged in the front-rear direction, one of the support rods A322 can be locked on the support base A26 on the front support frame A22 by at least one second locking mechanism A40 arranged thereon, and another of the support rods A322 can be locked on the support base A26 on the rear support frame A24 by at least one second locking mechanism A40 arranged thereon.

Referring to FIGS. 87, 89 and 91, in some embodiments, the second locking mechanism A40 further includes a driving member A42. The driving member A42 is operably connected to the second locking member A41. The driving member A42 can move on the carrier 30 and has a first position and a second position. More specifically, the support rod A322 has an accommodating space A324 in which the driving member A42 can move. The accommodating space A324 is in communication with the telescopic hole group A325. When the driving member A42 is at the first position, the second locking member A41 is at the locked position. When the driving member A42 is at the second position, the second locking member A41 is at the unlocked position. In this way, the user can indirectly control the second locking member A41 by controlling the driving member A42.

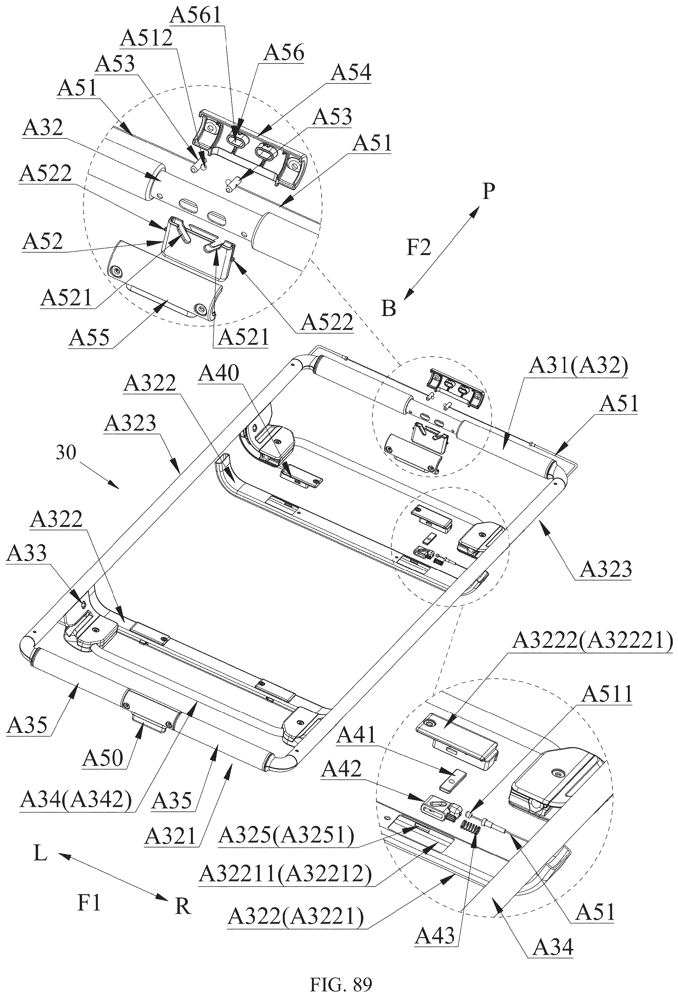

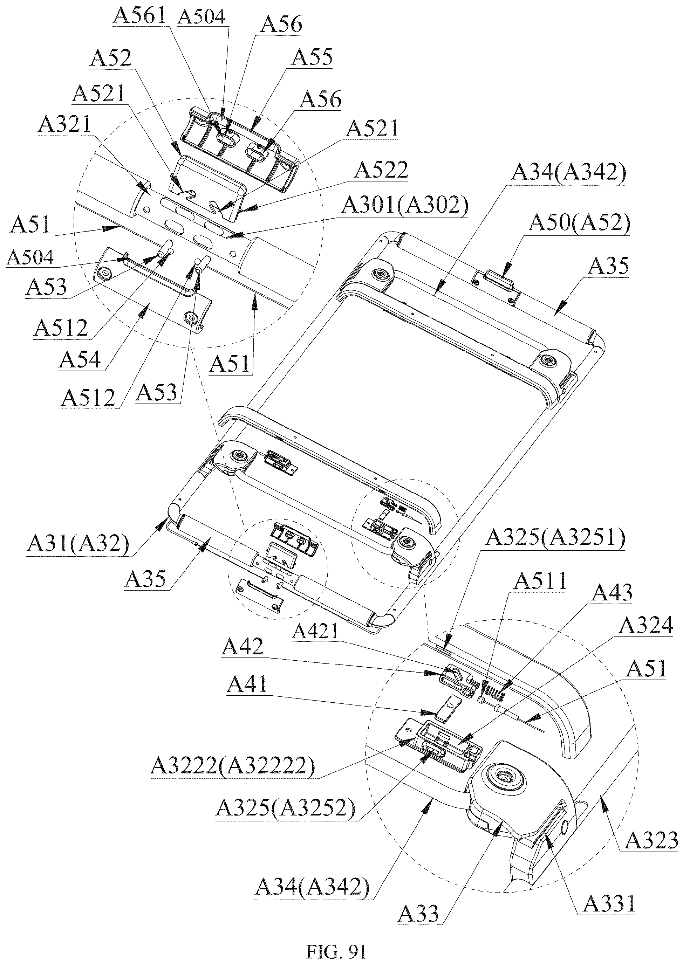

Still referring to FIGS. 87, 88, 89 and 91, in some implementations, the support rod A322 includes a rod body A3221 and a mounting cover A3222. A cavity A32211 is formed in the rod body A3221, and a placement opening A32212 (see FIG. 89) in communication with the cavity A32211 is arranged on the rod wall of the rod body A3221. The mounting cover A3222 includes a top cover A32221 and a limiting member A32222 connected to a side of the top cover A32221 (see FIGS. 89 and 91). The accommodating space A324 is provided inside the limiting member A32222 (see FIG. 91). When the top cover A32221 is covered at the placement opening A32212, the limiting member A32222 is accommodated in the cavity A32211. In this embodiment, when the top cover A32221 is covered at the placement opening A32212, the top cover A32221 can be assembled with the rod body 3221 by fasteners such as screws.

More specifically, referring to FIGS. 89 and 91, the telescopic hole group A325 includes a first telescopic hole A3251 and a second telescopic hole A3252 that are arranged correspondingly. The first telescopic hole A3251 is arranged on the rod body A3221 and in communication with the cavity A32211, and the second telescopic hole 3252 is arranged on the limiting member A32222 and in communication with the accommodating space A324. When the second locking member A41 is at the locked position, the second locking member A41 extends out of the second telescopic hole A3252 and the first telescopic hole A3251 in sequence. When the second locking member A41 is at the locked position, the second locking member A41 retracts toward the interior of the first telescopic hole A3251.

Referring to FIG. 87, in some embodiments, the second locking mechanism A40 further includes a first guide post A44 fixed to the second locking member A41. As shown in FIGS. 87, 89 and 91, the driving member A42 is provided with a first guide groove A421, and the first guide groove A421 extends obliquely relative to the moving direction of the driving member A42. The first guide post A44 can slide in the first guide groove A421. When the driving member A42 is switched between the first position and the second position, the second locking member A41 can switch between the locked position and the unlocked position through the cooperation between the first guide post A44 and the first guide groove A421. More specifically, the driving member A42 can move within the limited space in the left-right direction, that is, move in the first direction F1. Through the sliding cooperation between the first guide post A44 and the first guide groove A421, the second locking member A41 can move in the second direction F2 to extend out of the first telescopic hole A3251 or retract toward the interior of the first telescopic hole A3251.

Referring to FIGS. 88 to 91, an exemplary implementation of unlocking the second locking member A41 is illustrated in this embodiment. The wheeled movable device 100 further includes an unlocking assembly A50 arranged on the carrier 30. The unlocking assembly A50 is configured to drive the second locking member A41 to move from the locked position toward the unlocked position.

It should be noted that the unlocking assembly A50 is configured to drive the second locking member A41 to move from the locked position toward the unlocked position, which may mean that the unlocking assembly A50 can directly drive the second locking member A41 to move from the locked position toward the unlocked position, or the unlocking assembly A50 can indirectly drive the unlocking member A41 to move from the locked position toward the unlocked position.

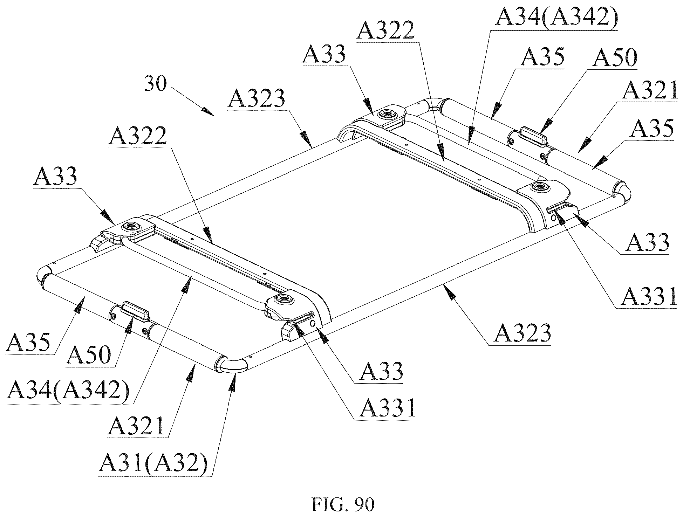

This embodiment illustrates an exemplary implementation in which the unlocking assembly A50 drives the unlocking member A52 to move in an indirect manner. Referring to FIGS. 90 to 95, the unlocking assembly A50 includes an unlocking member A52 slidably mounted to the carrier 30, and the unlocking member A52 is connected to the driving member A42 via a traction member A51. The traction member A51 can be, for example, a traction rope. In this way, when the user pushes the unlocking member A52 to move and the traction member A51 drives the driving member A42 to move from the first position toward the second position, the second locking member A41 can be switched from the locked position toward the unlocked position under the cooperation of the first guide post A44 and the first guide groove A421.

Referring to FIGS. 91, 92 and 94, in some embodiments, the second locking mechanism A40 further includes an elastic reset member A43. The elastic reset member A43 is, for example, a spring, which abuts against the driving member A42 and is configured to keep the driving member A42 at the first position. In this way, when the user releases the unlocking member A52, under the action of the elastic reset member A43, the driving member A42 can automatically move from the second position toward the first position, thereby causing the second locking member A41 to automatically switch to the locked position and remain at the locked position. More specifically, the elastic reset member A43 is accommodated in the accommodating space A324 formed in the mounting cover A3222, and two ends of the elastic reset member A43 abut against the driving member A42 and the limiting member A32222, respectively. For example, a boss A422 on which a spring can be sleeved can be arranged on the driving member A42. The boss A422 can be configured to locate the position of the spring.

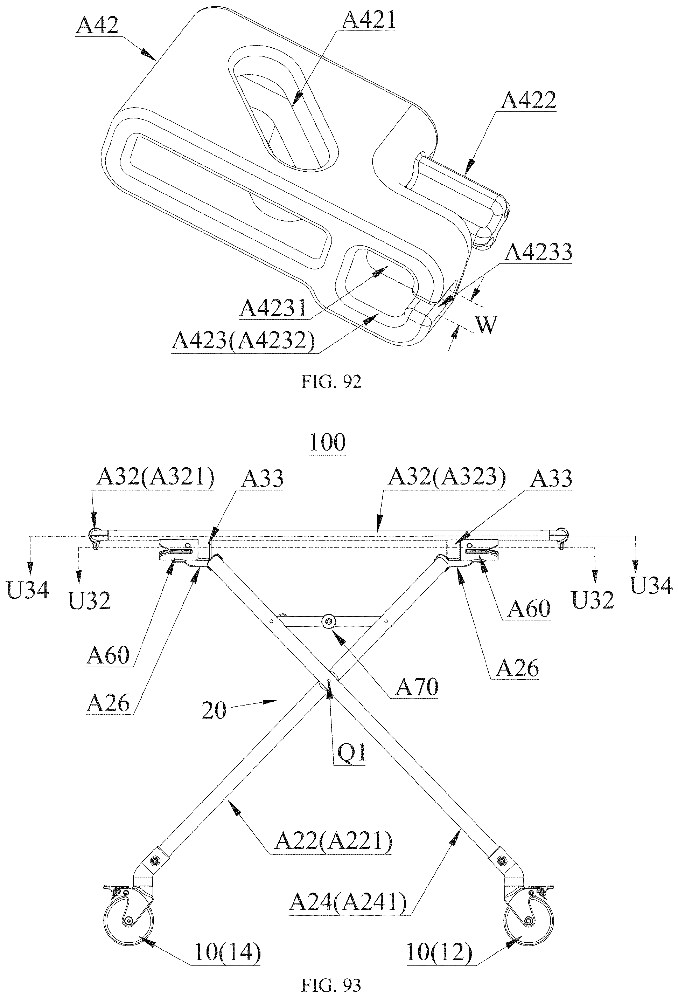

In some embodiments, the driving member A42 is removably connected to the traction member A51, or the driving member A42 is fixedly connected to the traction member A51. Referring to FIG. 91 and FIG. 92, in this embodiment, a holding groove A423 is formed on the driving member A42. The holding groove A423 includes a bottom wall A4231, a mounting opening A4232, and a top opening A4233. The mounting opening A4232 faces the bottom wall A4231. The top opening A4233 extends from the mounting opening A4232 toward the bottom wall A4231. Referring to FIGS. 89, 91 and 92, in some embodiments, a first engaging portion A511 is formed at an end of the traction member A51. The first engaging portion A511 enters from the mounting opening A4232 and is received in the holding groove A423, and the traction member A51 extends out of the holding groove A423 via the top opening A4233. Specifically, the width W of the top opening A4233 is less than the size of the first engaging portion A511. For example, when the first engaging portion A511 is a sphere, the width W of the top opening A4233 is less than the diameter of the sphere. In this way, when the traction member A51 is engaged with the holding groove A423 by the first engaging portion A511, the traction member A51 is not separated from the driving member A42 due to the tension force received. Certainly, in some alternative embodiments, the removable connection mode between the traction member A51 and the driving member A42 can also have other implementations and is not limited to the above examples.

Referring to FIGS. 89 and 91, in some embodiments, the unlocking member A52 includes a second guide groove A521. The second guide groove A521 extends obliquely relative to the sliding direction of the unlocking member A52. The unlocking assembly A50 further includes a second guide post A53, the second guide post A53 is arranged in the second guide groove A521 and can slide along the second guide groove A521. The second guide post A53 is connected to the driving member A42 by the traction member A51. Specifically, a through hole is arranged on the second guide post A53, and an end of the traction member A51 away from the driving member A42 extends through the through hole and forms a second engaging portion A512. The second engaging portion A512 is, for example, a sphere. The diameter of the second engaging portion A512 is greater than the diameter of the through hole. In this way, the reliability of the connection between the traction member A51 and the second guide post A53 is improved.

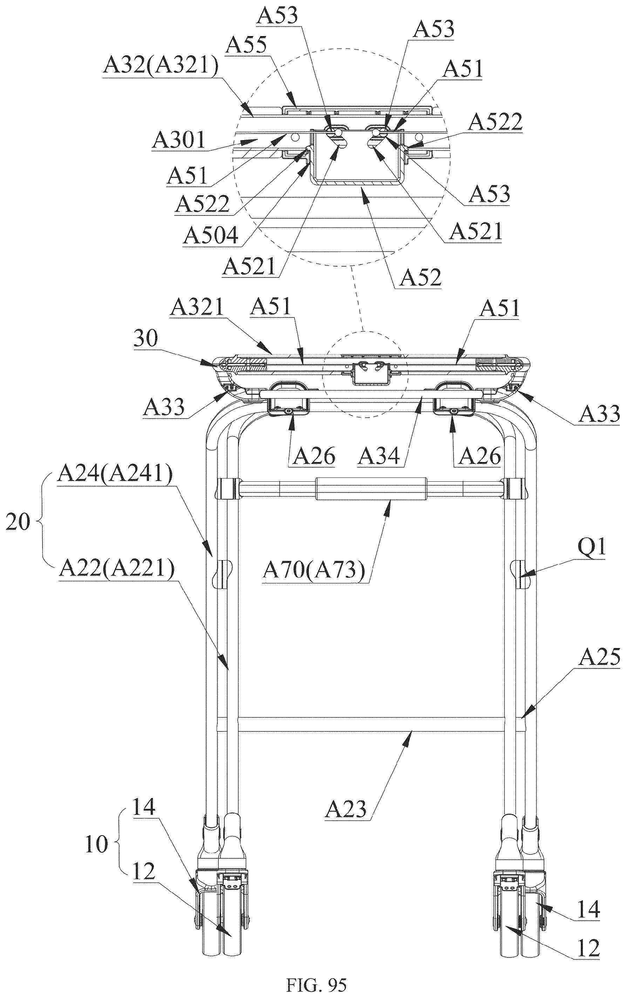

Referring to FIGS. 95 to 98, in some embodiments, an inner cavity A301 is formed in the carrier 30. For example, the short rod A321 is a hollow tube, and has the inner cavity A301 formed therein. An operation hole A302 in communication with the inner cavity A301 is arranged on the side wall of the carrier 30. Specifically, in this embodiment, when the carrier 30 is mounted on the frame 20, the operation hole A302 is arranged in an upward direction. Certainly, in other alternative embodiments, the operation hole A302 may also be arranged in a horizontal direction or a downward direction. Specifically, the unlocking member A52 extends through the operation hole A302 and extends into the inner cavity A301 and can slide relative to the operation hole A302. Referring to FIGS. 89 and 91, the unlocking assembly A50 further includes a first fixing cover A54 and a second fixing cover A55. The first fixing cover A54 and the second fixing cover A55 cooperate with each other and are fixed to the carrier 30. The first fixing cover A54 and the second fixing cover A55 are provided with a limiting portion A56 extending into the inner cavity A301 on each of the opposite side thereof, and a limiting slide groove A561 is arranged on the limiting portion A56. Two ends of the second guide post A53 are respectively slidably limited in the corresponding limiting slide grooves A561. The extending direction (first direction F1) of the limiting slide groove A561 is perpendicular to the sliding direction (i.e., the third direction F3) of the unlocking member A52.

Referring to FIGS. 89 and 95, in some embodiments, the unlocking member A52 is provided with a limiting protrusion A522. The limiting protrusion A522 can abut against the edge of the operation hole A302 to prevent the unlocking member A52 from being separated from the carrier 30. Specifically, at least two limiting protrusions A522 are provided, and the two limiting protrusions A522 are arranged opposite to each other.

In some embodiments, the first fixing cover A54 and the second fixing cover A55 may define an opening A504 that slidably cooperates with the unlocking member A52. The limiting protrusion A522 of the unlocking member A52 may abut against the edge of the opening A504 to prevent the unlocking member A52 from being separated from the carrier 30.

In some embodiments, an elastic member (not shown) is arranged in the inner cavity A301, and the elastic member abuts against the unlocking member A52, so that the unlocking member A52 has a tendency to extend out of the operation hole A302.

Referring to FIGS. 91 and 95, in some embodiments, one unlocking assembly A50 can simultaneously control two second locking mechanisms A40 located in the same support rod A322, that is, one unlocking assembly A50 can simultaneously control two driving members A42 in the same support rod A322. Specifically, the unlocking member A52 has two second guide grooves A521, and the two second guide grooves A521 are symmetrically arranged. The bottoms of the two second guide grooves A521 approach each other (see FIG. 95). More specifically, each second guide groove A521 is provided with the second guide post A53, and each second guide post A53 is connected to the corresponding driving member A42 through the corresponding traction member A51.

Referring to FIGS. 88 to 91, in this embodiment, the carrier 30 is provided with two unlocking assemblies A50. One of the unlocking assemblies A50 is configured to control two second locking mechanisms A40 located in one support rod A322, and the other of the unlocking assemblies A50 is configured to control two second locking mechanisms A40 located in another support rod A322. In other words, one of the two unlocking assemblies A50 is configured to control the two second locking mechanisms A40 in the front locking mechanism group, and the other of the two unlocking assemblies A50 is configured to control the two second locking mechanisms A40 in the rear locking mechanism group.

Certainly, in some alternative embodiments, one second locking mechanism A40 may be arranged in each support rod A322. In other words, the carrier 30 is provided with two second locking mechanisms A40, and the two second locking mechanisms A40 are respectively located in different support rods A322. More specifically, the carrier 30 is provided with an unlocking assembly A50, and the unlocking assembly A50 can be configured to control the two second locking mechanisms A40 simultaneously.

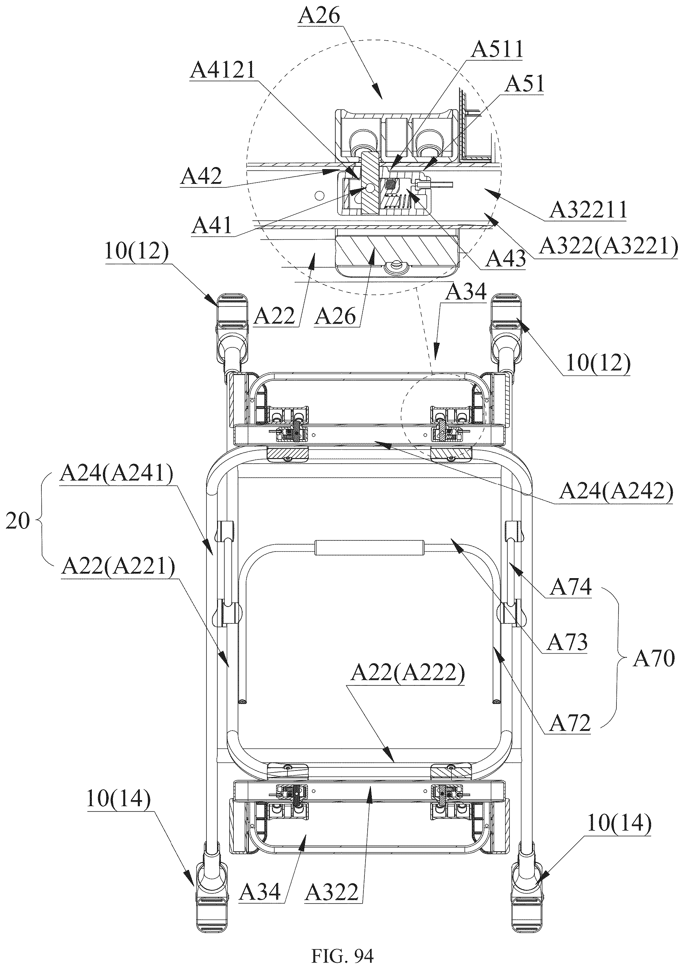

The unlocking assembly A50 in this embodiment is described below with reference to FIGS. 94 to 98.

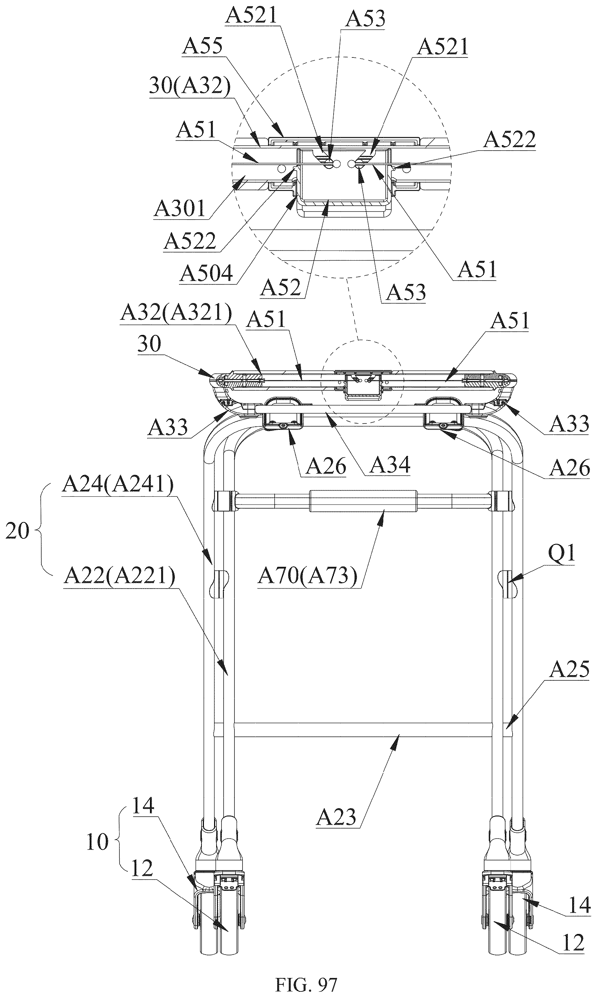

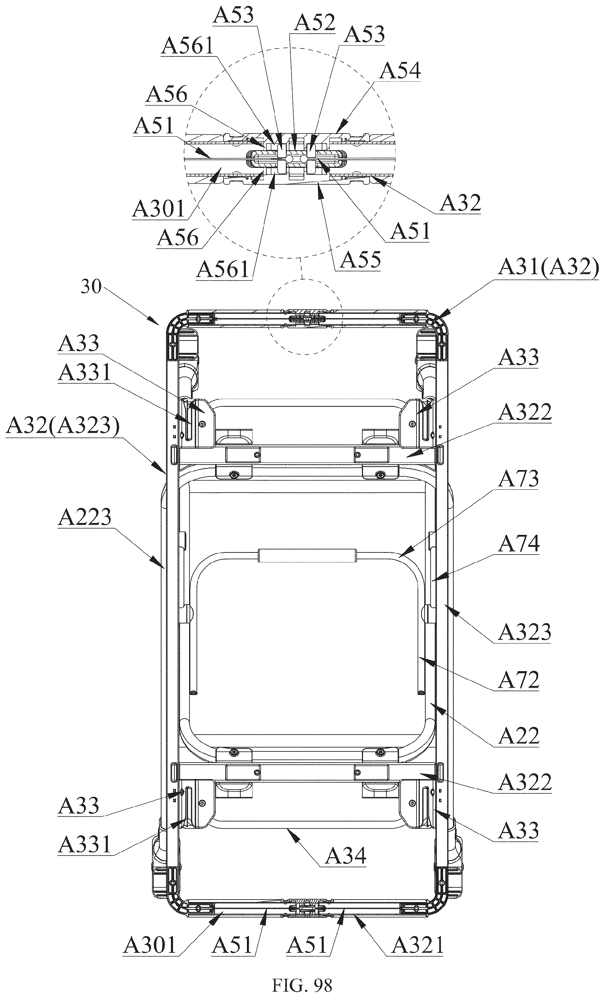

Referring to FIGS. 94 to 96, when the second locking member A41 is at the locked position, the elastic reset member A43 drives the driving member A42 to remain at the first position, at which time the unlocking member A52 is engaged at the opening A504 through the limiting protrusion A522, and the second guide post A53 is located at the top of the second guide groove A521 (as shown in FIG. 95). Referring to FIGS. 97 and 98, when it is required to unlock the second locking member A41, the user can directly press the unlocking member A52 upwardly by hand, so that under the guidance of the second guide groove A521, the two second guide posts A53 move to the bottom of the corresponding second guide groove A521 (as shown in FIG. 97), and simultaneously drive the two second clamping joint potions A512 to approach each other. In this case, the two traction members A51 drive the corresponding driving members A42 to move from the first position to the second position, the two elastic reset members A43 are compressed, and the two second locking members A41 are switched from the locked position toward the unlocked position.

Still referring to FIGS. 97 and 98, after the carrier 30 is removed from the frame 20, the user can release the unlocking member A52, that is, the unlocking member A52 is not pressed. At this time, the driving member A42 is not subjected to the traction force applied by the traction member A51. Under the action of the elastic reset member A43, the driving member A42 can move from the second position toward the first position, thereby causing the second locking member A41 to move from the unlocked position toward the lock position. In addition, since the unlocking member A52 is not subjected to the pressing force provided by the user, during the process of the driving member A42 moving from the second position toward the first position, the traction member A51 is driven by the driving member A42 to move. Under the cooperation between the second guide groove A521 and the second guide post A53 (the second guide post A53 will move from the bottom to the top of the second guide groove A521), the (downwardly moving) unlocking member A52 extends out of the operation hole A302 and resets. In some embodiments, the unlocking member A52 can be gradually moved downwardly to extend out of the operation hole A302 under the action of an elastic member (not shown) until the limiting protrusion A522 abuts against the edge of the opening A504. In other alternative embodiments, the unlocking member A52 is arranged at a downward-facing position, and the unlocking member A52 can also extend from the operation hole A302 under the action of gravity to reset.

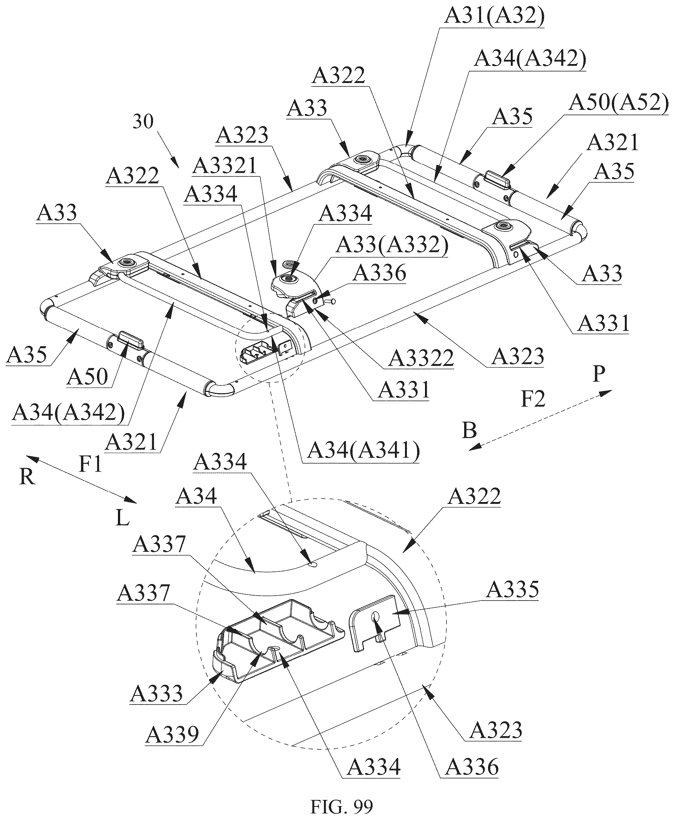

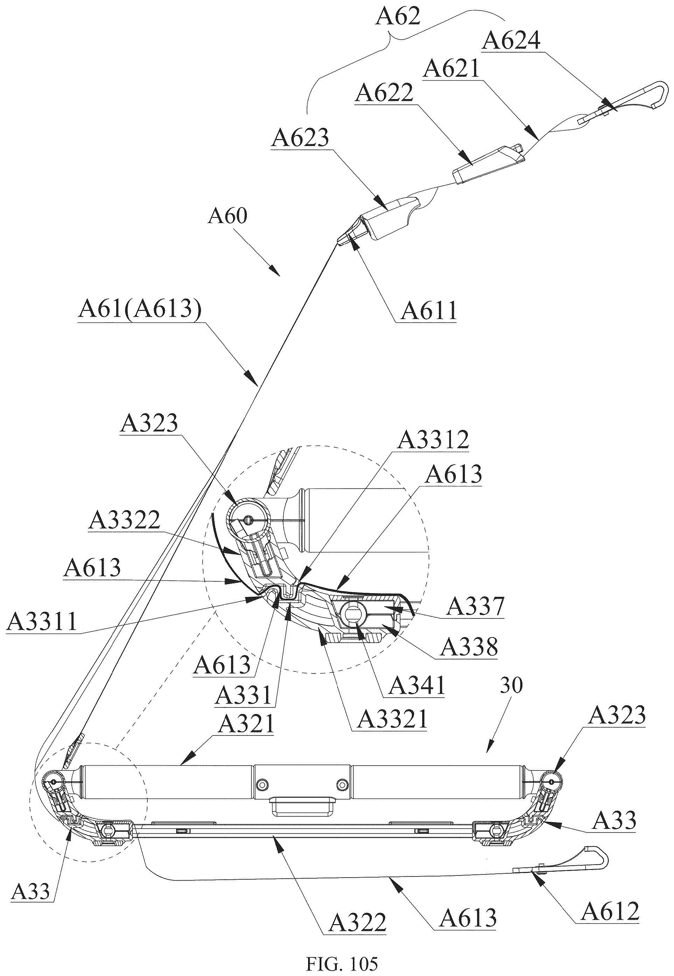

In some embodiments, when the carrier 30 is used as, for example, a stretcher structure, a fixing strap assembly A60 is arranged on the carrier 30 (see FIG. 105). When the carrier 30 is used alone, for example, when the carrier 30 is placed on a vehicle seat, the carrier 30 (more specifically, the support frame arrangement A31) can be stably fixed on the vehicle seat by the fixing strap assembly A60. Referring to FIGS. 88 and 99, in some embodiments, the carrier 30 may include a support frame arrangement A31 and at least one strap guiding mechanism A33. The support frame arrangement A31 includes a first support frame A32 and a second support frame A34 connected to each other. The strap guiding mechanism A33 is connected between the first support frame A32 and the second support frame A34. The strap guiding mechanism A33 is configured to cooperate with the fixing strap assembly A60 to secure the support frame arrangement A31 on the vehicle seat.

Specifically, the strap guiding mechanism A33 has a through-passage A331 (see FIG. 105) through which the restraint strap A613 of the fixing strap assembly A60 can extend. More specifically, as shown in FIG. 99, in this embodiment, two strap guiding mechanisms A33 are correspondingly provided for each support rod A322, and the second support frame A34 is arranged on each support rod A322, and the second support frame A34 extends substantially in the length direction (first direction F1) of the support rod A322. The two strap guiding mechanisms A33 are respectively provided at two ends of the support rod A322, and the two strap guiding mechanisms A33 are connected by the second support frame A34.

In some embodiments, as shown in FIG. 99, the second support frame A34 is in a U-shaped structure, and includes two first connecting rods A341 and a second connecting rod A342 connected between the two first connecting rods A341. Specifically, the two first connecting rods A341 are arranged on the support rod A322 and spaced apart in the length direction of the support rod A322. The two first connecting rods A341 are arranged on the support rod A322 and spaced apart in the left-right direction, for example, and the two first connecting rods A341 can be parallel to each other. The second connecting rod A342 is connected between the two first connecting rods A341 and extends in the length direction (first direction F1) of the support rod A322. Two strap guiding mechanisms A33 are respectively arranged at two ends of the support rod A322, and the two strap guiding mechanisms A33 are respectively connected between the corresponding first connecting rod A341 and the corresponding long rod A323. The two strap guiding mechanisms A33 are connected to each other by the second support frame A34. In this way, the structural strength of the two strap guiding mechanisms A33 can be improved, and damage occurring during the process of clamping the fixing strap assembly A60 can be avoided.

It should be noted that, in some embodiments, the second connecting rod A342 of the second support frame A34 is removably connected between the two first connecting rods A341, for example, by means of a snap connection, a threaded connection, etc. Certainly, in other embodiments, the second connecting rod A342 may also be integrally formed between the two first connecting rods A341.

In some embodiments, as shown in FIG. 99, each of the two second support frames A34 in a U-shaped structure is arranged on the side of the corresponding support rod A322 close to the short rod A321, which can be regarded as the openings of the two second support frames A34 facing each other. Certainly, in other embodiments, each of the two second support frames A34 in the U-shaped structure is arranged on the side of the corresponding support rod A322 away from the short rod A321, which can be regarded as the openings of the two second support frames A34 facing away from each other. Certainly, in other embodiments, one of the two second support frames A34 in the U-shaped structure is arranged on the side of the corresponding support rod A322 adjacent to the short rod A321, and the other of the two second support frames A34 in the U-shaped structure is arranged on the side of the corresponding support rod A322 away from the short rod A321, which can be regarded as the openings of the two second support frames A34 being arranged to face the same direction.

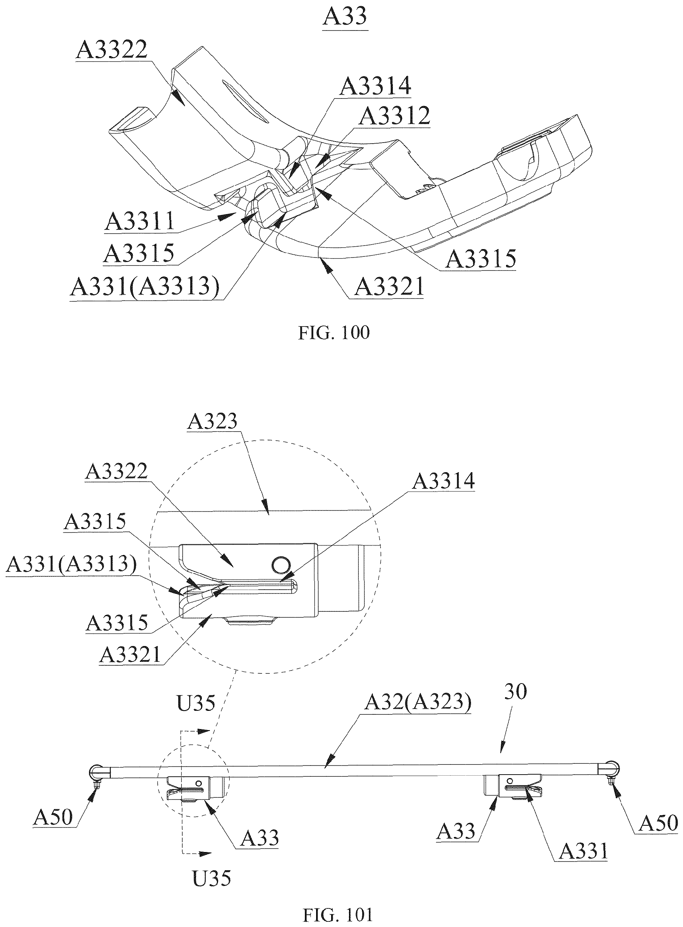

Specifically, in some embodiments, as shown in FIGS. 99 and 100, the strap guiding mechanism A33 includes a clamp body A332 and a cover plate A333. The clamp body A332 includes an upper housing A3321 and a lower housing A3322 connected to the upper housing A3321. The upper housing A3321 and the lower housing A3322 jointly define the through-passage A331. The upper housing A3321 cooperates with the cover plate A333 and is fixed to the second support frame A34 (specifically the first connecting rod A341), and the lower housing A3322 is fixed to the long rod A323.

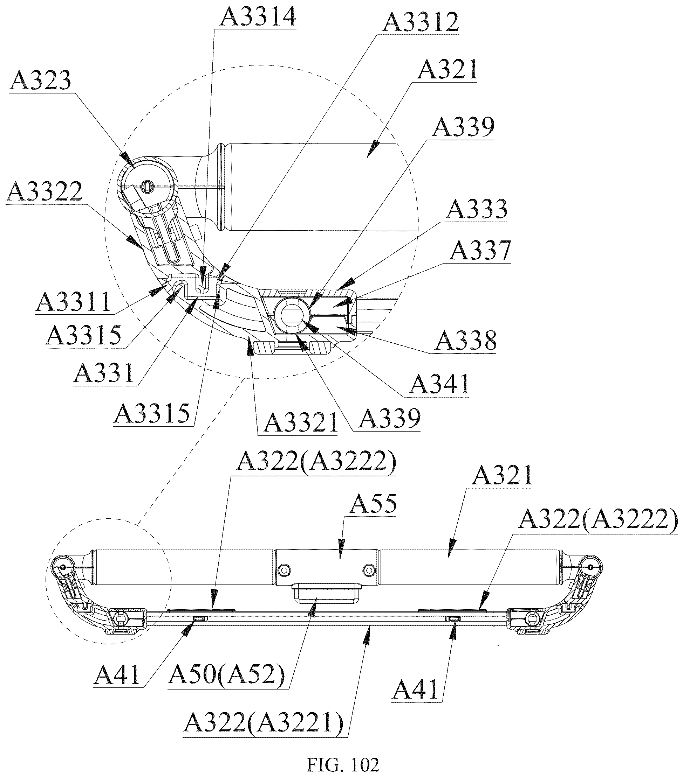

Still referring to FIG. 99, each of the first connecting rod A341, the upper housing A3321 and the cover plate A333 is provided with a first connecting hole A334, and a fastener such as a screw can sequentially extend through the first connecting holes A334 to secure the upper housing A3321 and the cover plate A333 to the first connecting rod A341. Specifically, as shown in FIGS. 99 and 102, the cover plate A333 is provided with a first protruded ridge A337 on the side facing the upper housing A3321, and the upper housing A3321 is provided with a second protruded ridge A338 on the side facing the cover plate A333, so that the structural strength of the cover plate A333 and the upper housing A3321 can be increased. More specifically, each of the first protruded ridge A337 and the second protruded ridge A338 is provided with an avoidance groove A339, and the shape of the avoidance groove A339 is adapted to the shape of the first connecting rod A341. In this way, when the upper housing A3321 and the cover plate A333 are connected to the first connecting rod A341, the first connecting rod A341 can be engaged in the avoidance groove A339, abut against and be restricted between the avoidance groove A339 on the first protruded ridge A337 and the avoidance groove A339 on the second protruded ridge A338. More specifically, a plurality of first protruded ridges A337 and a plurality of second protruded ridges A338 are provided, and are arranged in the length direction of the first connecting rod A341. The first protruded ridges A337 and the second protruded ridges A338 can face each other in the up-down direction, or can be arranged in a staggered manner.

More specifically, the long rod A323 is provided with a mounting member A335 removably connected thereto. Each of the mounting member A335 and the lower housing A3322 is provided with a second connecting hole A336. A fastener such as a screw can extend through each of the second connecting holes A336 in sequence to secure the lower housing A3322 to the long rod A323. In some embodiments, the mounting member A335 may be also non-removably connected to the long rod A323.

Referring to FIGS. 99 to 102, in some embodiments, the through-passage A331 has a first port A3311 and a second port A3312 through both which the fixing strap assembly can extends, and a lateral introduction port A3313 in communication with the first port A3311 and second port A3312. A first convex rib A3314 and a second convex rib A3315 are respectively arranged on the side walls, facing each other, of the through-passage A331. The first convex rib A3314 and the second convex rib A3315 are alternately arranged in the extending direction of the through-passage A331. Specifically, at least one first convex rib A3314 protrudes from the side of the upper housing A3321 facing the lower housing A3322, and at least one second convex rib A3315 protrudes from the side of the lower housing A3322 facing the upper housing A3321. Each first convex rib A3314 and each second convex rib A3315 are alternately arranged in the extending direction of the restraint strap A613 of the fixing strap assembly A60 (see FIG. 105). In some embodiments, the height of the first convex rib A3314 and the height of the second convex rib A3315 can be reasonably arranged so that the restraint strap A613 of the fixing strap assembly A60 located between the first port A3311 and the second port A3312 can be bent around the top of the first convex rib A3314 and the top of the second convex rib A3315 within the through-passage A331, whereby the restraint strap A613 of the fixing strap assembly A60 may be subjected to movement resistance from the first convex rib A3314 and the second convex rib A3315. In this way, the fixing strap assembly A60 can be tightened, which can prevent the fixing strap assembly A60 from easily sliding relative to the support frame arrangement A31.

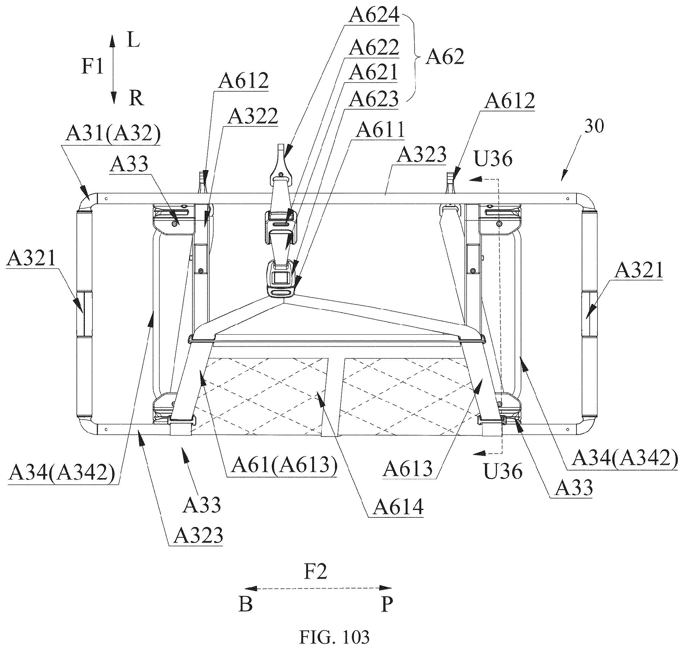

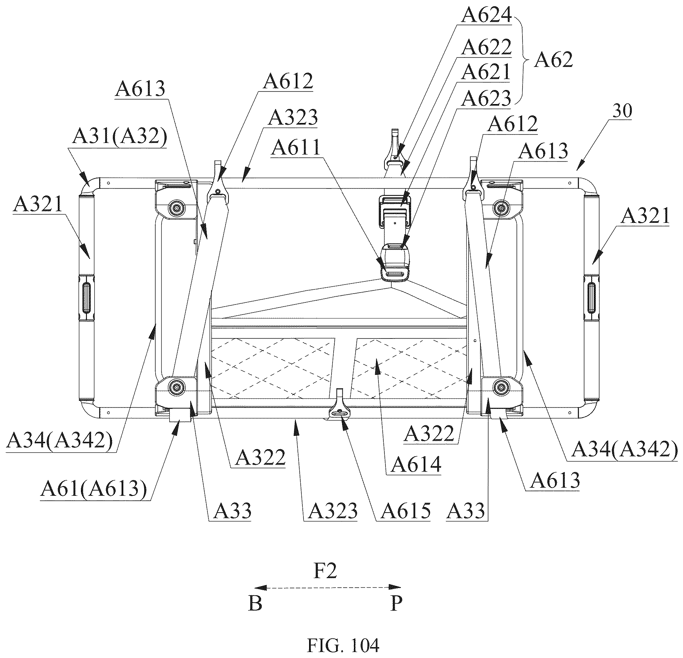

Referring to FIGS. 103 to 105, the specific configuration of the fixing strap assembly A60 is described separately below. The fixing strap assembly A60 may include, for example, a restraint strap assembly A61 and an extension component A62. The restraint strap assembly A61 includes two restraint straps A613 and a shielding net A614 located between the two restraint straps A613. The restraint strap A613 may be, but is not limited to, a webbing with an elastic force. The restraint strap assembly A61 further includes a first connecting end A612 located at an end of each restraint strap A613, a first buckle A611 connected to another end of each of the two restraint straps A613, and a second connecting end A615 located below the shielding net A614. In some embodiments, the first connecting end A612 is an ISOFIX insert, which can be inserted into and cooperates with an ISOFIX socket (not shown) on a vehicle seat. Referring to FIGS. 103 and 104, after winding around the bottom of the support frame arrangement 31 together with the restraint strap A613, the first connecting end A612 is removably connected to the ISOFIX socket of the vehicle seat. Certainly, the type of the first connecting end A612 is not limited to the ISOFIX insert, and it can be any suitable structure such as a hook body and a buckle. Referring to FIG. 104, the second connecting end A615 is substantially a hook, which can be removably connected to the long rod A323 of the first support frame A32. It can be understood that one or more restraint straps A613 may be also provided. The shielding net A614 and the second connecting end A615 may be also omitted in some embodiments.

In some embodiments, the two restraint straps A613 may be different parts of the same strap. More specifically, the same strap is wound around the first buckle A611, and the same strap is divided into two restraint straps A613 located on both sides of the first buckle A611 with the first buckle A611 as a boundary. In some embodiments, the first buckle A611 can slide along the same strap.

Referring to FIG. 103, specifically, the extension component A62 includes an extension strap A621, an adjustment portion A622, a second buckle A623, and a third connecting end A624. The extension strap A621 is, for example, a webbing, and has an end connected to the second buckle A623. The second buckle A623 is removably connected to the first buckle A611. The adjustment portion A622 is arranged on the extension strap A621 and is configured to adjust the available length of the extension strap A621. The third connecting end A624 at another end of the extension strap A621 is generally a hook, which can be removably engaged with a suitable structure of a vehicle seat (e.g., a connecting rod on the top of the vehicle seat or behind the backrest), thereby fixing the support frame arrangement A31 to the vehicle seat. It can be understood that in some embodiments, the adjustment portion A622 may be also omitted.

Specifically, referring to FIGS. 103 to 105, the following will take the case where the carrier 30 is used alone (for example, the carrier 30 is placed and mounted on a vehicle seat) as an example to illustrate the use principle of the carrier 30. When the carrier 30 is in use, the carrier 30 is first placed on the vehicle seat, and then the two restraint straps A613 respectively extend through the two strap guiding mechanisms A33 arranged on the first support frame A32 in the front-rear direction, that is, the second direction F2. And then the second connecting end A615 below the shielding net A614 is engaged with the long rod A323 of the first support frame A32. Specifically, the restraint strap A613 is inserted into the through-passage A331 via the lateral introduction port A3313, a first end of the restraint strap A613 is connected to the first buckle A611, and a second end of the restraint strap A613 extends out of the second port A3312 and is connected to the first connecting end A612. Next, the third connecting end A624 of the extension component A62 is engaged with the connecting rod on the top of the vehicle seat or behind the backrest, and finally the first buckle A611 at the top of the two restraint straps A613 is engaged with the second buckle A623 of the extension component A62, so that the support frame arrangement A31 is fixed to the vehicle seat more firmly.

In some embodiments, as shown in FIGS. 103 to 105, the carrier 30 includes four strap guiding mechanisms A33. Two of the strap guiding mechanisms A33 are spaced apart from the other two of the strap guiding mechanisms A33 in the second direction F2, that is, each second support frame A34 is provided with two strap guiding mechanisms A33. Specifically, the two strap guiding mechanisms A33 located in the front (rear) are spaced apart in the left-right direction, i.e., the first direction F1, that is, each second support frame A34 is provided with one strap guiding mechanism A33 at two ends thereof. When the carrier 30 is placed on the vehicle seat, one of the two strap guiding mechanisms A33 located on the same second support frame A34 is closer to the backrest of the vehicle seat than another of the two strap guiding mechanisms A33. The following will take the use process of the restraint strap A613 as an example to illustrate the use principle of the carrier 30.

In some embodiments, as shown in FIGS. 103 to 105, the restraint strap A613 acts on the strap guiding mechanism A33 of the second support frame A34 away from the backrest of the vehicle seat. Specifically, the restraint strap A613 extends through the through-passage A331 between the upper housing A3321 and the carrying portion A801 (not shown in FIG. 105, see FIG. 79). The first end of the restraint strap A613 extends out of the first port A3311, extends out around the outer side of the first support frame A32, and then extends upwardly and rearwardly. The first buckle A611 is connected to the first end of the restraint strap A613. The second end of the restraint strap A613 extends out of the second port A3312, and extends rearwardly below the second support frame A34 and the support rod A322. The first connecting end A612 is connected to the second end of the restraint strap A613.

Certainly, in other alternative embodiments, the restraint strap A613 can act on two strap guiding mechanisms A33 on the second support frame A34 at the same time. Specifically, for the strap guiding mechanism A33 relatively close to the backrest of the vehicle seat, the restraint strap A613 can extend through the through-passage A331 between the upper housing A3321 of the strap guiding mechanism A33 and the carrying portion A801, the second end of the restraint strap A613 extends out of the first port A3311 and extends rearwardly, and the second end of the restraint strap A613 is connected to the first connecting end A612. The first end of the restraint strap A613 extends between the second support frame A34 and the carrying portion A801 in the guiding direction of the second connecting rod A342, to the strap guiding mechanism A33 relatively far away from the backrest of the vehicle seat. Subsequently, the restraint strap A613 enters the through-passage A311 via the second port A3312 of the strap guiding mechanism A33, and extends upward and rearward after extending around the outer side of the first support frame A32 from the first port A3311. The first buckle A611 is connected to the first end of the restraint strap A613. Certainly, in other alternative embodiments, the first end of the restraint strap A613 may also first extend out of the strap guiding mechanism A33 relatively far away from the backrest of the vehicle seat, the first buckle A611 is connected to the first end of the restraint strap A613, the second end of the restraint strap A613 extends in the guiding direction of the second connecting rod A342 to the strap guiding mechanism A33 relatively close to the backrest of the vehicle seat and extends out, and the first connecting end A612 is connected to the second end of the restraint strap A613.

As described above, when arranged on the support rod A322, the second support frame A34 can be connected to the strap guiding mechanisms A33 located at two ends of the support rod A322, to form an effective support for the strap guiding mechanism A33, thereby improving the structural strength of the strap guiding mechanism A33. In addition, when the restraint strap A613 acts on the strap guiding mechanisms A33 at the two ends of the support rod A322 at the same time, the second support frame A34 (specifically, the second connecting rod A342) also has a guiding function, which enables the restraint strap A613 extending through one of the strap guiding mechanisms 33 to move to another of the strap guiding mechanism A33 in the extending direction of the second connecting rod A342, and then accurately and quickly extend through the other strap guiding mechanism A33.

As can be seen from FIG. 99, the opening directions of the lateral introduction ports A3313 of the two guide mechanisms A33 spaced apart in the second direction F2 are opposite to each other, and the lateral introduction ports A3313 of the respective guide mechanisms A33 are directed toward the adjacent short sides A321. In this way, on the one hand, it is convenient for each restraint strap A613 to enter the corresponding through-passage A331 through the lateral introduction port A3313, and on the other hand, it can effectively avoid the problem that the two restraint straps A613 cannot reliably secure the support frame arrangement A31 due to being gathered together after sliding out of the lateral introduction port A3313. Certainly, in some alternative embodiments, the opening directions of the lateral introduction ports A3313 of the two guide mechanisms A33 spaced apart in the second direction F2 can be opposite to each other.

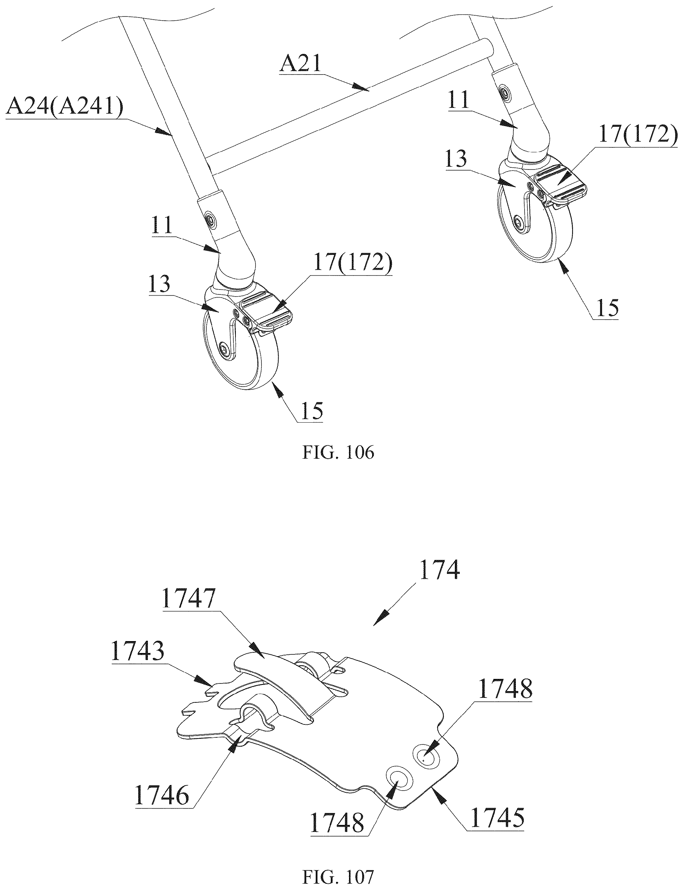

Referring to FIG. 106, in some embodiments, each of the front wheel assembly 12 and the rear wheel assembly 14 includes an adapting base 11, a wheel seat 13, a caster 15, and a brake assembly 17. FIG. 106 shows an exemplary implementation of the connection between the rear wheel assembly 14 and the rear support frame 24 in this embodiment. The adapting base 11 is fixed to the bottom of the rear support frame 24, specifically to the bottom end of the rear rod A241. The wheel seat 13 is pivotally connected to the adapting base 11. The caster 15 is pivotally connected to the wheel seat 13. The brake assembly 17 can simultaneously restrict the rotation of the wheel seat 13 relative to the adapting base 11 and restrict the rotation of the caster 15 relative to the wheel seat 13, thereby achieving the braking and directional locking of the caster 15.

For the configurations of the adapting base 11, wheel base 13, caster 15 and brake assembly 17, reference can be made to the description of FIGS. 34 to 43 as above. The configurations and operating principles of these components are the same as above and will not be described in detail herein. FIG. 107 also shows a perspective view of the brake elastic piece 174.

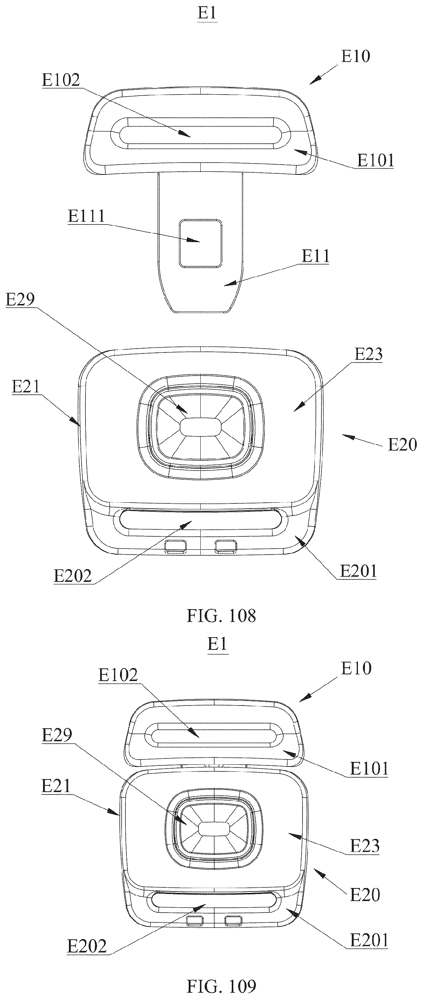

Referring to FIG. 108, an aspect of the present disclosure provides a buckle that can be applied to a carrier. The buckle includes a male buckle and a female buckle. The male buckle and the female buckle are respectively connected to the webbing. For example, the male buckle can be connected to the webbing used as a shoulder strap, and the female buckle can be connected to the webbing used as a crotch strap. Certainly, the webbing connected to the male buckle and the webbing connected to the female buckle can be interchangeable, and the male buckle and the female buckle may be also connected to other webbings. When a child is placed in the carrier, two different webbings can be connected together by engaging and locking the male buckle and the female buckle together, thereby retaining the child within the carrier to prevent the child from being separated from the carrier.

FIG. 108 shows a buckle E1 according to a first example of the present disclosure. The buckle E1 includes a male buckle E10 and a female buckle E20. In FIG. 108, the male buckle E10 and the female buckle E20 are in a separated state. FIGS. 109 to 111 show the male buckle E10 and the female buckle E20 in an engaged state. The male buckle E10 includes a tongue E11. The tongue E11 can be inserted into the female buckle E20, and the female buckle E20 can receive and releasably lock the tongue E11.

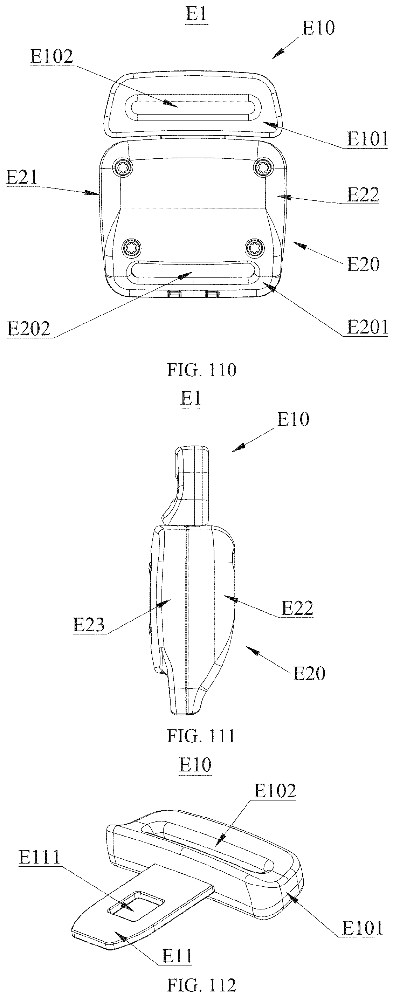

Referring to FIG. 112, the tongue E11 of the male buckle E10 has a locking hole E111. The locking hole E111 can be engaged with a locking device in the female buckle E20 and locked by the locking device to keep the tongue E11 in the female buckle E20. The male buckle E10 further includes a male buckle connecting portion E101. The male buckle connecting portion E101 is provided with a male buckle strap hole E102 configured to be connected to the first webbing.

The tongue E11 may be a single member formed in one piece, and the male buckle connecting portion E101 may also be a single member formed in one piece. The tongue E11 may be made of, for example, a metal material. The male buckle connecting portion E101 may be made of, for example, a plastic material. The tongue E11 and the male buckle connecting portion E101 may be connected together by any known technology, such as welding, riveting, bonding, etc., as long as the tongue E11 and the male buckle connecting portion E101 are firmly connected to each other, which is not described in detail herein.

The male buckle E10 may be formed by only two components, i.e., only the tongue E11 and the male buckle connecting portion E101. The tongue E11 is provided with a locking hole E111 to cooperate with the locking device of the female buckle E20 to achieve the insertion and locking between the male buckle E10 and the female buckle E20. Such a male buckle has a simple configuration, is easy to produce and process, and reduces the cost.

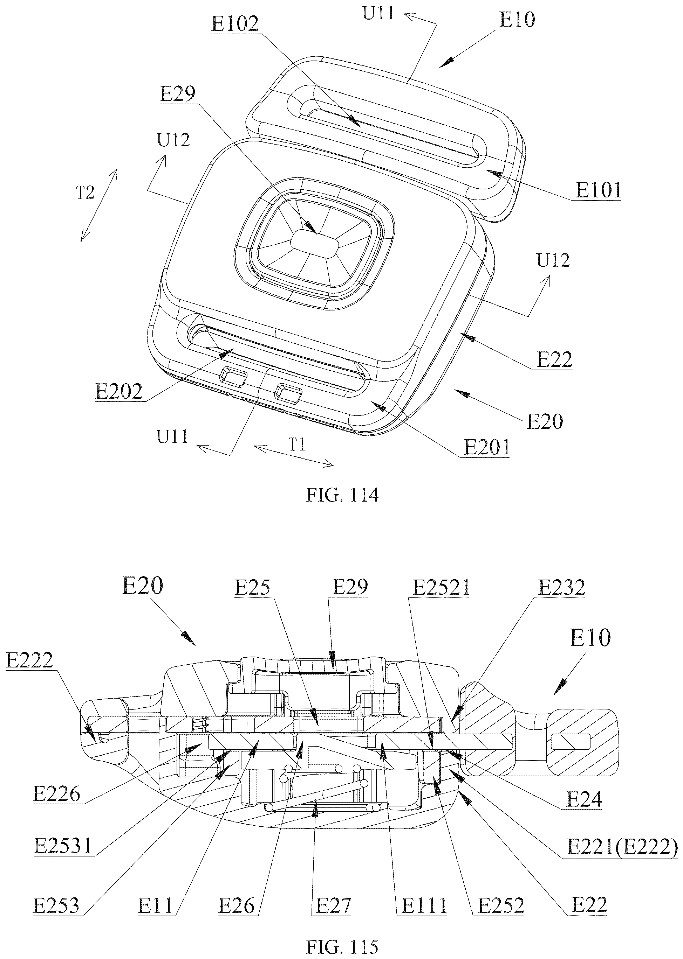

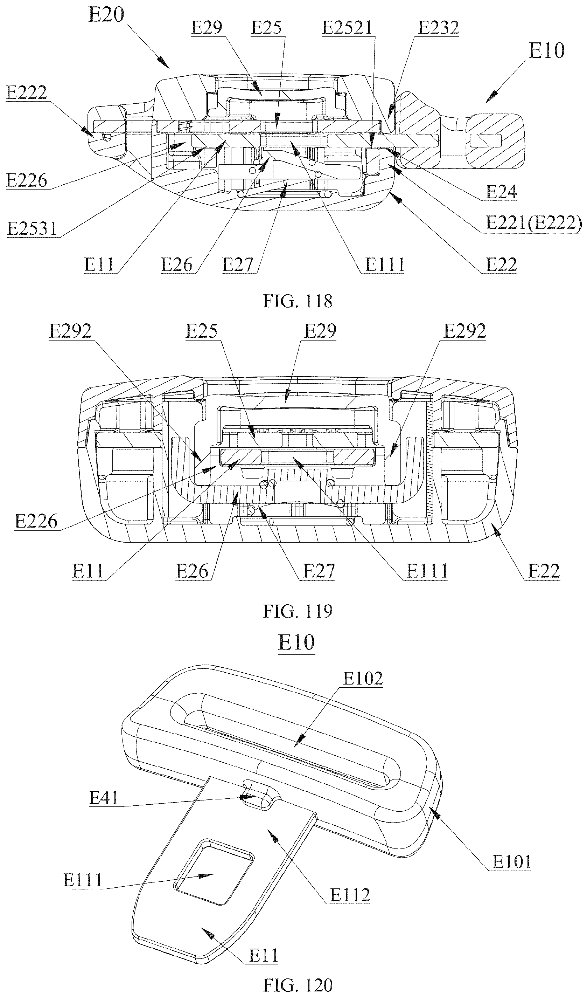

The female buckle E20 includes a female buckle housing E21. An end of the female buckle housing E21 has an insertion port E24 into which the tongue E11 is adapted to be inserted (see FIGS. 115 and 118). The female buckle E20 further includes a female buckle connecting portion E201. The female buckle connecting portion E201 is provided with a female buckle strap hole E202 configured to be connected to a second webbing. The female buckle housing E21 includes a housing body E22 and a cover plate E23 connected to each other. A reinforcing fixing member E25, a locking member E26, a guide member E28, an elastic reset member E27 and other components are arranged in the female buckle housing E21. The female buckle E20 further includes an unlocking member E29. A part of the unlocking member E29 is exposed from the outer surface of the cover plate E23 for user operation. The unlocking member E29 can be operated, for example, be pressed by a user, to release the tongue E11 of the male buckle E10 locked by the female buckle E20 from the female buckle E20, thereby enabling the tongue E11 of the male buckle E10 to be pulled out of the female buckle E20.

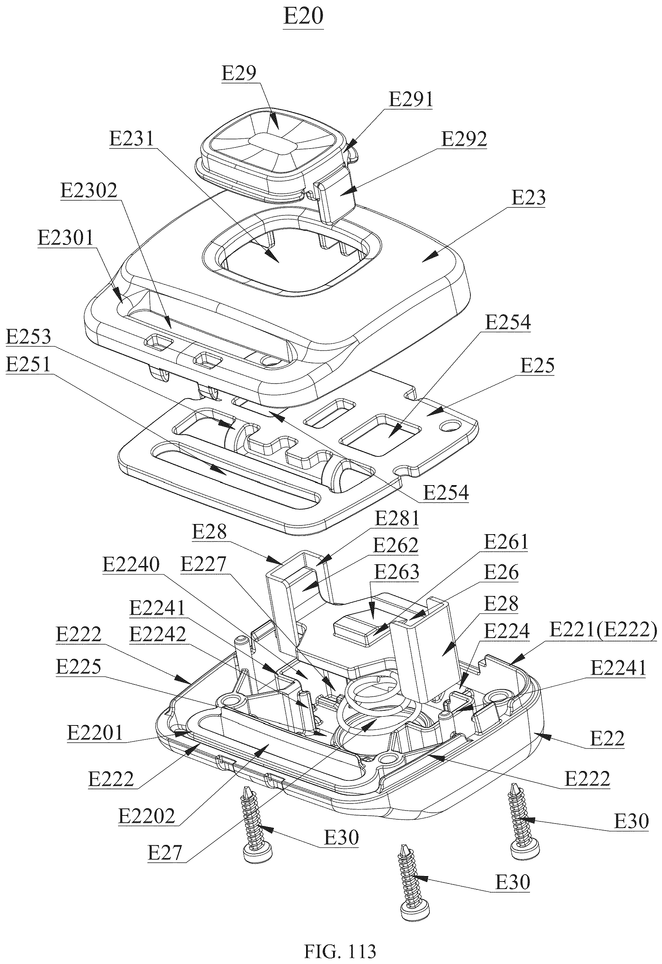

Referring to FIG. 113, the cover plate E23 is provided with an opening E231, and the top of the unlocking member E29 can protrude from the cover plate E23 via the opening E231. The cover plate E23 includes a cover plate extension E2301. The cover plate extension E2301 is provided with a cover plate strap hole E2302. The housing body E22 includes a housing body extension E2201. The housing body extension E2201 is provided with a housing body strap hole E2202. When the housing body E22 and the cover plate E23 are assembled together, the cover plate strap hole E2302 and the housing body strap hole E2202 cooperate with each other to form the female buckle strap hole E202. The housing end wall E221 of the housing body E22 and the cover plate end wall E232 of the cover plate E23 define the socket E24 (see FIGS. 115 and 118). The housing body E22 and the cover plate E23 may be made of the same material, such as plastic, or may be made of different materials.

The housing body E21 has a peripheral wall E222 including the housing end wall E221. The housing body E21 has an open top, and the top can be closed by the cover plate E23. A notch is provided at the top edge of the housing end wall E221 to form the insertion port E24. The peripheral wall E222 of the housing body E21 defines a first receiving cavity E225 at the upper portion of the housing body E21. The reinforcing fixing member E25 is received in the first receiving cavity E225, that is, the reinforcing fixing member E25 is recessed in the housing body E21. When the housing body E22 and the cover plate E23 are assembled together, the reinforcing fixing member E25 is received between the housing body E22 and the cover plate E23. The outer edge of the reinforcing fixing member E25 can substantially abut against the side wall of the first receiving cavity E225, i.e., the peripheral wall E222 of the housing body E21, so that horizontal movement of the reinforcing fixing member E25 in the first receiving cavity E225 is restricted. In addition, the reinforcing fixing member E25 can be fixed to the housing body E22 by fasteners, so that the reinforcing fixing member E25 remains fixed relative to the housing body E22.

As shown in FIG. 113, the cover plate E23 can be connected to the housing body E22 by a plurality of fasteners E30. These fasteners E30 extends through the reinforcing fixing member E25 to secure the reinforcing fixing member E25 between the cover plate E23 and the housing body E22. The reinforcing fixing member E25 can be made of, but not limited to, metal.

A reinforcing fixing member strap hole E251 is provided at a position corresponding to the female buckle strap hole E202 of the reinforcing fixing member E25. The size of the reinforcing fixing member strap hole E251 matches the shape and size of the female buckle strap hole E202. Specifically, the shape of the reinforcing fixing member strap hole E251 is substantially the same as the shape of the female buckle strap hole E202, and the size of the reinforcing fixing member strap hole E251 is also substantially the same as the size of the female buckle strap hole E202. The second webbing extending through the female buckle strap hole E202 can extend through the reinforcing fixing member strap hole E251 at the same time.

In some unillustrated embodiments, the female buckle hole E202 may also be formed in other implementations. For example, the housing body E21 is not provided with the body extension E2201, or the cover plate E23 is not provided with the cover plate extension E2301, and the female buckle hole E202 is formed by only one of the housing body E21 or the cover plate E23. In this case, the reinforcing fixing member E25 can omit the reinforcing fixing member hole E251 accordingly.

Referring to FIGS. 113 and 115, a tongue receiving cavity E226 configure to receive the tongue E11 is formed between the bottom surface of the reinforcing fixing member E25 and the lower portion of the housing body E22. The tongue receiving cavity E226 is formed below the reinforcing fixing member E25 and above the bottom wall E224 of the housing body E22. When the tongue E11 is inserted into the female buckle housing E21 via the insertion port E24, the tongue receiving cavity E226 is configured to receive the tongue E11. A locking protrusion E261 may have a first position and a second position. In this example, the first position is above the second position. When the locking protrusion E261 is at the first position, the locking protrusion E261 protrudes in the tongue receiving cavity E226, and the locking member E26 is engaged with or disengaged from the tongue E11. More specifically, when the locking protrusion E261 is at the first position, the locking protrusion E261 is located in the moving track of the tongue E11 and can be engaged with the tongue, so that the tongue E11 cannot be directly pulled out. When the locking protrusion E261 is at the second position, the locking protrusion E261 retracts from the tongue receiving cavity E226 to allow the tongue E11 to be inserted or pulled out. More specifically, when the locking protrusion E261 is at the second position, the locking protrusion E261 retracts from the moving track of the tongue E11 without interfering with the insertion or pulling out of the tongue E11.

The reinforcing fixing member E25 has a first vertical portion E252 and a second vertical portion E253 that are parallel to each other (see FIGS. 115 and 118). The first vertical portion E252 is formed by bending an end of the reinforcing fixing member E25 adjacent to the insertion port E24 and extending it toward the bottom wall E224 of the housing body E22. The first vertical portion E252 abuts against the housing end wall E221 of the housing body E22, and is provided with a first limiting opening E2521 through which the tongue E11 is adapted to extend. The second vertical portion E253 is formed in the middle of the reinforcing fixing member E25, and is the same as the first vertical portion E252, also facing the bottom wall E224 of the housing body E22. The second vertical portion E253 has a second limiting opening E2531 through which the tongue E11 is adapted to extend. The first limiting opening E2521 and the second limiting opening E2531 are at the same distance from the main body of the reinforcing fixing member E25, that is, they are located at the same height. The first limiting opening E2521 and the second limiting opening E2531 are aligned with each other in the longitudinal direction of the housing body E22, and are also aligned with the insertion port E24. The size of the first limiting opening E2521 and the size of the second limiting opening E2531 is slightly greater than the cross-sectional size of the widest portion and/or the thickest portion of the tongue E11. The first limiting opening E2521 provides guidance for the tongue E11 to be inserted into the tongue receiving cavity E226 and to pass over the locking member E26, and when the tongue E11 is engaged with the locking member E26, the first limiting opening E2521 and the second limiting opening E2531 limit the tongue E11, thereby preventing the tongue E11 from shaking in the tongue receiving cavity E226. The reinforcing fixing member E25 may be made of a metallic material, or a non-metallic material such as a fiber-reinforced composite material.

As shown in FIG. 113, the housing body E22 has two vertical walls E2241 extending vertically upward from the bottom wall E224 of the housing body E22. The two vertical walls E2241 define a second receiving cavity E227. The locking member E26 and the elastic reset member E27 are both located in the second receiving cavity E227. The locking member E26 can be slidably mounted in the second receiving cavity E227 in the vertical direction. The sliding direction of the locking member E26 is, for example, perpendicular to the moving direction of the tongue E11. The elastic reset member E27 is located below the locking member E26, and the bottom wall E224 provides support and positioning for the base portion of the spring. The elastic reset member E27 is adapted to bias the locking member E26 so that the locking member E26 has a tendency to move upwardly. In particular, the elastic reset member E27 is adapted to push the locking member E26 upwardly so that the locking member E26 is engaged with the tongue E11.

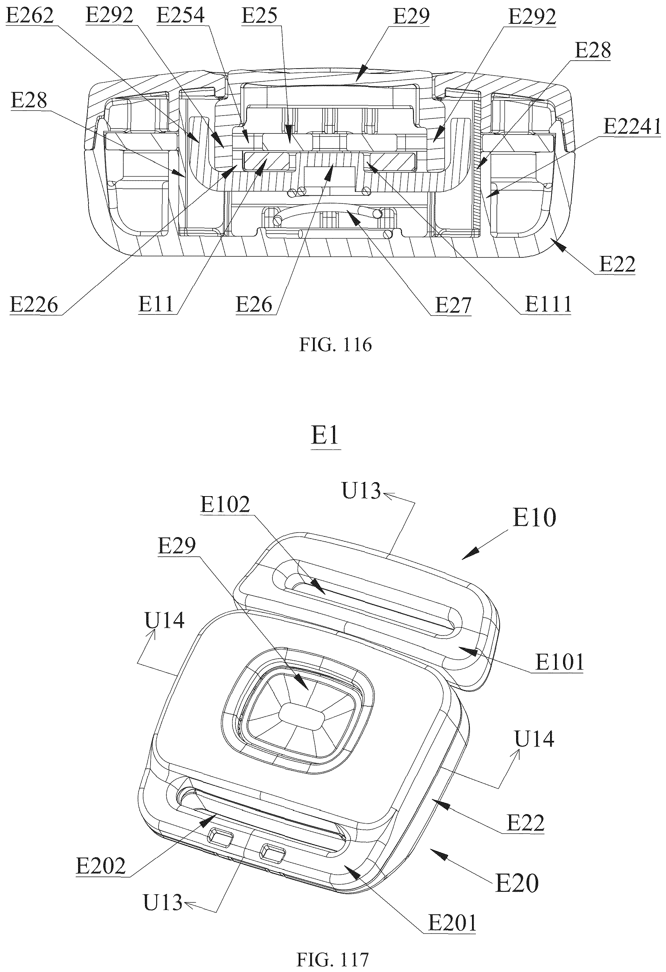

The locking member E26 is fixed by both the reinforcing fixing member E25 and the housing body E22. Specifically, the female buckle E20 includes two guide members E28. The bottom ends of the two guide members E28 are respectively mounted in the two vertical walls E2241. The top ends of the two guide members E28 may be also respectively mounted in the corresponding vertical walls of the cover plate E23. The locking member E26 has two arms E262 extending outwardly. The two arms E262 are respectively slidably received in the two guide members E28. The cross-section of the guide member E28 is C-shaped, and provided with a sliding passage E281 in which the arm E262 is received and allowed to slide. The reinforcing fixing member E25 is provided with two rectangular holes E254. The two guide members E28 extend through the two rectangular holes E254 respectively. In some embodiments, the size of the rectangular hole E254 matches the size of the guide member E28 so that the guide member E28 remains vertical relative to the bottom wall E224 of the housing body E22. The locking member E26 can slide in the vertical direction by the two guide members E28 vertically arranged. Referring to FIG. 116, in some embodiments, the size of the rectangular hole E254 is greater than the size of the guide member E28, and the guide member E28 and the arm E262 can be allowed to extend through the rectangular hole E254. In addition, the two guide members E28 limit the movement of the locking member E26 in the longitudinal direction T2 and the transverse direction T1 (T1 and T2 are shown in FIG. 114) of the female buckle E20.

Referring to FIG. 113, in some embodiments, the size of the rectangular hole E254 may be greater than that of the guide member E28. Each guide member E28 is in contact with a portion of the hole wall of the corresponding rectangular hole E254, for example, in contact with a portion of the three hole walls of the rectangular hole E254 that are adjacent to each other. The vertical wall E2241 is formed with a groove structure E2240 configure to receive the guide member E28, and bosses E2242 are arranged on two opposite side walls of the groove structure E2240, respectively. The space between the boss E2242 and the bottom wall of the groove structure E2240 is adapted to be engaged with the side wall of the guide member E28, so as to stably hold the guide member E28 in the groove structure E2240.

In some embodiments, the vertical wall of the cover plate E23 may also form a groove structure configured to receive the guide member E28, and the groove structure may also be provided with a boss configured to be engaged with the side wall of the guide member E28, so that the top of the guide member E28 can be stably maintained in the groove structure formed by the vertical wall of the cover plate E23.

The locking member E26 is configured to operably hold the tongue E11 in the tongue receiving cavity E226 in a releasable manner. The locking member E26 has a locking protrusion E261. The locking protrusion E261 is adapted to protrude into the locking hole E111 to engage the locking member E26 with the tongue E11. The locking protrusion E261 has a driving slope E263 at an end adjacent to the insertion port E24. The driving slope E263 gradually rises from the front edge of the locking member E26 to the rear edge of the locking member E261 to allow the tongue E11 to be inserted into the tongue receiving cavity E226 and pass over the locking protrusion E261. The rear end of the locking protrusion E261 drops sharply to prevent the tongue E11 from being disengaged from the locking member E26 when the locking protrusion E261 protrudes into the locking hole E111.

The unlocking member E29 is configured to be operable, for example, pressable. When the unlocking member E29 is operated, the locking protrusion E261 of the locking member E26 is disengaged from the tongue E11. The unlocking member E29 includes an unlocking member body E291 and two push rods E292 extending downwardly. The unlocking member body E291 is located between the cover plate E23 and the reinforcing fixing member E25. Referring to FIG. 116, the two push rods E292 respectively extend through the two rectangular holes E254 of the reinforcing fixing member E25, and have ends abutting against the locking member E26. The two push rods E292 are adapted to push the locking member E26 to be disengaged from the locking hole E111 when the unlocking member E29 is operated, for example, pressed. The elastic reset member E27 is stretchable. When the locking member E26 is pushed downwardly, the elastic reset member E27 is compressed, so that the locking member E26 can move downwardly. At this time, the locking protrusion E261 of the locking member E26 will be disengaged from the locking hole E111, so that the tongue E11 can be released from the locking member E26. In the embodiment shown in FIG. 113, the elastic reset member E27 is a coil spring. In some other embodiments, the elastic reset member E27 can be other types of springs such as leaf springs, disc springs, and special-shaped springs. In some other embodiments, the elastic reset member E27 may be also other elastic members having elasticity.

FIGS. 114 to 116 show the buckle E1 in a case where the unlocking member E29 is not pressed down when the male buckle E10 is engaged with the female buckle E20. When the locking protrusion E261 of the locking member E26 is engaged with the locking hole E111 of the tongue E11, the tongue E11 is not able to be pulled out of the female buckle E20 until the unlocking member E29 is pressed down. In a case where the unlocking member E29 is not pressed down, if the male buckle E10 and/or the female buckle E20, or the first webbing and/or the second webbing is pulled in a direction opposite to the direction in which the male buckle E10 is engaged with the female buckle E20, the pulling force is transmitted to the locking member E26, and the force applied to the locking member E26 is transmitted to the two guide members E28 through the two arms E263 of the locking member E26, respectively. Since the guide members E28 are mounted on the housing body E22 and the cover plate E23, and are reinforced by the reinforcing fixing member E25, and the reinforcing fixing member E25 is tightly fixed between the housing body E22 and the cover plate E23, the tension force applied to the tongue E11 can be applied to the entire female buckle housing E21.

FIGS. 117 to 119 show the buckle E1 in a case where the unlocking member E29 is pressed down after the male buckle E10 is engaged with the female buckle E20. When the unlocking member E29 is pressed down, the push rod E292 pushes the locking member E26 downwardly, and the locking member E26 transmits the push force received to the elastic reset member E27, the elastic reset member E27 is forced to be compressed, thereby allowing the locking member E26 to move downwardly. The downward movement of the locking member E26 causes the locking protrusion E261 entering the locking hole E112 to be separated from the locking hole E112, whereby the locking protrusion E261 is disengaged from the tongue E11, thereby releasing the locking on the tongue E11.

The female buckle E20 has a simple configuration and only requires one reinforcing fixing member to ensure sufficient strength. Compared with existing buckles, the buckle proposed by the present disclosure has fewer parts, has low cost, is easy to manufacture, and reduces assembling processes, thereby improving production and assembling efficiency. In addition, the buckle proposed by the present disclosure is light in weight and easy to operate.

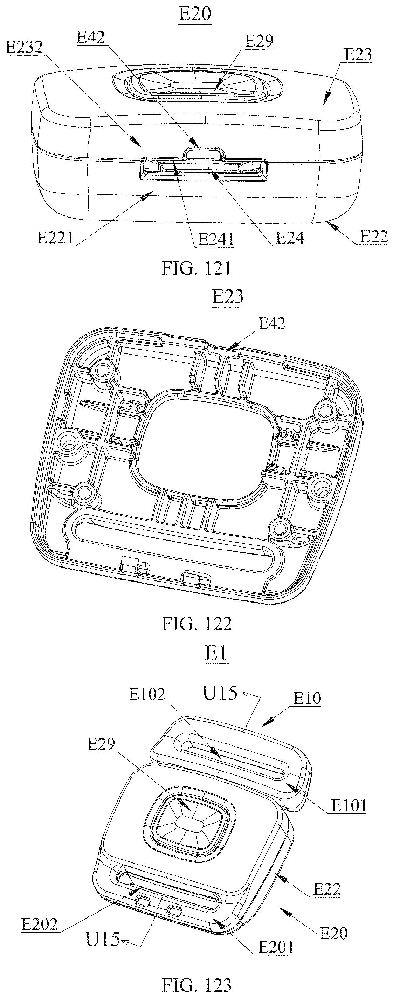

FIGS. 120 and 121 respectively show a male buckle and a female buckle of a buckle according to a second example of the present disclosure. The difference between the buckle in the second example and the buckle in the first example is that an anti-misalignment structure is additionally provided. Except for the anti-misalignment structure, the buckle in the second example has the same configuration as the buckle in the first example, and the same parts therebetween will not be repeatedly described herein, and the reference numerals applied to the buckle in the first example are also applied to the buckle in the second example.

As shown in FIG. 120, an anti-misalignment protrusion E41 is arranged on a first surface E112 of the tongue E11 of the male buckle E10, and extends from the male buckle connecting portion E101 toward the tongue E11. As shown in FIG. 121, an anti-misalignment notch E42 adjacent to the upper edge E241 of the insertion port E24 is arranged on the cover plate end wall E232 of the cover plate E23 of the female buckle E20. FIG. 122 shows the cover plate E23 provided with the anti-misalignment notch E42. The size of the anti-misalignment notch E42 is slightly greater than the size of the anti-misalignment protrusion E41, so the anti-misalignment protrusion E41 can enter or extend through the anti-misalignment notch E42.

In this example, the anti-misalignment notch E42 is located at the cover plate end wall E232 of the cover plate E23. In other examples, the anti-misalignment notch E42 may be also located at the housing end wall E222 of the housing body E22, and accordingly, the anti-misalignment protrusion E41 is located at a second surface of the tongue E11 opposite to the first surface E112. In other words, the anti-misalignment notch E42 can be located on the side where the cover plate E23 of the female buckle housing E21 is located, or on the side where the housing body E22 is located. Correspondingly, the anti-misalignment protrusion E41 can be located on the first surface of the tongue E11, or on the second surface of the tongue E11. The implementation of the anti-misalignment protrusion and the anti-misalignment notch is not limited to the above-described implementations. It can be understood that the anti-misalignment protrusion and the anti-misalignment notch can adopt other implementations as long as the anti-misalignment function can be achieved. For example, when the anti-misalignment notch E42 is located on the side where the cover plate E23 of the female buckle housing E21 is located, in addition to the notch provided on the cover plate end wall E232 of the cover plate E23, the first vertical portion E252 of the reinforcing fixing member E25 adjacent to the insertion port E24 is also provided with a notch. The notch of the first vertical portion E252 is located above the first limiting opening E2521 and corresponds in position to the notch of the cover plate end wall E232. The notch of the cover plate end wall E232 and the notch of the first vertical portion E252 together form the anti-misalignment notch.

The anti-misalignment protrusion E41 is adapted to enter or extend through the anti-misalignment notch E42, to define the orientation of the tongue E11 of the male buckle E10 when it is inserted into the female buckle E20. Specifically, the anti-misalignment structure formed by the anti-misalignment protrusion E41 and the anti-misalignment notch E42 allows the tongue E11 of the male buckle E10 to engage with the locking member E26 of the female buckle E20 only when the male buckle E10 is inserted into the female buckle E20 in a proper orientation, while when the male buckle E10 is inserted into the female buckle E20 in a reverse orientation, the anti-misalignment structure prevents the tongue E11 of the male buckle E10 from being engaged with the locking member E26 of the female buckle E20.

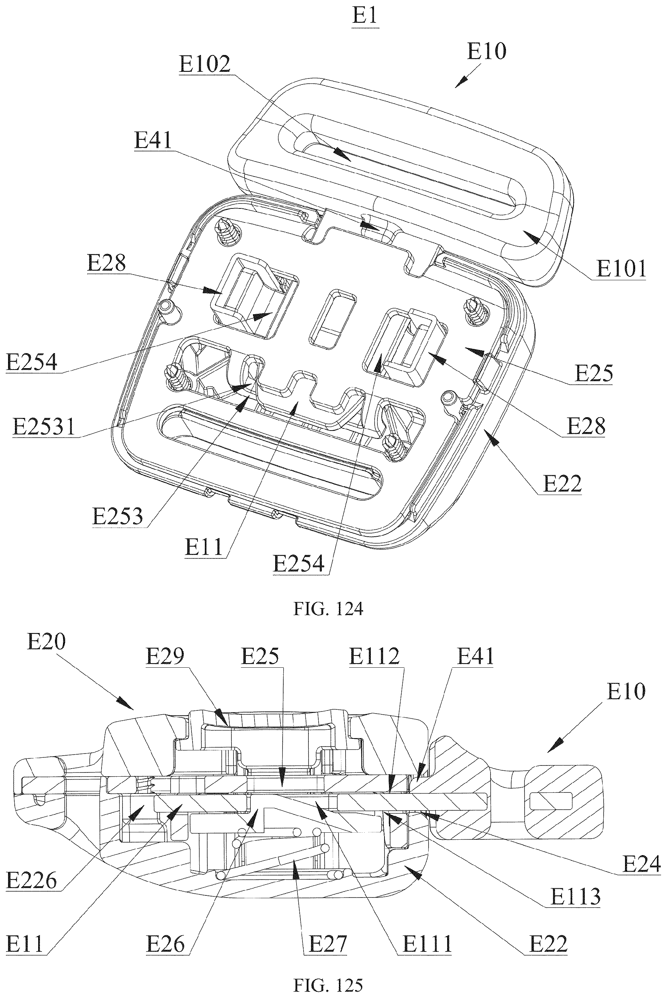

FIGS. 123 to 125 show a buckle E1 when the male buckle E10 is inserted into the female buckle E20 in the proper orientation. When the tongue E11 of the male buckle E10 is inserted into the insertion port E24 with its first surface E112 having the anti-misalignment protrusion E41 facing the cover plate E23, the anti-misalignment protrusion E41 enters the anti-misalignment notch E42 to allow the tongue E11 to be further inserted into the insertion port E24 until the tongue E11 is engaged with the locking member E26.

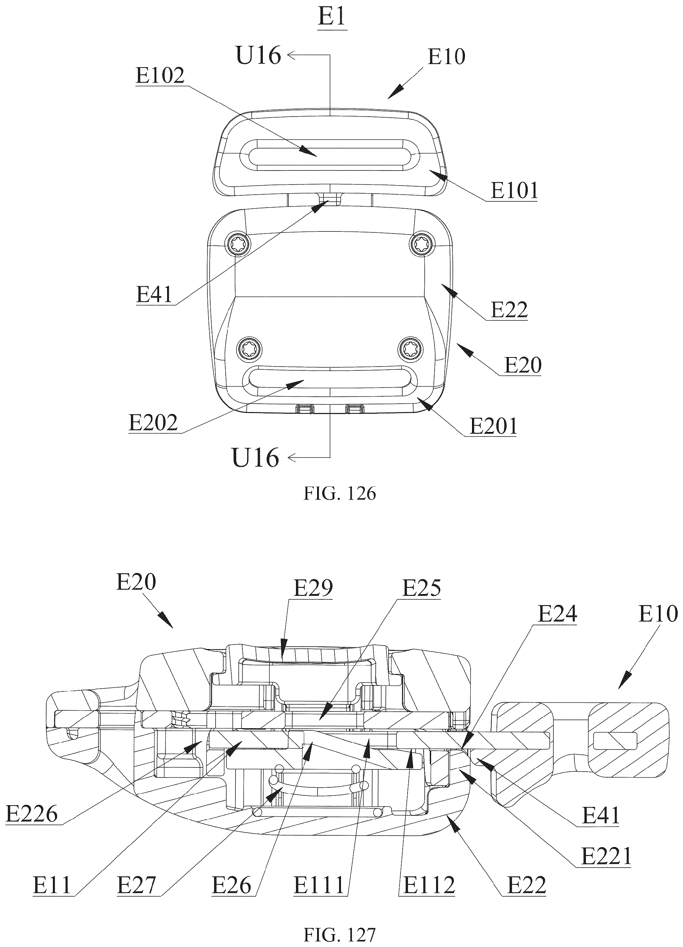

FIGS. 126 to 127 show the buckle E1 when the male buckle E10 is inserted into the female buckle E20 in the reverse orientation. When the tongue E11 of the male buckle E10 is inserted into the insertion port E24 with its second surface E113 opposed to the first surface E112 facing the cover E23, the housing end wall E221 of the housing body E22 abuts against the anti-misalignment protrusion E41 to block the tongue 11 from being further inserted into the insertion port E24. In this case, the tongue E11 cannot be engaged with the locking member E26.

Due to the arrangement of the anti-misalignment structure, it is possible to avoid the situation where the male buckle E10 is mounted reversely relative to the female buckle E20, thereby ensuring the safety of the buckle. In addition, when the male buckle E10 is mounted reversely relative to the female buckle E20, since the male buckle E10 is not able to be locked, the user can be reminded that the male buckle E10 is mounted reversely relative to the female buckle E20, and accordingly turn over the male buckle E10 to mount it again.

In the above embodiment, the anti-misalignment protrusion E41 is arranged on the male buckle E10, and the anti-misalignment notch E42 is arranged on the female buckle E20. In other embodiments, the anti-misalignment protrusion E41 may be arranged on the female buckle E20, and the anti-misalignment notch E42 may be arranged on the male buckle E10. In addition, each of the male buckle E10 and the female buckle E20 may be provided with both the anti-misalignment protrusion E41 and the anti-misalignment notch E42. For example, the first surface E112 of the male buckle E10 is provided with a first anti-misalignment protrusion, the second surface E113 is provided with a first anti-misalignment notch, the cover plate end wall E232 of the cover plate E23 of the female buckle E20 is provided with a second anti-misalignment notch, and the housing end wall E221 of the housing body E22 is provided with a second anti-misalignment protrusion, and vice versa. In addition, a plurality of anti-misalignment protrusions and a plurality of anti-misalignment notches may be provided.

Another aspect of the present disclosure provides a carrier. The carrier includes a first webbing, a second webbing and the buckle E1 as described in the above aspect. The first webbing is connected to the male buckle E10 of the buckle E1, and the second webbing is connected to the female buckle E20 of the buckle E1. The carrier according to the present disclosure may be configured to carry people such as a child, and may be also configured to carry pets, etc. The carrier includes various tools suitable for carrying people or pets, such as strollers, safety seats, baskets, stretchers, carrycot, etc. The above are only some examples of the carrier according to the present disclosure, and the carrier according to the present disclosure is not limited thereto. When a child or a pet is placed in the carrier, the male buckle E10 and the female buckle E20 of the buckle E1 are engaged and locked together, so that the first webbing and the second webbing can be connected together, thereby retaining the child or pet in the carrier to prevent the child or pet from being separated from the carrier.

The technical features of the above-described embodiments can be combined arbitrarily. In order to make the description concise, all possible combinations of the technical features in the above-described embodiments are not described. However, as long as there is no contradiction in the combination of these technical features, they should be considered to be fallen within the scope of this specification. For example, the buckle assemblies shown in FIGS. 57 to 61 and FIGS. 64 to 72 can be applied to the carrier in any of the embodiments (such as the carrier shown in FIGS. 10 to 11, FIGS. 44 to 49, FIG. 88, and FIGS. 103 to 105). For example, the carrier shown in FIGS. 50 to 105 can be engaged with the frame 20 in FIGS. 1 to 49 through the engagement mechanism 60. For example, the carrier shown in FIGS. 1 to 78 can be engaged with the frame shown in FIGS. 79 to 105 by providing a corresponding second locking mechanism A40. For example, the buckle shown in FIGS. 108 to 127 can replace the buckle assembly shown in FIGS. 71 to 72. The combination of the technical features of different embodiments of the present disclosure will not be repeatedly described herein.

The above-described embodiments only express several implementations of the present disclosure, and the description thereof is relatively specific and detailed, but cannot be understood as limiting the scope of the present disclosure. It should be noted that, for those of ordinary skill in the art, several modifications and improvements can be made without departing from the concept of the present disclosure, which are within the protection scope of the present disclosure. Therefore, the protection scope of the present disclosure shall be subject to the attached claims.

## Claims

1. A wheeled movable device, comprising:
a carrying frame;
a carrier removably mounted on the carrying frame; and
an engaging mechanism configured to removably engage the carrier on the carrying frame, the engaging mechanism having an engagement state and a release state, wherein when the engaging mechanism is in the engagement state, the carrier is locked with the engaging mechanism, and when the engaging mechanism is in the release state, the carrier is capable of being separated from the engaging mechanism;
wherein the engaging mechanism includes an engaging member and an engaging groove, the carrier includes an engaging rod received in the engaging groove, and the engaging member is movable between a first position where the engaging member extends into the engaging groove to secure the engaging rod in the engaging groove, and a second position where the engaging member retracts from the engaging groove to allow the engaging rod to be separated from the engaging groove.

2. The wheeled movable device of claim 1, wherein the engaging member includes an engaging tongue and an operating part connected to each other, the operating part is operable to drive the engaging tongue to move between the first position where the engaging tongue extends into the engaging groove, and the second position where the engaging tongue retracts from the engaging groove, and an end of the engaging tongue has a guide slope in contact with the engagement rod.

3. The wheeled movable device of claim 1, wherein the carrier includes a strap guiding mechanism arranged on the engaging rod, the engaging mechanism is further provided with a limiting notch in communication with the engaging groove, and the strap guiding mechanism is positioned within the limiting notch.

4. The wheeled movable device of claim 2, wherein:
the engaging rod is movable between a third position close to the engaging tongue and a fourth position away from the engaging tongue, in the engaging groove;
when the engaging rod is at the third position, the engaging member fixes the engaging rod in the engaging groove;
when the engaging rod is at the fourth position, the engaging rod is separated from the engaging member; and
when the engaging member is at the first position, a distance between the engaging tongue and a side wall of the engaging groove is greater than a width of the engaging rod.

5. The wheeled movable device of claim 1, further comprising:
a wheel assembly including a front wheel assembly and a rear wheel assembly;
a frame including a front rod connected to the front wheel assembly and a rear rod connected to the rear wheel assembly, one of the front rod and the rear rod being pivotally connected to the carrying frame to form a first pivot point, and the front rod and the rear rod being pivotally connected to each other to form a second pivot point, wherein the frame has an unfolded state and a folded state; and
optionally, a first locking mechanism arranged between the frame and the carrying frame, the first locking mechanism including a first fixing base and a second fixing base pivotally connected to each other to form a third pivot point, wherein the first fixing base is fixed to the other of the front rod and the rear rod, and the second fixing base is pivotally connected to the carrying frame to form a fourth pivot point,
wherein the first locking mechanism has a locked state and an unlocked state, wherein when the first locking mechanism is in the locked state, the first fixing base and the second fixing base are fixed relative to each other, and the frame is capable of being locked in the unfolded state, and wherein when the first locking mechanism is in the unlocked state, the first fixing base and the second fixing base are rotatable relative to each other to allow the frame to switch between the unfolded state and the folded state.

6. The wheeled movable device of claim 5, wherein:
the first locking mechanism further includes a first locking member, a first locking groove, a second locking groove and an unlocking member;
the first locking groove is arranged on the first fixing base, and the second locking groove is arranged on the second fixing base;
when the first locking mechanism is in the locked state, the first locking member is locked and cooperated with both the first locking groove and the second locking groove; and
the unlocking member is movably mounted on the first fixing base, and the unlocking member is capable of driving the first locking member to be disengaged from one of the first locking groove and the second locking groove, to enable the first locking mechanism to switch from the locked state to the unlocked state.

7. The wheeled movable device of claim 6, wherein:
the first locking mechanism further includes a first elastic member having two ends respectively abutting against the first locking member and the second fixing base, the first elastic member causing the first locking member to have a tendency to move toward the first locking groove; and/or
the unlocking member includes a pressing part and a pushing part connected to each other, the first fixing base is provided with a sliding groove for slidably receiving the pressing part, and provided with a limiting hole corresponding to the pushing part, and the pushing part extends through the limiting hole and is in contact with the first locking member.

8. The wheeled movable device of claim 5, wherein the frame further includes a first transition member and a second transition member both fixed on the carrying frame, one of the front rod and the rear rod is pivotally connected to the first transition member, the other of the front rod and the rear rod is fixed to the first fixing base, and the second fixing base is pivotally connected to the second transition member.

9. The wheeled movable device of claim 5, wherein:
the frame further includes a pivot base through which the front rod and the rear rod are pivotally connected to each other; and/or
the frame includes two front rods and two rear rods, the two front rods being arranged outside the two rear rods, and the first locking mechanism is arranged on the front rod.

10. The wheeled movable device of claim 5, wherein the wheel assembly includes:
an adapting base connected to the front rod or the rear rod;
a universal shaft fixed to the adapting base, the universal shaft being provided with a toothed plate;
a wheel seat pivotally connected to the universal shaft;
a caster pivotally connected to the wheel seat; and
a brake assembly configured to restrict a rotation of the wheel seat relative to the adapting base and restrict a rotation of the caster relative to the wheel seat, the brake assembly including a pedal and a brake elastic piece both pivotally connected to the wheel seat,
wherein the brake elastic piece includes an engaging tooth and a brake portion, the pedal is configured to drive the engaging tooth to be engaged with the toothed plate to restrict the rotation of the wheel seat relative to the adapting base, and/or the pedal is configured to drive the brake portion to abut against the caster to restrict the rotation of the caster relative to the wheel seat.

11. A carrier, comprising:
a support frame arrangement including a first support frame and a second support frame connected to each other, wherein the first support frame includes two short rods and two long rods sequentially connected, and a support rod connected between the two long rods, and the second support frame includes a first connecting rod arranged on the support rod; and
at least one strap guiding mechanism connected between the long rods and the first connecting rod, the strap guiding mechanism being configured to cooperate with a fixing strap assembly to secure the support frame arrangement on a seat.

12. The carrier of claim 11, wherein:
two first connecting rods are provided, and the two first connecting rods are arranged on the support rod and spaced apart in a length direction of the support rod;
the second support frame further includes a second connecting rod connected between the two first connecting rods; and/or
two strap guiding mechanisms are respectively arranged at two ends of the support rod, and the two strap guiding mechanisms are respectively connected between a corresponding first connecting rod and a corresponding long rod.

13. The carrier of claim 12, wherein:
the fixing strap assembly includes a restraint strap assembly including at least one restraint strap;
the strap guiding mechanism includes a clamp body including an upper housing and a lower housing connected to the upper housing, the upper housing and the lower housing jointly defining a through-passage, the through-passage having a first port and a second port for the restraint strap to extend through; and
the upper housing is fixed to the first connecting rod, and the lower housing is fixed to the long rod.

14. The carrier of claim 11, wherein:
in two strap guiding mechanisms arranged at two ends of the support rod, when the restraint strap extends through one of the two strap guiding mechanisms away from a backrest of the seat, an end of the restraint strap extends through the first port and extends around an outer side of the first support frame, and another end of the restraint strap extends through the second port and extends out below the second support frame and the support rod; or
when the restraint strap extends through the two strap guiding mechanisms arranged at the two ends of the support rod, the restraint strap extends between the second support frame and a carrying portion of a covering and extends in a guiding direction of the second connecting rod, and two ends of the restraint strap respectively extend through the two strap guiding mechanisms, respectively, and extend from the outer side of the first support frame.

15. A wheeled movable device, comprising:
the carrier of any one of claims 11 to 14; and
a wheel assembly including a front wheel assembly and a rear wheel assembly;
a frame including a front support frame connected to the front wheel assembly and a rear support frame connected to the rear wheel assembly, the front support frame and the rear support frame being pivotally connected to each other such that the frame is switchable between an unfolded state and a folded state, and the frame is provided with an engaging groove;
wherein the carrier is provided with a second locking mechanism including a second locking member, the second locking member being movable on the carrier and having a locked position and an unlocked position; and
wherein when the carrier is mounted on the frame and the second locking member is at the locked position, the second locking member extends into the engaging groove to lock the carrier with the frame, and when the second locking member is at the unlocked position, the second locking member retracts from the engaging groove to release locking between the carrier and the frame.

16. The wheeled movable device of claim 15, wherein:
the second locking mechanism is arranged on the support rod of the support frame arrangement; and/or
when the frame is in the unfolded state, the carrier restricts the frame from switching to the folded state through removable connection with the frame, an upper end of the front support frame and an upper end of the rear support frame are away from each other, and a lower end of the front support frame and a lower end of the rear support frame are away from each other, and when the frame is in the folded state, the carrier is separated from the frame, the upper end of the front support frame and the upper end of the rear support frame approach each other, and the lower end of the front support frame and the lower end of the rear support frame approach each other.

17. The wheeled movable device of claim 15, wherein the second locking mechanism further includes a driving member operably connected to the second locking member, the driving member is movable on the carrier and has a first position and a second position, when the driving member is at the first position, the second locking member is at the locked position, and when the driving member is at the second position, the second locking member is at the unlocked position.

18. The wheeled movable device of claim 15, wherein the frame includes at least one support base, each support base being provided with a support groove, and the engaging groove is arranged on the support base and in communication with the support groove; and
wherein when the carrier is mounted on the frame, the support rod is engaged in the support groove, when the second locking member is at the locked position, the second locking member extends into the engaging groove, and when the second locking member is at the unlocked position, the second locking member retracts from the engaging groove.

19. The wheeled movable device of claim 18, wherein the support base includes a connecting section, a supporting section and a limiting section sequentially connected and arranged at an included angle, the connecting section, the supporting section and the limiting section form a supporting groove, the connecting section is fixed on the frame, and the engaging groove is arranged on a side of the limiting section facing the supporting groove.

20. The wheeled movable device of claim 15, wherein:
the wheeled movable device further includes a linkage mechanism pivotally connected between the front support frame and the rear support frame;
the linkage mechanism has an extended state and a retracted state, and when the linkage mechanism is switched between the extended state and the retraced state, the frame moves with movement of the linkage mechanism to switch between the unfolded state and the folded state; and
the linkage mechanism includes a rotating member and a linkage member pivotally connected to each other, one of a first end of the rotating member and a first end of the linkage member is pivotally connected to the front support frame, and the other of the first end of the rotating member and the first end of the linkage member is pivotally connected to the rear support frame.
